# EUROPEAN PATENT APPLICATION

(11) **EP 1 114 825 A1**
(43) Date of publication of application: **11.07.2001**
(21) Application number: 00946336.5
(22) Date of filing: 14.07.2000
(51) Int. Cl.: C07F 7/08, C09K 19/40, C09K 19/42

(54) **SILICON COMPOUNDS, LIQUID CRYSTAL COMPOSITIONS AND LIQUID CRYSTAL DISPLAYS**

(30) Priority: 15.07.1999 JP 20201199
(71) Applicant: CHISSO CORPORATION, Osaka-shi, Osaka-fu 530-0005 (JP)
(72) Inventor: SHIBATA, Koichi, Minamata-shi, Kumamoto 867-0046 (JP); KONDO, Tomoyuki, Ichihara-shi, Chiba 290-0003 (JP); MATSUI, Shuichi, Ichihara-shi, Chiba 290-0003 (JP); TAKEUCHI, Hiroyuki, Ichihara-shi, Chiba 290-0022 (JP); KUBO, Yasuhiro, Ichihara-shi, Chiba 290-0003 (JP); NAKAGAWA, Etsuo, Ichihara-shi, Chiba 290-0056 (JP)
(74) Representative: HOFFMANN - EITLE
(86) International application number: JP0004745
(87) International publication number: WO0105798

(57) **Abstract**

Provided are a silicon compound represented by Formula (1) : 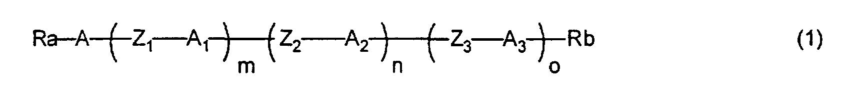 (wherein A, A₁, A₂ and A₃ each represent independently 1,4-cyclohexylene, 1,4-cyclohexenylene or 1,4-phenylene, in which at least one -CH₂- which is not adjacent in these rings may be substituted with -O- and at least one -CH= may be substituted with -N= and in which at least one hydrogen in these rings may be substituted with halogen; Z₁, Z₂ and Z₃ each represent independently a single bond, -(CH₂)₂-, -CH₂O-, -OCH₂-, -SiH₂CH₂- or -CH₂SiH₂-, and at least one of them is-SiH₂CH₂- or -CH₂SiH₂-; m, n and o each represent independently 0 or 1, and m + n + o≧1; and Ra and Rb each represent independently an alkyl group having 1 to 20 carbon atoms or hydrogen, and at least one -CH₂- in the above alkyl group each may be substituted independently with -O-, -CH=CH- or -C ≡C-, but -O- is not adjacent), a liquid crystal composition comprising this compound and a liquid crystal display using this liquid crystal composition.

Provided are a liquid crystalline silicon compound which is excellent in compatibility with other liquid crystal materials and which has low viscosity and is improved in a threshold voltage, a liquid crystal composition and a liquid crystal display using the above liquid crystal composition.

## Description

### Technical Field

The present invention relates to a novel silicon compound and a liquid crystal composition. More specifically, it relates to a novel silicon compound having a dihydrosilanediyl group (-SiH₂-), a liquid crystal composition comprising the same and a liquid crystal display comprising the above liquid crystal composition.

### Background Art

Display elements using liquid crystalline compounds (in the present invention, the term of the liquid crystalline compound is used as a general term of a compound showing a liquid crystal phase and a compound which does not show a liquid crystal phase but is useful as a structural component for a liquid crystal composition) are widely used for displays of watches, portable electric calculators, word processors and the like. These display elements make use of birefringence and dielectric anisotropy of a liquid crystalline compound.

A liquid crystal phase includes a nematic liquid crystal phase, a smectic liquid crystal phase and a cholesteric liquid crystal phase, and those using a nematic liquid crystal phase are most widely used. A display mode includes a dynamic scattering (DS) mode, a deformed aligning phase (DAP) mode, a guest/host (GH) mode, a twisted nematic (TN) mode, a supertwisted nematic (STN) mode, a thin film transistor (TFT) mode and an in-plane switching (IPS) mode.

The liquid crystalline compounds used in these display modes show a liquid crystal phase in a wide temperature range centering around a room temperature and are sufficiently stable under conditions on which the display elements are used. Further, they have to have characteristic which are satisfactory for driving the display elements, but a liquid crystalline compound satisfying this condition by itself has not yet been found at present.

Accordingly, the existing state is that several kinds to several ten kinds of liquid crystalline compounds are mixed to thereby prepare liquid crystal compositions having required characteristics. These liquid crystal compositions are required not only to be stable against moisture, light, heat and air which are usually present under conditions on which a display element is used and stable as well against an electric field and electromagnetic irradiation but also to be chemically stable against compounds to be mixed. Further, in the liquid crystal compositions, various physical property values such as birefringence (Δn) and dielectric anisotropy (Δε) are required to have suitable values depending on a display mode and a form of a display element. In addition, it is important that the respective components contained in the liquid crystal compositions have good solubility with each other.

Especially, a threshold voltage which contributes largely to power consumption and high speed response required to enlargement in a liquid crystal display picture plane (E. Jakeman et al., Phys. Lett., 39A. 69 (1972)) is desired to be further reduced, and the low viscosity is important as well for high speed response.

Various compounds have so far been developed in order to achieve these objects, and compounds having a silyl group in a molecule represented by the following formulas (a), (b) and (c) are disclosed respectively in Japanese Patent Application Laid-Open No. 9653/1994, Japanese Patent Application Laid-Open No. 2878/1995 and Japanese Patent Application laid-Open No. 2879/1995:

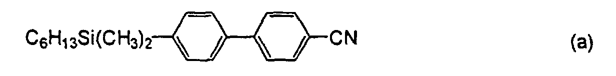

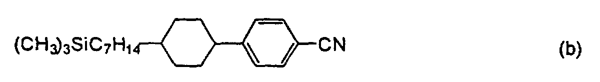

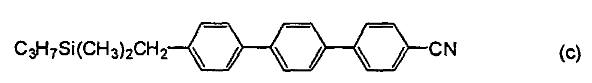

However, these compounds are compounds having a silyl group substituted with an alkyl group and are not compounds having a silicon-hydrogen bond.

As known from the results of the physical properties of a compound having a propyldimethylsilyl group represented by the following formula (d) which were measured by the present inventors, a compound having a trialkylsilyl group has the problem that it has not only markedly high viscosity but also unsatisfactory compatibility with other components constituting a liquid crystal composition: 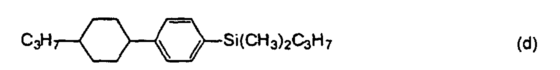 physical property measurement: a nematic phase-isotropic phase transition temperature (NI) and viscosity (*η*) at 20°C of a mother liquid crystal composition ZLI-1132 manufactured by Merck Co., Ltd. were determined to find that they were 72.6°C and 26.7 mPa·s respectively. Then, 15 % by weight of the compound represented by the formula (d) was added to 85 % by weight of this mother liquid crystal composition, and NI and *η* of the resulting mixture were determined to find that they were 15°C or lower and 39.7 mPa·s respectively.

It is found from this result that the compound represented by the formula (d) is not only notably increased in viscosity but also reduced in NI to 50°C or lower. Further, the compound (d) has an area in which NI is different and is inferior in compatibility, so that it was not practical.

In order to solve the defects of such multialkyl-substituted silyl compound, compounds having a dihydrosilylene group are proposed, and shown are a compound represented by a formula (e) in WO96/02103 and a compound represented by a formula (f) in Japanese Patent Application Laid-Open No. 286393/1986:

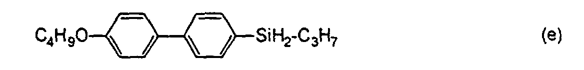

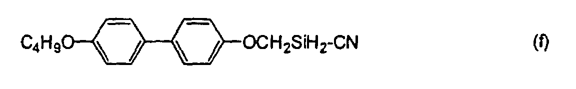

However, any of the data of the compounds shown in WO96/02103 and Japanese Patent Application Laid-Open No. 286393/1986 relates to those having a dihydrosilylene group on a terminal chain, and the physical property values of compounds in which a dihydrosilylene group is introduced into a molecule, particularly a part connecting a ring structure with a ring structure are not described in detail in the patents described above.

Further, particularly in recent years, expected are materials for an IPS mode and a VA mode that can improve visible angle characteristic at a low cost. Materials having negative dielectric anisotropy are suited to liquid crystal compositions prepared for these modes, and further suited are those which have a high voltage-holding ratio and a low threshold voltage and are low in temperature dependency and which have a wide liquid crystal phase temperature range and is excellent in compatibility with other liquid crystal materials and low in viscosity. Many liquid crystal materials having negative dielectric anisotropy have so far been developed, but those having a dihydrosilylene group in a part connecting a ring structure with a ring structure are not known at all.

### Disclosure of the Invention

An object of the present invention is to provide a novel dihydrosilicon compound which solves the preceding defects of conventional techniques and is excellent in compatibility with other liquid crystal materials and which has low viscosity and a low threshold voltage, a liquid crystal composition comprising the same and a liquid crystal display constituted using the above liquid crystal composition.

The silicon compound of the present invention is shown by the following items [1] to [10].
[1] A silicon compound represented by Formula (1): 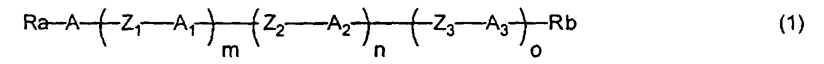 wherein A, A₁, A₂ and A₃ each represent independently 1,4-cyclohexylene, 1,4-cyclohexenylene or 1,4-phenylene, in which at least one -CH₂- which is not adjacent in these rings may be substituted with -O- and at least one -CH= may be substituted with -N= and in which at least one hydrogen in these rings may be substituted with halogen; Z₁, Z₂ and Z₃ each represent independently a single bond, -(CH₂)₂-, -CH₂O-, -OCH₂-, -SiH₂CH₂- or -CH₂SiH₂-, and at least one of them is-SiH₂CH₂- or -CH₂SiH₂-; m, n and o each represent independently 0 or 1, and m + n + o≧1. and Ra and Rb each represent independently an alkyl group having 1 to 20 carbon atoms or hydrogen, and at least one -CH₂- in the above alkyl group each may be substituted independently with -O-, -CH=CH- or -C ≡C-, but -O- is not adjacent.
[2] The silicon compound as described in the item [1], wherein m is 1, and both n and o are 0.
[3] The silicon compound as described in the item [1], wherein both m and n are 1, and o is 0.
[4] The silicon compound as described the item [1], wherein all of m, n and o are 1.
[5] The silicon compound as described in the item [1], wherein Ra and Rb each represent independently an alkyl group having 1 to 20 carbon atoms or an alkoxy group having 1 to 19 carbon atoms.
[6] The silicon compound as described in the item [1], wherein at least one of A, A₁, A₂ and A₃ is 1,4-phenylene substituted with 1 to 4 halogens.
[7] The silicon compound as described in the item [6], wherein the halogen described above is fluorine.
[8] The silicon compound as described in the item [6], wherein Ra and Rb each represent independently an alkyl group having 1 to 20 carbon atoms or an alkoxy group having 1 to 19 carbon atoms.
[9] A silicon compound represented by Formula (1-a): 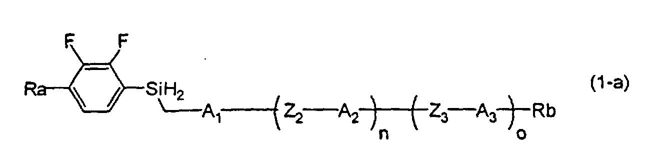 wherein Ra, Z₂, Z₃, A₁, A₂, A₃, n, o and Rb are the same as above.
[10] A silicon compound represented by Formula (1-b): 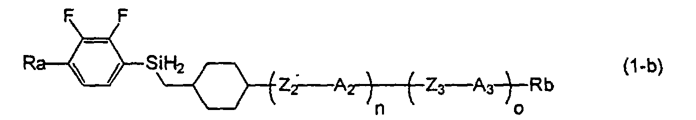 wherein Ra, Z₂, Z₃, A₂, A₃, n, o and Rb are the same as above.
   The liquid crystal composition of the present invention is shown by the following item [11], and the embodiment thereof is shown by the following items [12] to [19].
[11] A liquid crystal composition comprising at least one silicon compound as described in any of the items [1] to [10].
[12] The liquid crystal composition (a) as described in the item [11], comprising a component B comprising at least one compound selected from the group of compounds represented by Formulas (2), (3) and (4): 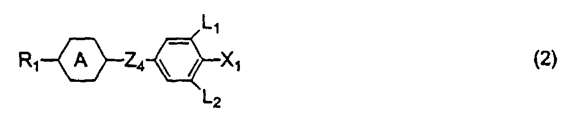 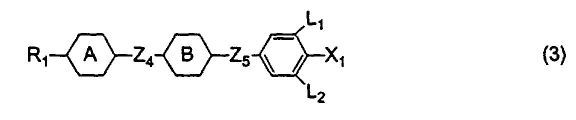 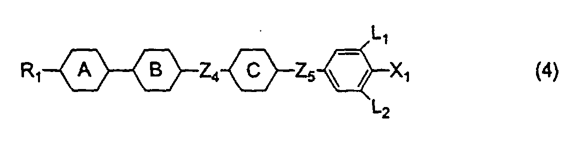 wherein R₁ represents an alkyl group having 1 to 10 carbon atoms, in which at least one -CH₂- in this group may be substituted with -O- or -CH=CH-, but -O- is not adjacent and in which at least one hydrogen in this group may be substituted with fluorine; X₁ represents fluorine, chlorine, -OCF₃, -OCF₂H, -CF₃, -CF₂H, -CFH₂, -OCF₂CF₂H or -OCF₂CFHCF₃; L₁ and L₂ each represent independently hydrogen or fluorine; Z₄ and Z₅ each represent independently - (CH₂)₂-, -(CH₂)₄-, -COO-, -CF₂O-, -OCF₂-, -CH=CH- or a single bond; a ring A and a ring B each represent independently 1,4-cyclohexylene, 1,3-dioxane-2,5-diyl, 1,4-phenylene or 1,4-phenylene substituted with 1 to 4 fluorines; and a ring C represents 1,4-cyclohexylene, 1,4-phenylene or 1,4-phenylene substituted with 1 to 4 fluorines.
[13] The liquid crystal composition (b) as described in the item [11], comprising a component C comprising at least one compound selected from the group of compounds represented by Formulas (5) and (6): 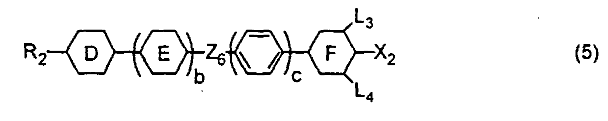 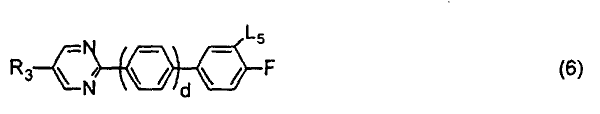 wherein R₂ and R₃ each represent independently an alkyl group having 1 to 10 carbon atoms, in which at least one -CH₂- in this group may be substituted with -O- or -CH=CH-, but -O- is not adjacent and in which at least one hydrogen in this group may be substituted with fluorine; X₂ represents -CN or -C ≡ C-CN; a ring D represents 1,4-cyclohexylene, 1,4-phenylene, 1,3-dioxane-2,5-diyl or pyrimidine-2,5-diyl; a ring E represents 1,4-cyclohexylene, pyrimidine-2,5-diyl, 1,4-phenylene or 1,4-phenylene substituted with 1 to 4 fluorines; a ring F represents 1,4-cyclohexylene or 1,4-phenylene; Z₆ represents -(CH₂)₂-, -COO-, -CF₂O-, -OCF₂- or a single bond; L₃, L₄ and L₅ each represent independently hydrogen or fluorine; and b, c and d each represent independently 0 or 1.
[14] The liquid crystal composition (c) as described in the item [11], comprising a component D comprising at least one compound selected from the group of compounds represented by Formulas (7), (8) and (9): 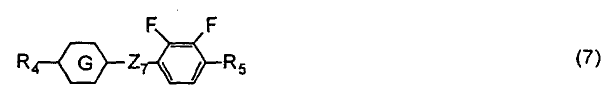 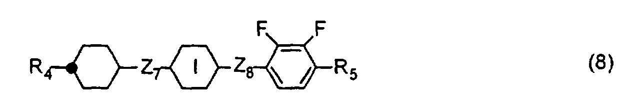 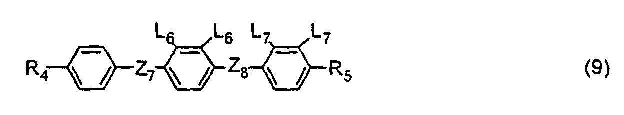 wherein R₄ and R₅ each represent independently an alkyl group having 1 to 10 carbon atoms, in which at least one -CH₂- in this group may be substituted with -O- or -CH=CH-, but -O- is not adjacent and in which at least one hydrogen in this group may be substituted with fluorine; a ring G and a ring I each represent independently 1,4-cyclohexylene or 1,4-phenylene; L₆ and L₇ each represent independently hydrogen or fluorine, but L₆ and L₇ are not hydrogens at the same time; and Z₇ and Z₈ each represent independently -(CH₂)₂-, -COO- or a single bond.
[15] The liquid crystal composition (al) as described in the item [12], comprising a component E comprising at least one compound selected from the group of compounds represented by Formulas (10), (11) and (12): 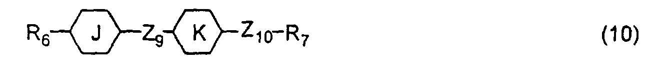 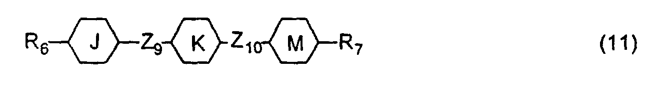 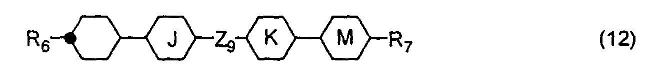 wherein R₆ and R₇ each represent independently an alkyl group having 1 to 10 carbon atoms, in which at least one -CH₂- in this group may be substituted with -O- or -CH=CH-, but -O- is not adjacent and in which at least one hydrogen in this group may be substituted with fluorine; rings J, K and M each represent independently 1,4-cyclohexylene, pyrimidine-2,5-diyl 1,4-phenylene or 1,4-phenylene substituted with 1 to 4 fluorines; and Z₉ and Z₁₀ each represent independently -C≡C-, -COO-, -(CH₂)₂-, -CH=CH- or a single bond.
[16] The liquid crystal composition (bl) as described in the item [13], comprising the component E comprising at least one compound selected from the group of the compounds represented by Formulas (10), (11) and (12).
[17] The liquid crystal composition (cl) as described in the item [14], comprising the component E comprising at least one compound selected from the group of the compounds represented by Formulas (10), (11) and (12).
[18] The liquid crystal composition (d) as described in the item [12], comprising the component C comprising at least one compound selected from the group of the compounds represented by Formulas (5) and (6) and the component E comprising at least one compound selected from the group of the compounds represented by Formulas (10), (11) and (12).
[19] The liquid crystal composition (e) as described in any of the items [11] to [18], comprising at least one optically active compound.
[20] A liquid crystal display using the liquid crystal composition as described in any of the items [11] to [19].

### Best Mode for Carrying Out the Invention

The silicon compound of the present invention is represented by Formula (1) described above. In the above formula, Ra and Rb each represent independently an alkyl group having 1 to 20 carbon atoms or hydrogen, and at least one -CH₂- in the above alkyl group each may be substituted independently with -O-, -CH=CH- or -C ≡ C-, but -O- is not adjacent.

To be specific, the alkyl group includes linear alkyl groups such as methyl, ethyl, propyl, butyl, pentyl, hexyl, heptyl, decyl, pentadecyl and icosyl, and branched alkyl groups such as isopropyl, sec-butyl, tert-butyl, isopentyl, isohexyl, 3-ethyloctyl, 3,8-dimethyltetradecyl and 5-ethyl-5-methylnonadecyl.

Further, specific examples of a group obtained by substituting at least one -CH₂- in the above alkyl group with -O- include alkoxy groups such as methoxy, ethoxy, propoxy, butoxy, pentoxy, hexoy, heptoxy, octyloxy and nonyloxy; alkoxyalkyl groups such as methoxymethyl, methoxyethyl, methoxypropyl, methoxybutyl, methoxypentyl, methoxyoctyl, ethoxymethyl, ethoxyethyl, ethoxypropyl, ethoxyhexyl, propoxymethyl, propoxyethyl, propoxypropyl, propoxypentyl, butoxymethyl, butoxyethyl, butoxybutyl, pentyloxymethyl, pentyloxybutyl, hexyloxymethyl, hexyloxyethyl, hexyloxypropyl, heptyloxymethyl and octyloxymethyl; alkoxyalkoxy groups such as methoxymethoxy, methoxyethoxy, ethoxymethoxy, ethoxyethoxy, methoxypropoxy and methoxybutoxy; branched alkoxy groups such as 2-methylpropoxy and 2-methylpentoxy; and branched alkoxyalkyl groups such as 1-methylheptoxymethyl.

The branched alkyl group and alkoxy group described above may be those showing optical activity.

Specific examples of a group obtained by substituting at least one -CH₂- in the above alkyl group with -CH=CH-include alkenyl groups such as vinyl, propenyl, butenyl, pentenyl, hexenyl and decenyl, and alkadienyl groups such as butadienyl, hexadienyl and octadienyl.

Specific examples of a group obtained by substituting at least one -CH₂- in the above alkyl group with -C ≡ C-include alkynyl groups such as ethynyl, propynyl, pentynyl and heptynyl.

Further, a group obtained by substituting at least one -CH₂- with -CH=CH- and -O- includes alkoxyalkenyl groups such as methoxypropenyl, ethoxypropenyl, pentyloxypropenyl, methoxybutenyl, ethoxybutenyl, pentyloxybutenyl, methoxypentenyl, propoxypentenyl, methoxyhexenyl, propoxyhexenyl, methoxyheptenyl and methoxyoctenyl; alkenyloxy groups such as propenyloxy, butenyloxy, pentenyloxy and octenyloxy; and alkenyloxyalkyl groups such as propenyloxymethyl.

The compound (1) of the present invention which is constituted by the respective groups selected from those represented by Ra, Rb, A, A₁, A₂, A₃, Z₁, Z₂ and Z₃ each described above has preferred characteristics, and the compound which does not comprise two or more rings containing a hetero atom is more preferred.

A, A₁, A₂ and A₃ each represent independently 1,4-cyclohexylene, 1,4-cyclohexenylene or 1,4-phenylene. At least one -CH₂- which is not adjacent in these rings may be substituted with -O-, and at least one -CH= may be substituted with -N=. Further, at least one hydrogen in the rings may be substituted with halogen.

Preferred are the rings which do not contain two or more heterocycles containing hetero atoms of -O- and -N=.

Z₁, Z₂ and Z₃ each represent independently a single bond, 1,2-ethylene, methyleneoxy, oxymethylen, -SiH₂CH₂- or-CH₂SiH₂-, and at least one of them is -SiH₂CH₂- or -CH₂SiH₂-; and m, n and o each represent independently 0 or 1.

Among these compounds, the compounds having particularly preferred characteristics are compounds shown in the following (1-1) to (1-96):
(1-1) to (1-96) 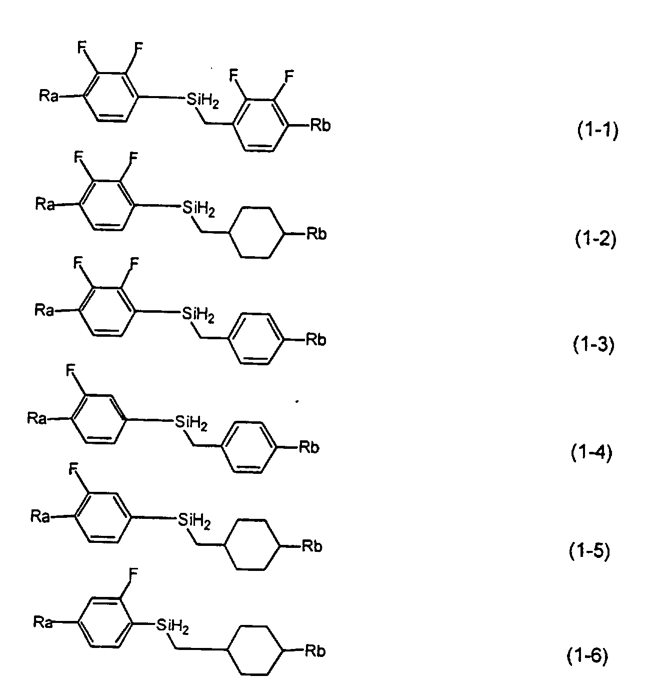 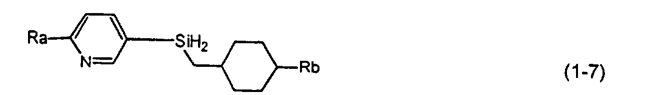 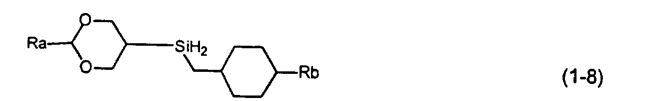 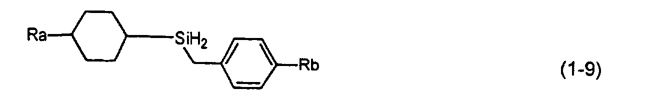 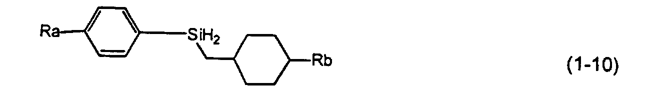 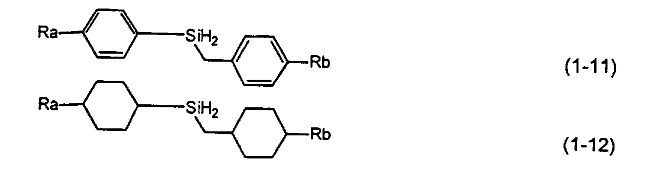 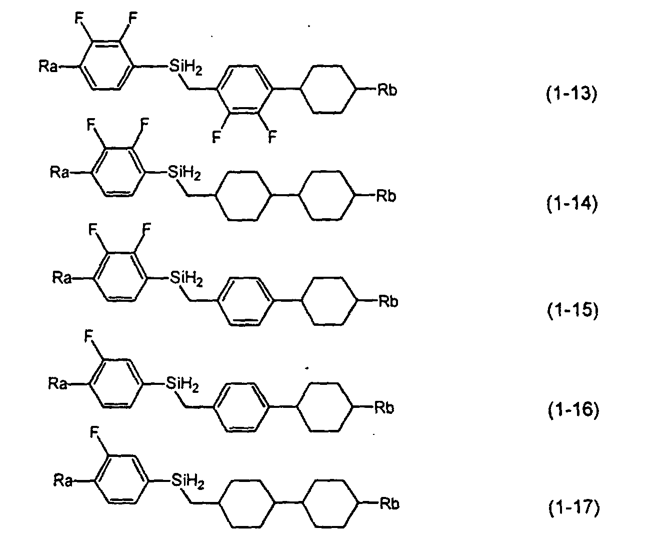 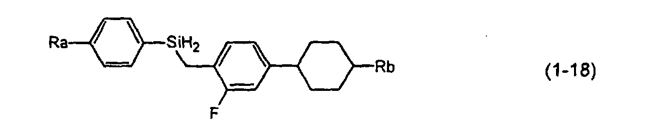 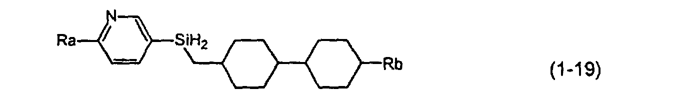 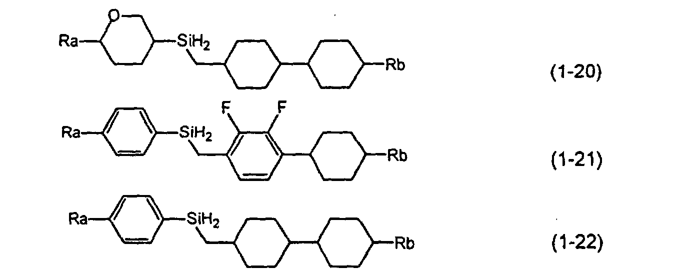 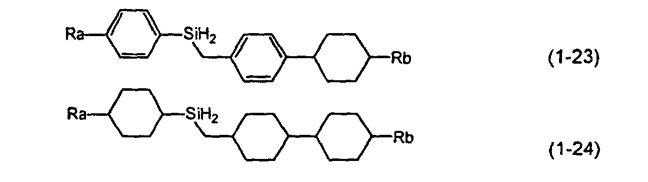 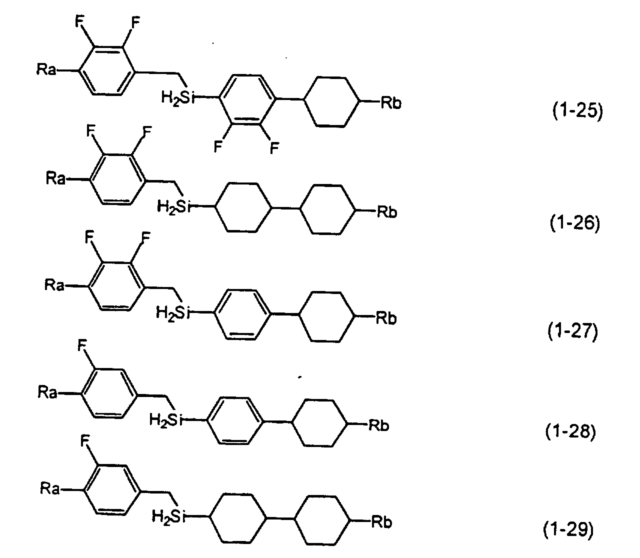 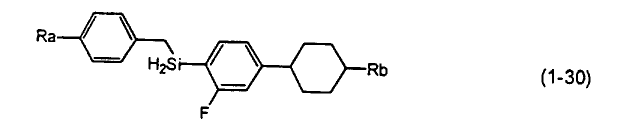 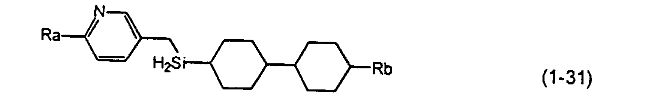 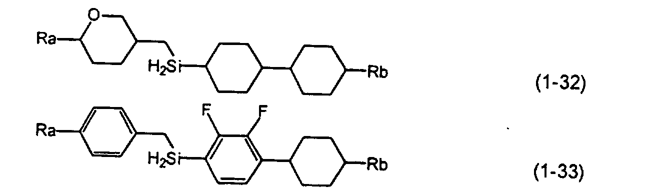 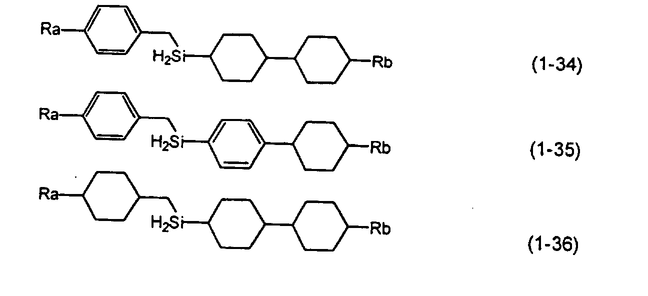 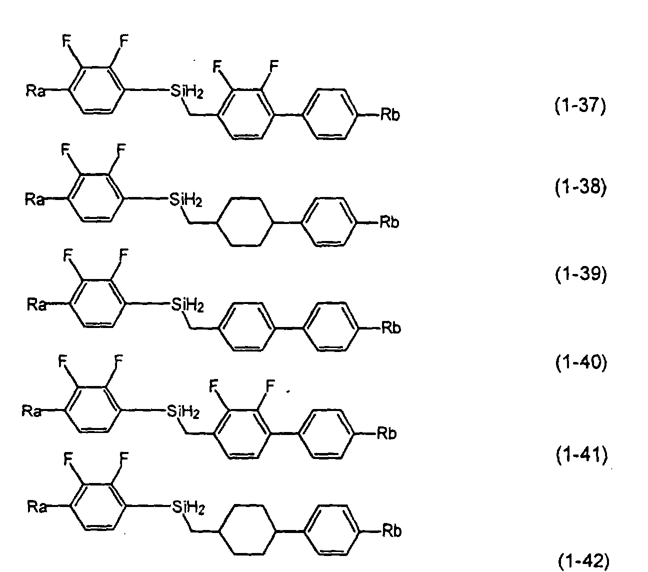 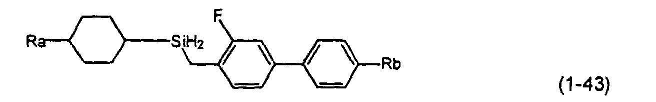 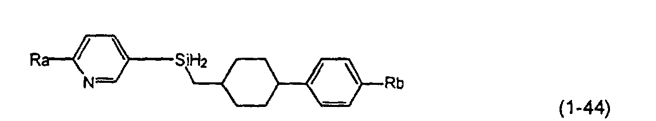 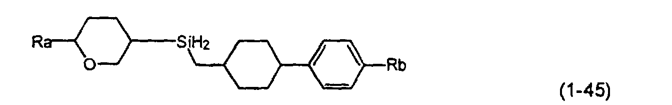 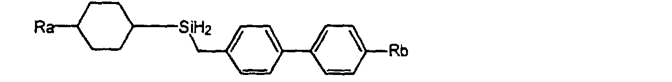 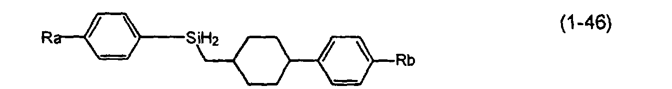 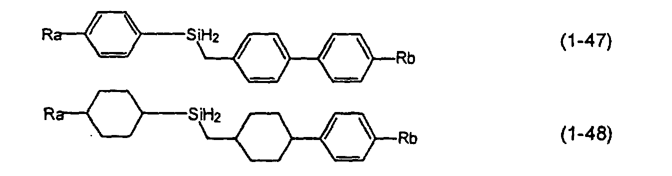 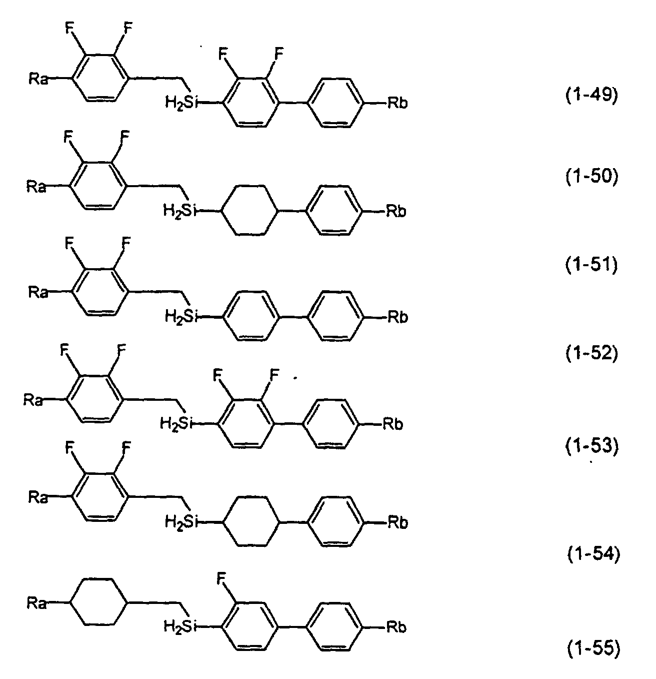 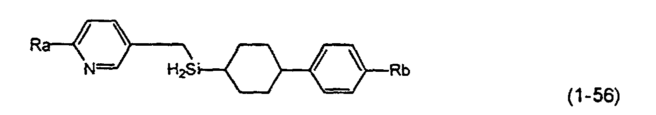 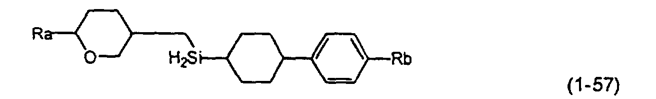 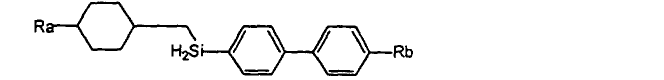 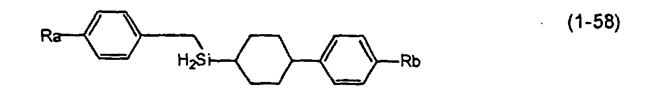 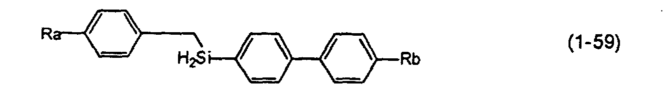 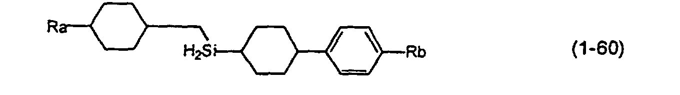 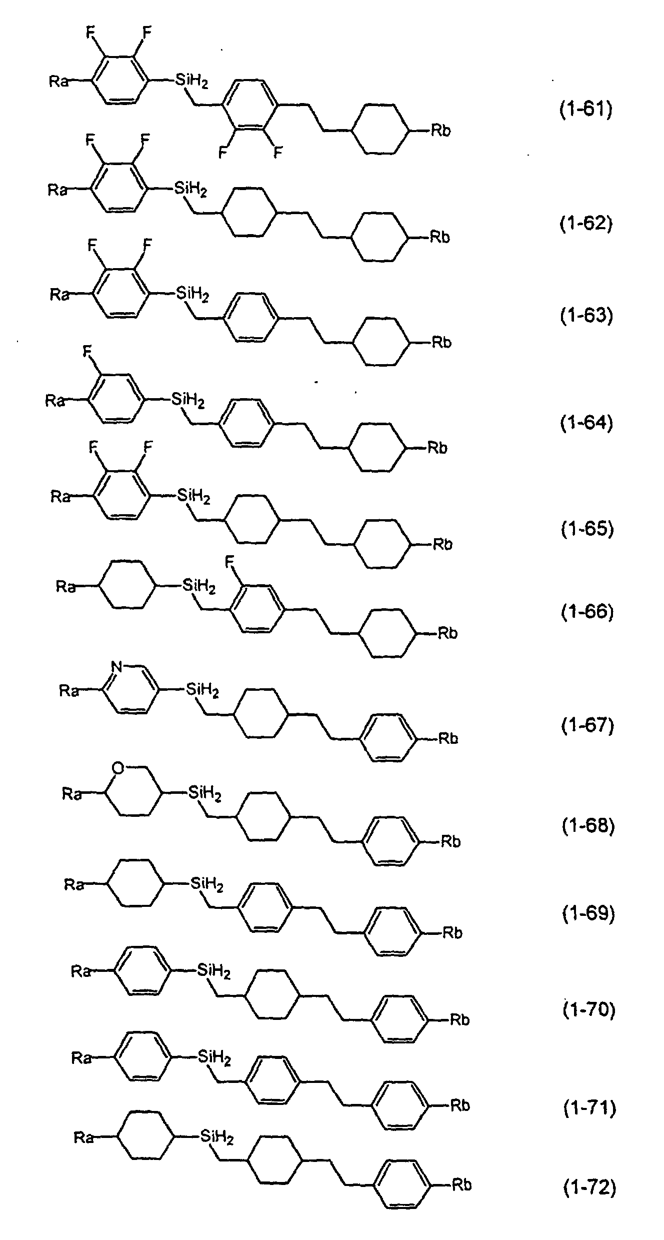 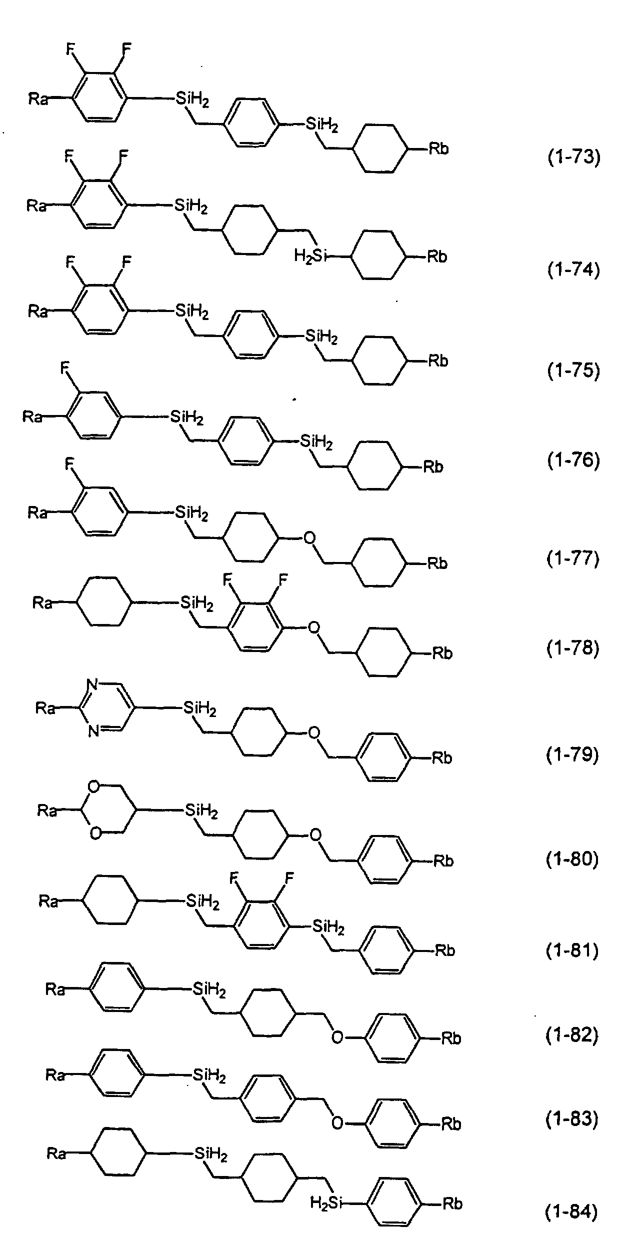 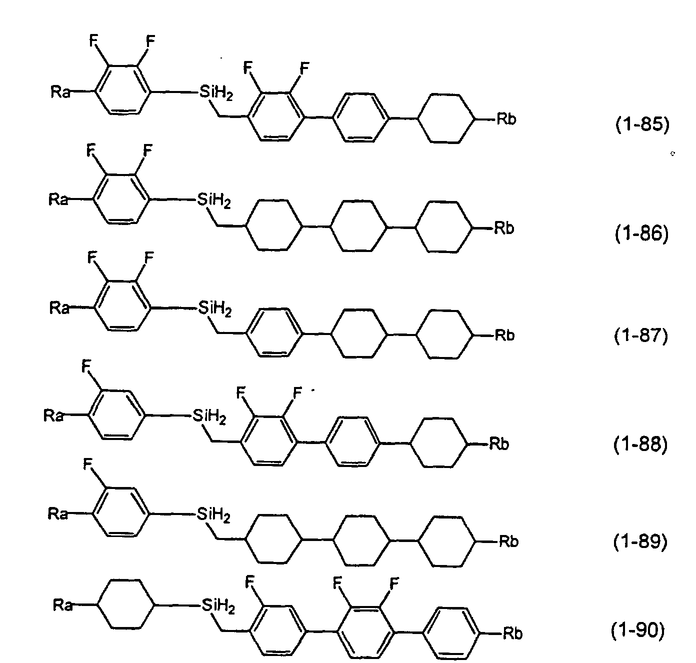 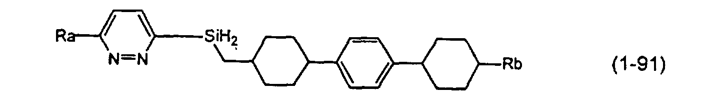 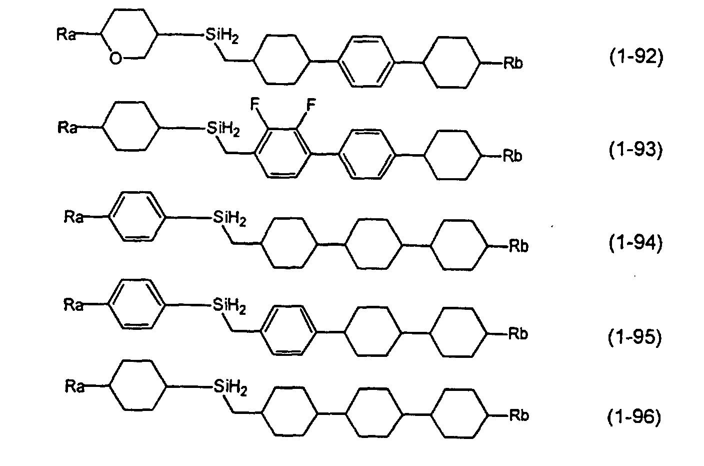 (in the respective formulas, Ra and Rb are the same as with those described above).

The compound of the present invention represented by Formula (1) is obtained by introducing the prescribed groups into Ra, Rb, Z₁, Z₂ and Z₃ in the above formula, and the groups can be introduced by publicly known and conventional organic synthetic methods.

A silanediyl group can be introduced by publicly known and conventional organic synthetic methods described in Silicon in Organic Synthesis, Butterworths, London (1981); W. P. Werber, Silicon Reagents for Organic Synthesis, Springer-Verlag, Berlin (1983); and E. W. Colvin, Silicon Reagents in Organic Synthesis, Academic Press, London (1981).

Several production examples of the silicon compound of the present invention shall be shown below.

When Z₁ is -SiH₂CH₂-,

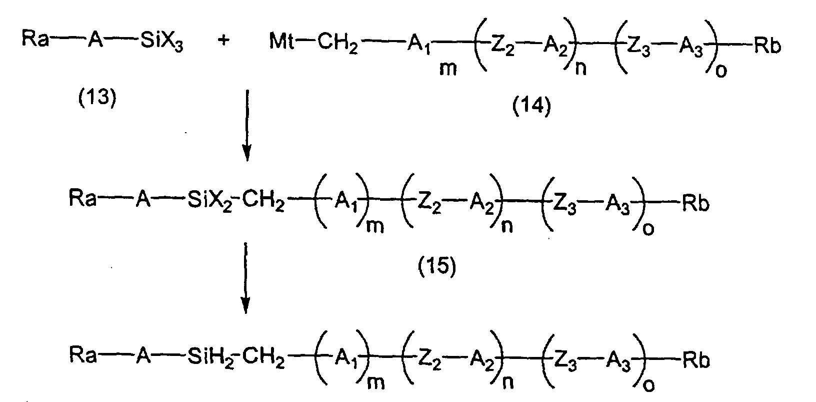

(1): Z₁=-SiH₂CH₂-

When Z₁ is - CH₂SiH₂-,

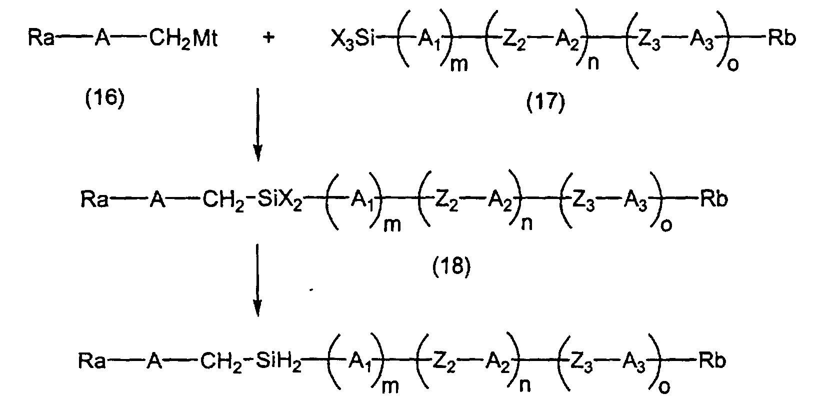

(1): Z₁=-CH₂SiH₂-

When Z₂ is -SiH₂CH₂-,

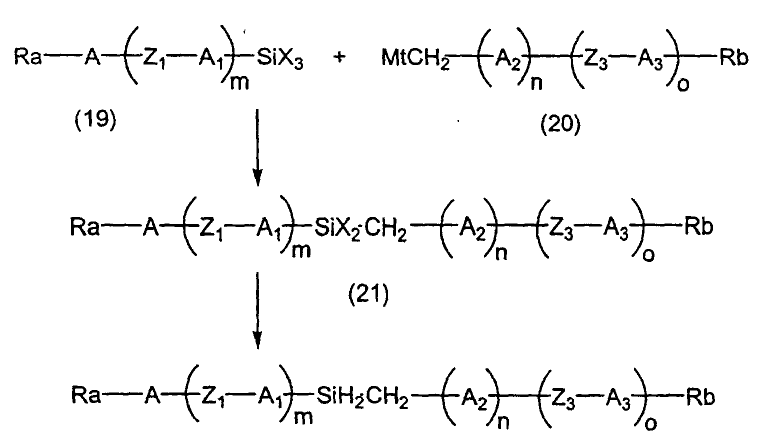

(1): Z₂=-SiH₂CH₂-

When Z₂ is - CH₂SiH₂-,

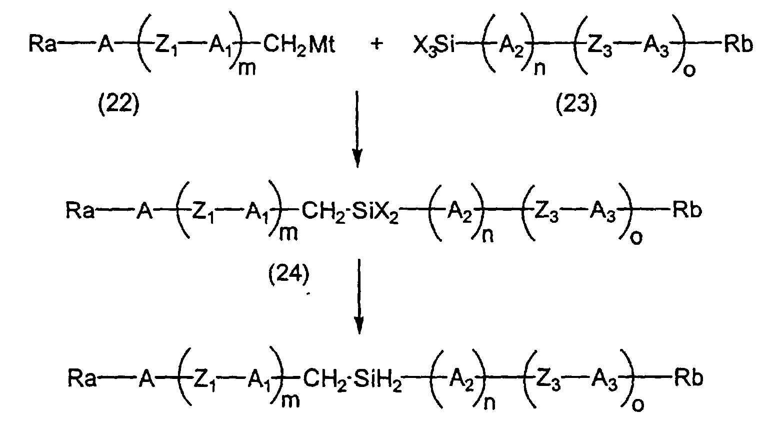

(1): Z₂=-CH₂SiH₂-

When Z₃ is -SiH₂CH₂-,

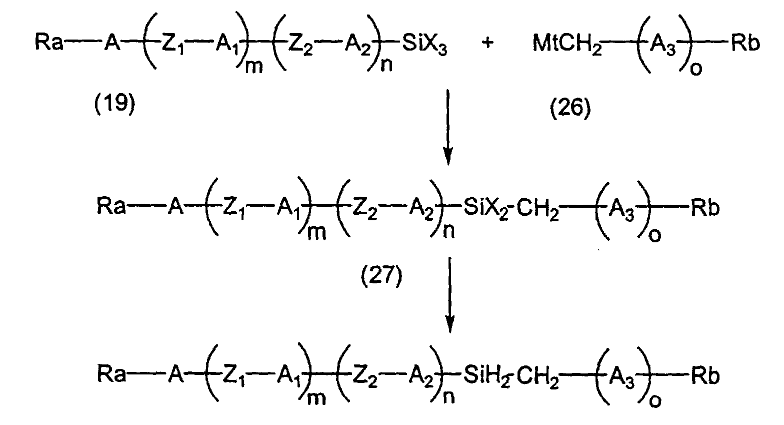

(1): Z₃=-SiH₂CH₂-

When Z₃ is - CH₂SiH₂-,

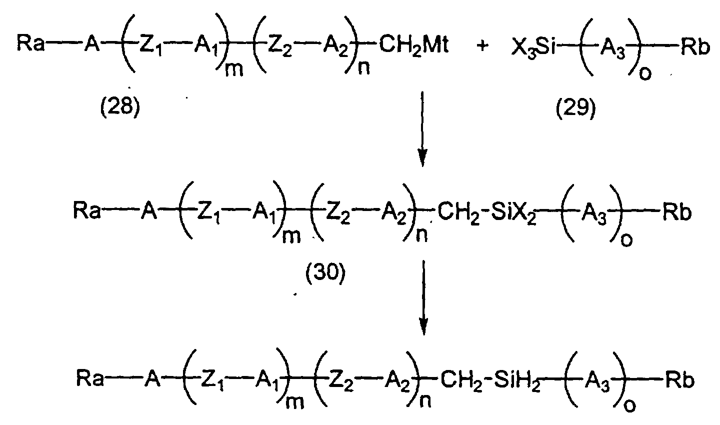

(1): Z₃=-CH₂SiH₂-

In these formulas, Ra, Rb, m, n, o, A, A₁ to A₃ and Z₁ to Z₃ are the same as above; X is halogen or alkoxy; and Mt is lithium, potassium, cadmium, zinc, -MgX' or -ZnX', provided that X' is halogen.

That is, as shown in the production examples described above, derivatives (hereinafter referred to as trifunctional silicon compounds) of trihalogenosilane or trialkoxysilane represented by the formulas (13), (17), (19), (23), (25) and (29) are coupled respectively with organic metal compounds represented by the formulas (14), (16), (20), (22), (26) and (28) to thereby obtain derivatives (hereinafter referred to as difunctional silicon compounds) of dihalogenosilane or dialkoxysilane represented by the formulas (15), (18), (21), (24), (27) and (30). The silicon compound of the present invention can be obtained by reduction of this derivative with a reducing agent.

The organic metal compounds represented by the formulas (14), (16), (20), (22), (26) and (28) used in the production examples for the silicon compound of the present invention described above include Grignard reagents in which Mt is represented by MgBr., MgCl or MgI, organic lithium compounds in which Mt is represented by Li, organic tin compounds, organic potassium reagents and organic cadmium reagents, and they can readily accelerate the reaction and therefore are preferably used. In particular, use of a Grignard reagent in which Ra is propyl and A is 1,4-cyclohexylene and in which Mt is 4-propylcyclohexylmethylmagnesium chloride of MgCl or an organic lithium compound of the formula (16) such as 4-ethylcyclohexylmethyllithium in which Ra is ethyl and A is 1,4-cyclohexylene and in which Mt is Li reduces side reaction and elevates the yields of the intended products.

Further, the difunctional silicon compounds represented by the formulas (15), (18), (21), (24), (27) and (30) which are the intermediates can be introduced to the silicon compounds of the present invention by reducing them with a suitable reducing agent such as lithium aluminum hydride, diisobutylaluminum hydride, sodium boron hydride, sodium cyanoboron hydride and boron complexes (BH₃·THF and the like). In this case, when the substituent reduced with a reducing agent is contained in a group other than a -SiX₂- group, only the -SiX₂- group is reduced by adding a suitable additive or adjusting the reaction conditions, whereby the silicon compound of the present invention can be obtained at a good yield.

Among the organic metal compounds represented by the formulas (14), (16), (20), (22), (26) and (28), the Grignard reagents are synthesized by adding corresponding substituted methyl halides directly to metal magnesium in an aprotic polar solvent such as ether and tetrahydrofuran (THF) under nitrogen or argon gas flow. To be specific, known are methods described in Fourth Edition Shinjikken kagaku koza 24, p. 39 to 41 (Maruzen) and H. E. Ramsden, A. E. Balint, W. R. Whitford, J. J. Walburn and R. Cserr, J. Org. Chem., 22, 1202 (1957).

Among the organic metal compounds represented by the formulas (14) , (16) , (20) , (22) , (26) and (28) , the organic lithium compounds and the organic potassium compounds can be synthesized by reacting halides directly with metal magnesium in a solvent such as ether and tetrahydrofuran (THF) under nitrogen or argon gas flow. Further, they can be prepared from Grignard reagents and tin compounds which are easier to be prepared by transmetallation according to a method described in Fourth Edition Shinjikken kagaku koza 24, p. 24 to 26 (Maruzen), D. Seyferth, R. Suzuki, C. J. Murphy and C. R. Sabet, J. Organomet. Chem., 2, 431 (1964) or N. R. Sheverdina and K. A. Kocheshkov, "Methods of Element-Organic Chemistry", Vol. 3, North Holland (1967), P1.

The trifunctional silicon compound represented by the formula (13), (17), (19), (23), (25) or (29) can be synthesized by organic metal reagent represented by the following formula (31), (32), (33), (34), (35) or (36) with tetrasubstituted silane (SiX₄), for example, a compound such as tetralkoxysilane and tetrahalosilane:

Ra―A―Mt (31)

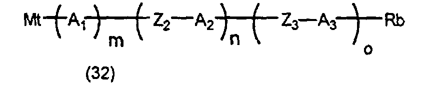

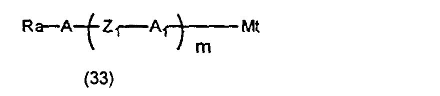

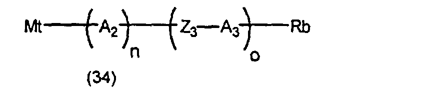

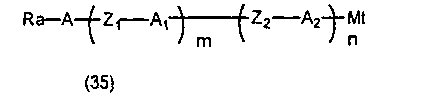

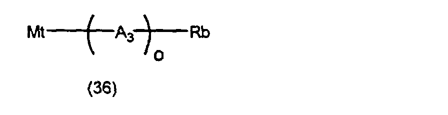

wherein Ra, Rb, m, n, o, A, A₁ to A₃, Z₁ to Z₃ and Mt are the same as above. This tetralkoxysilane may be, for example, dimethoxydiethoxysilane having a different chain length of alkoxy. Trimethoxysilane, trichlorosilane and diethoxymethoxysilane are shown as the trifunctional silicon compound which is preferred from a viewpoint of easiness in advancement of the reaction.

In the six production examples described above, a dihydrosilylene bond is formed in a final stage, but it is possible to synthesize them in advance from dihydrosilylene compounds depending on the silicon compounds of the present invention. For example, the compound in which Ra in Formula (1) is an alkenyl group can be derived from reacting a compound represented by a formula (37) with alkylidenetriphenylphosphorane prepared from alkyltriphenyl-phosphonium bromide, a reactant comprising zinc, titanium tetrachloride and dihalogenoalkane or a reactant comprising diiodoalkane and chromium chloride: 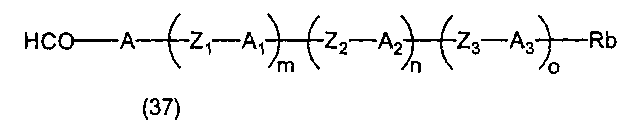 wherein Rb, m, n, o, A, A₁ to A₃ and Z₁ to Z₃ are the same as above. To be specific, the compound in which Ra in Formula (1) is CH₂=CH- can be derived by reacting the compound represented by the formula (37) with methylidenetriphenylphosphorane prepared from methyltriphenylphosphonium bromide and potassium butoxide. Further, the compound in which Ra in Formula (1) is CH₃-CH=CH- can be derived from reacting the compound represented by the formula (37) with a reactant prepared from diioidoethane and chromium chloride in DMF.

The silicon compound of the present invention thus obtained is excellent in compatibility with other liquid crystal materials and has low viscosity and a wide liquid crystal temperature range as compared with those of publicly known compounds with the same structure having a trialkylsilyl group. In addition, it has a low threshold voltage and shows relatively low viscosity as compared with those of the compounds with the same structure containing no silanediyl group. Further, the silicon compound of the present invention is physically and chemically sufficiently stable under conditions on which a liquid crystal display is usually used and is very excellent as a constitutional component for a nematic liquid crystal composition, so that it can suitably be used as a constitutional component for a liquid crystal composition for a TN mode, an STN mode and a TFT mode.

The silicon compound of the present invention having 2 or 3 rings shows low viscosity, and the compound having 3 or 4 rings shows a high isotropic phase transition temperature. The compound having 2 or more cyclohexane rings shows a high isotropic phase transition temperature, small Δn and low viscosity. Also, the compound having a dioxane ring or a pyrimidine ring shows relatively large Δ ε. The compound having at least one benzene ring shows a relatively large value of △n and a high liquid crystal alignment parameter, so that it is excellent. In particular, the compound having two or more benzene rings has a particularly large Δn, a wide liquid crystal temperature range and a high stability, so that it is useful.

In the silicon compounds of the present invention, the compound having fluorine in a molecular short axis direction shows large negative Δε, a high isotropic phase transition temperature and relatively low viscosity. Among the compounds having fluorine in a molecular short axis direction, the compounds having fluorine on a benzene ring are excellent in stability and show large negative Δ ε, and the compound having two or more fluorines show particularly large negative Δε.

In the silicon compounds of the present invention, the compound in which Ra and/or Rb are alkyl, alkoxy, alkoxyalkyl and alkenyloxy groups has a wide liquid crystal temperature range and low viscosity. In particular, the compound in which Rb is alkoxy shows large negative △ ε and has particularly a wide liquid crystal temperature range, low viscosity and a high voltage-holding ratio.

In the silicon compounds of the present invention, the compound having a double bond in Z₁, Z₂ and/or Z₃ has a wide liquid crystal temperature range and shows a large elastic constant ratio, so that it is suited as a compound for a STN mode. The compound having a triple bond shows large Δn.

It can be found from the matters described above that suitable selection of the rings, the side chains and/or the bonding groups makes it possible to obtain a novel liquid crystalline compound having desired physical properties.

The liquid crystal composition of the present invention has to contain the preceding silicon compound of the present invention represented by Formula (1) as the component A. The mixture containing only this component A or the mixture containing the component A and other components which are not specifically identified in the present specification can be used as well, but the liquid crystal compositions (a), (b), (c), (d) and (e) of the present invention can be provided by adding a component selected from the components B, C, D and E shown below to this component A.

Preferred as the component added to the component A is a mixture obtained by mixing the component B comprising at least one compound selected from the group consisting of the compounds represented by Formulas (2), (3) and (4) described above and/or the component C comprising at least one compound selected from the group consisting of the compounds represented by Formulas (5) and (6) described above [the liquid crystal compositions (a), (b) and (c) described above]. Further, mixing of the component E comprising at least one compound selected from the group consisting of the compounds represented by Formulas (10), (11) and (12) makes it possible to control the threshold voltage, the liquid crystal phase temperature range, the birefringence, the dielectric anisotropy and the viscosity [the liquid crystal compositions (a1), (b1), (c1) and (d) described above].

Even if the respective components of the liquid crystal composition used in the present invention are analogues comprising isotopic elements of the respective elements, a large difference is not present between the physical characteristics thereof.

In the component B described above, capable of being given respectively are the compounds of the formulas (2-1) to (2-9) as suitable examples of the compound represented by Formula (2), the compounds of the formulas (3-1) to (3-97) as suitable examples of the compound represented by Formula (3) and the compounds of the formulas (4-1) to (4-33) as suitable examples of the compound represented by Formula (4). 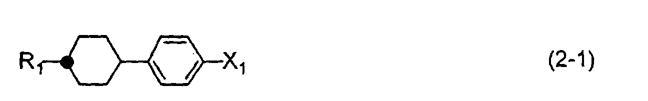 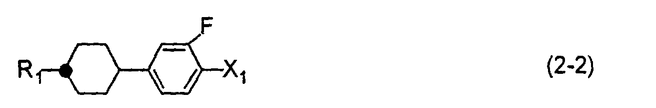 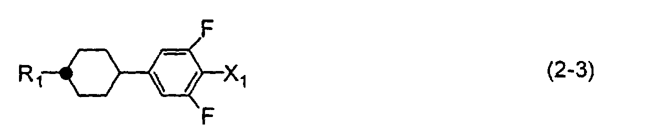 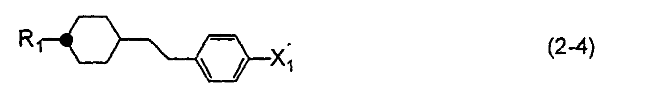 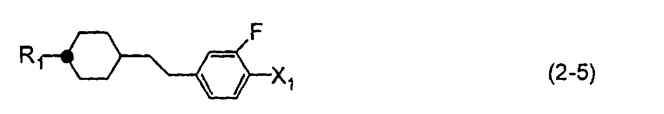 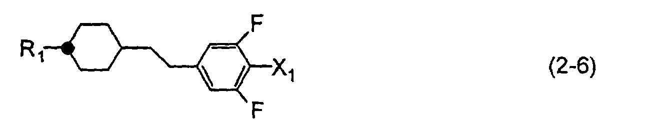 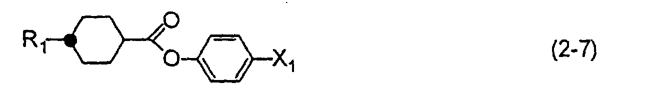 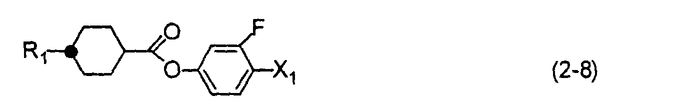 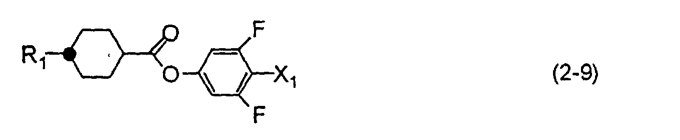 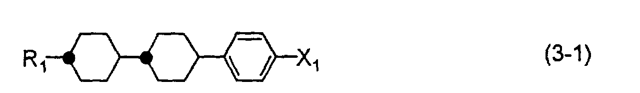 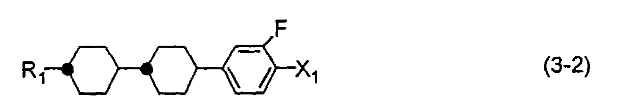 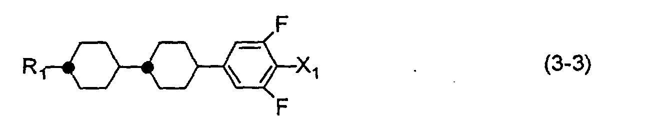 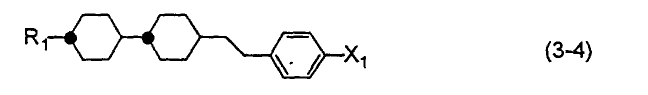 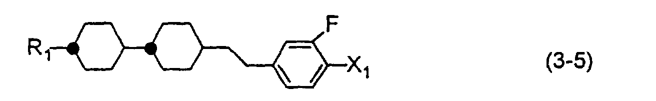 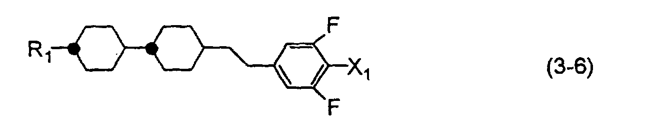 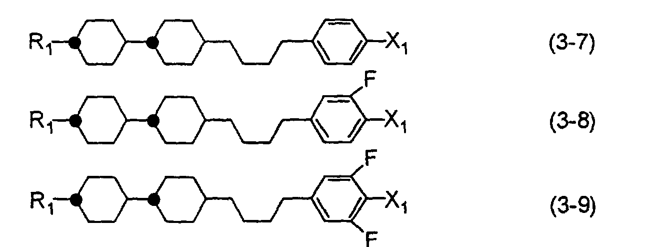 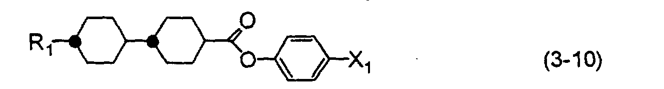 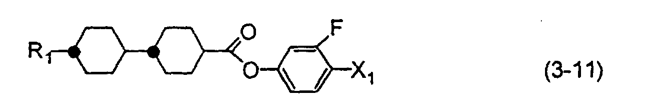 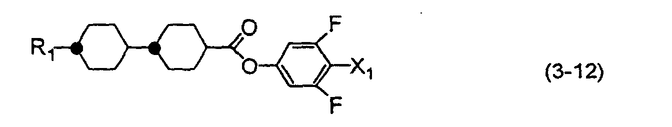 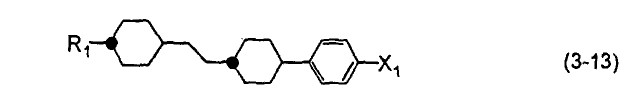 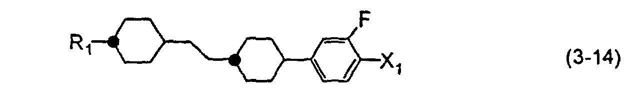 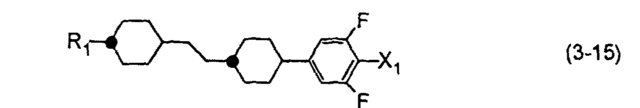 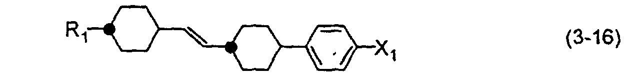 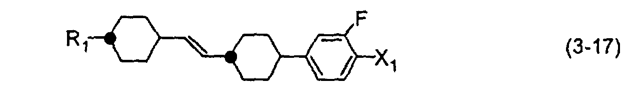 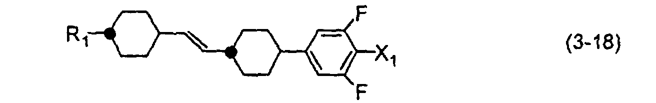 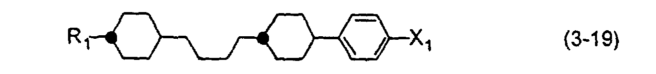 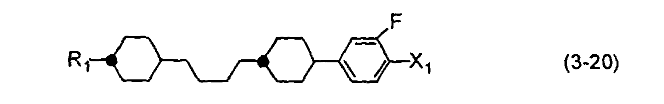 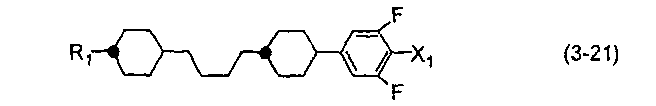 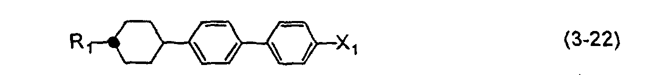 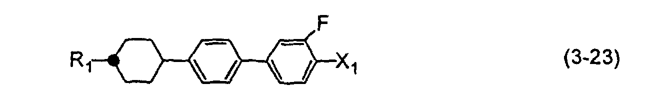 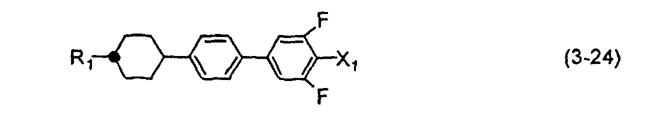 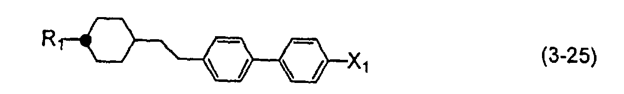 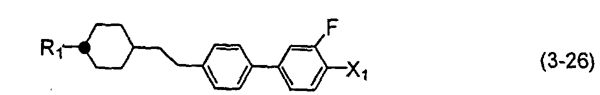 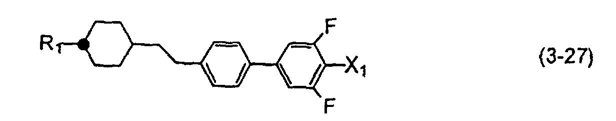 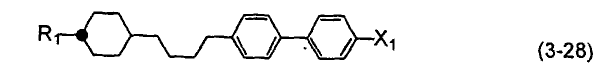 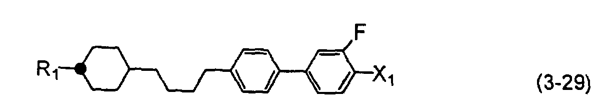 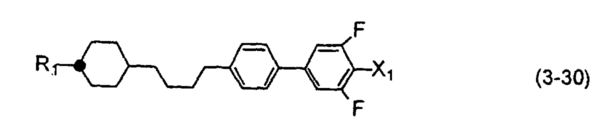 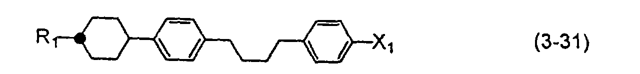 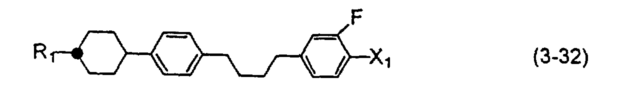 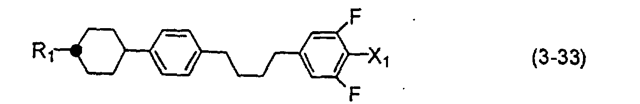 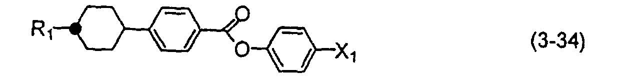 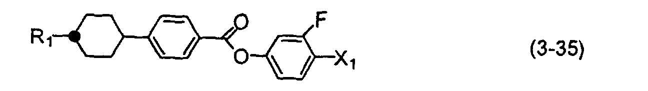 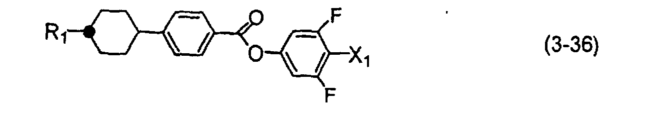 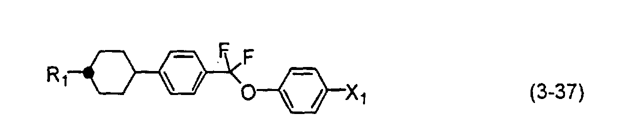 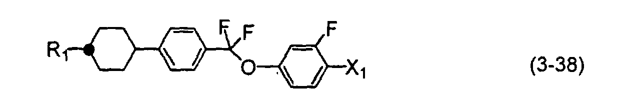 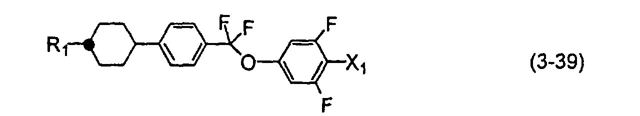 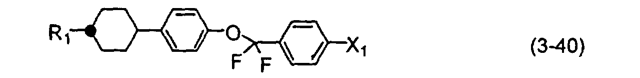 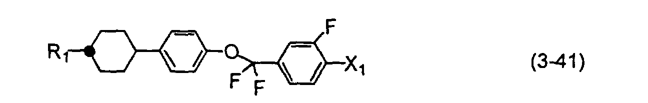 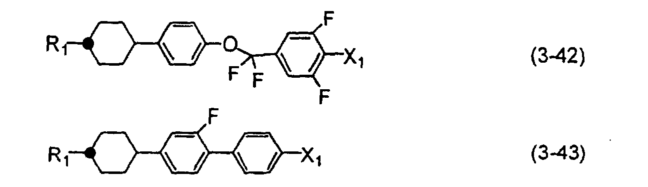 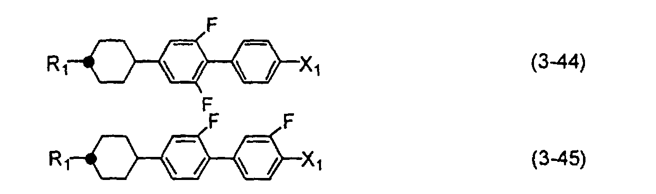 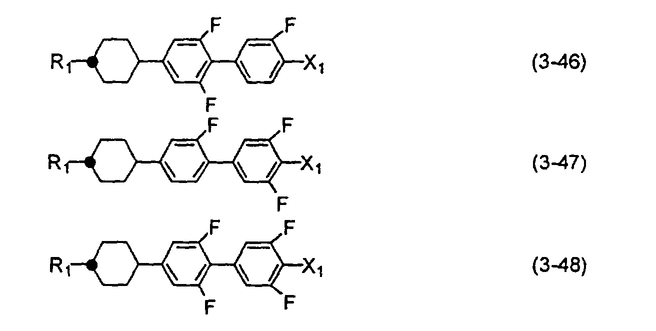 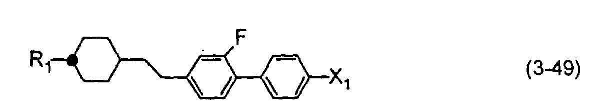 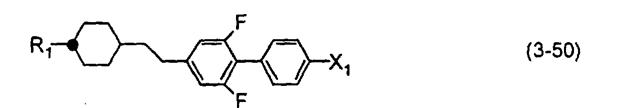 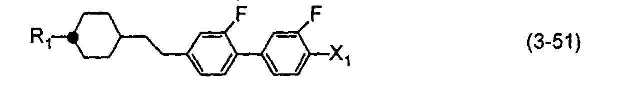 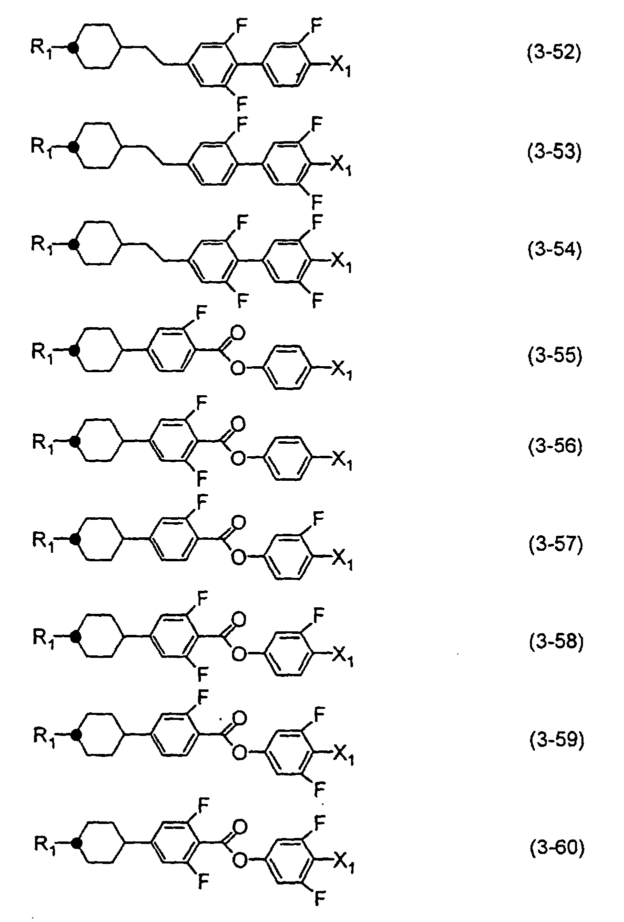 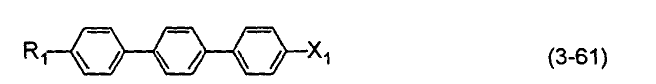 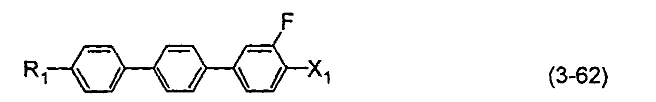 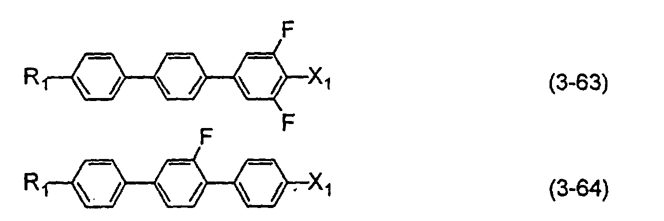 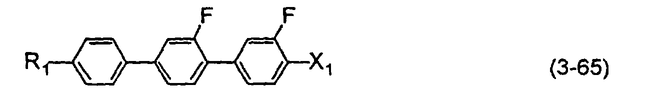 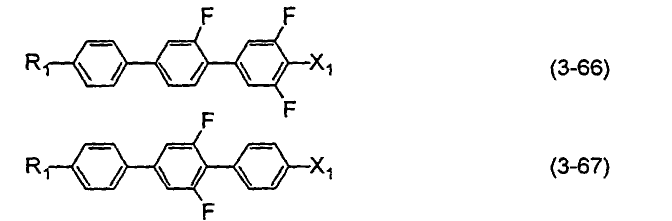 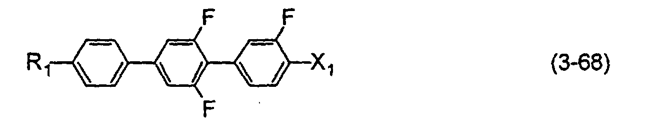 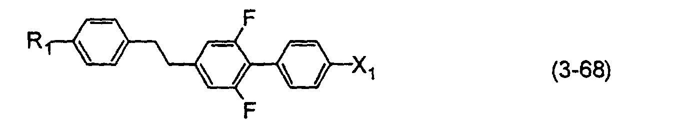 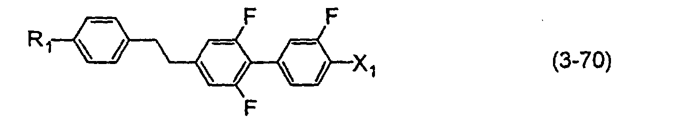 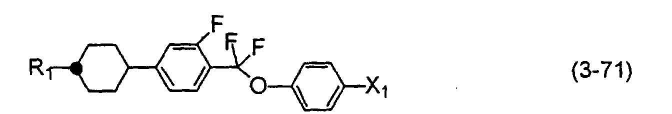 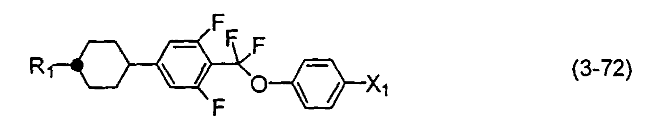 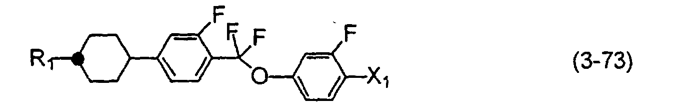 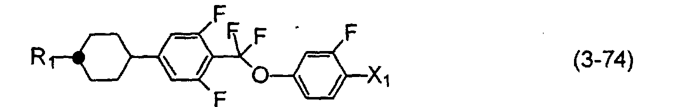 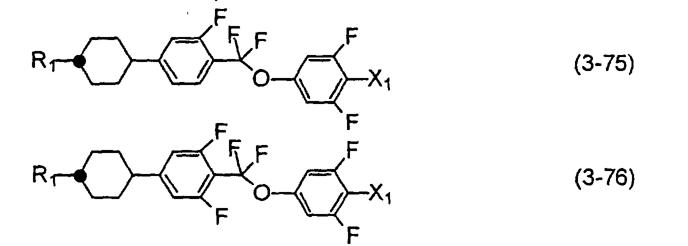 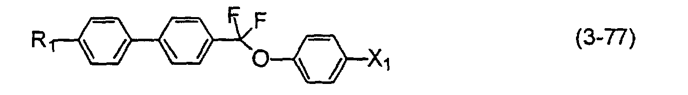 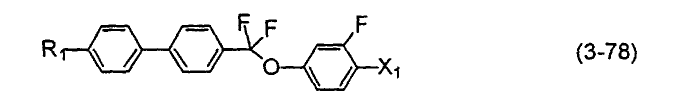 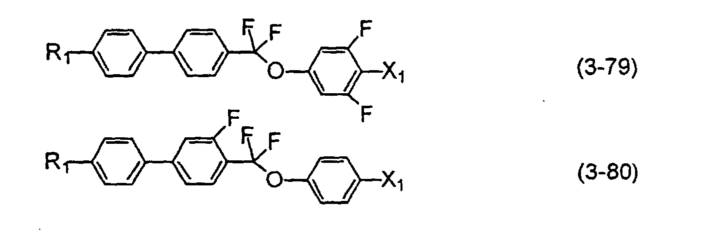 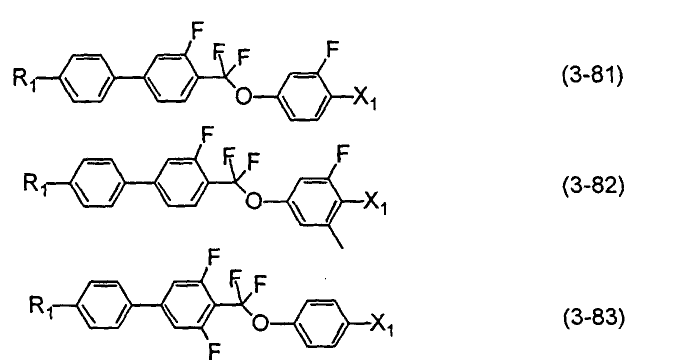 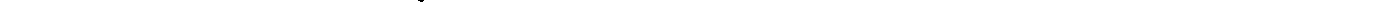 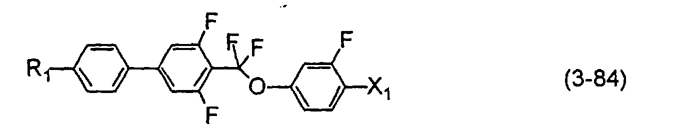 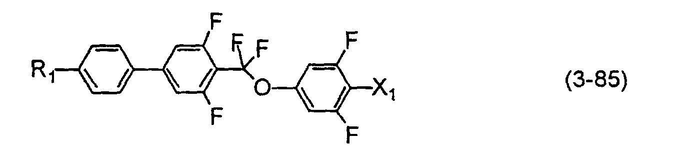 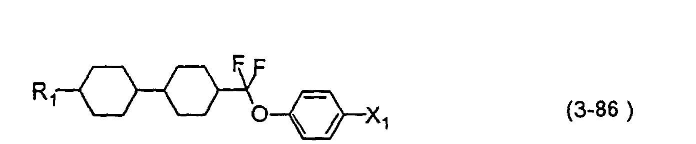 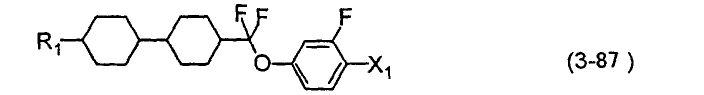 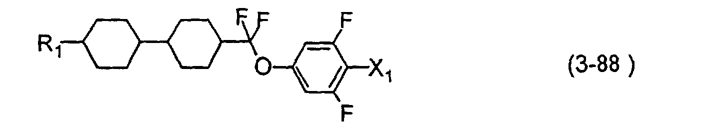 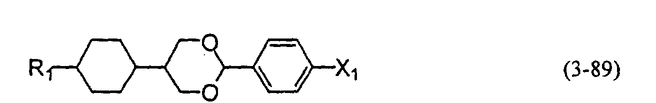 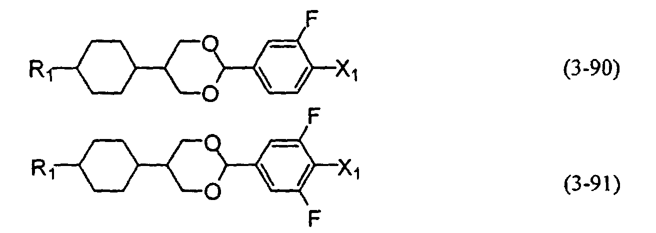 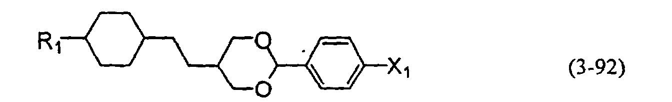 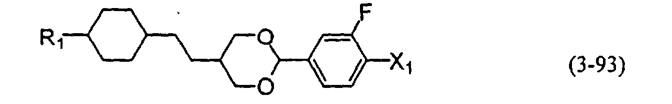 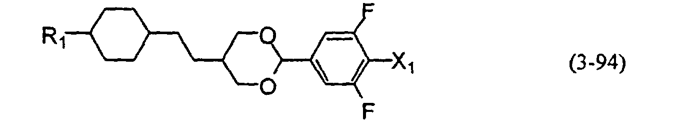 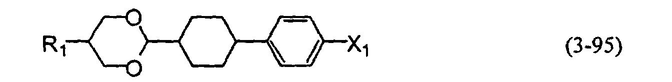 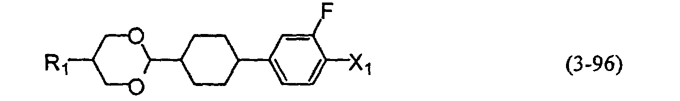 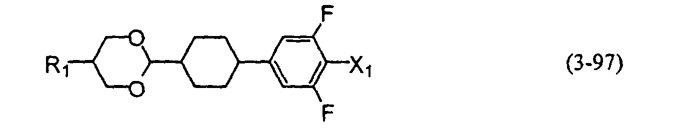 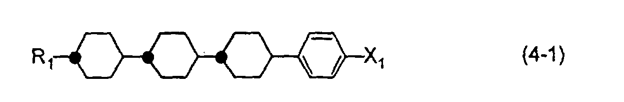 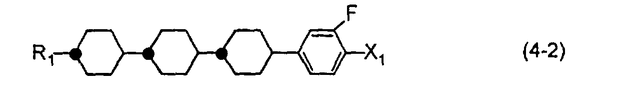 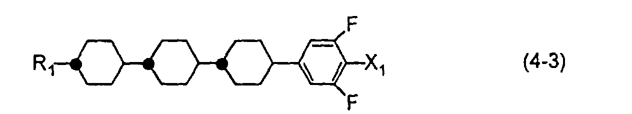 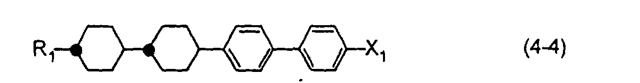 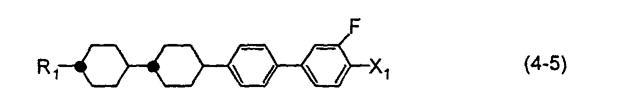 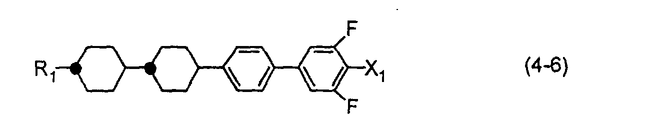 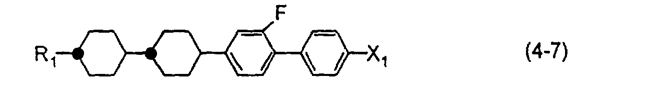 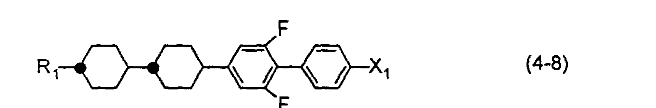 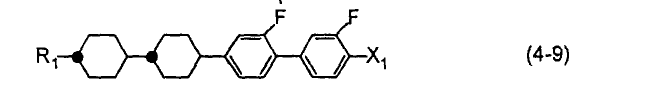 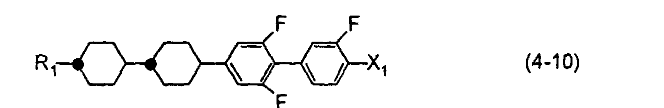 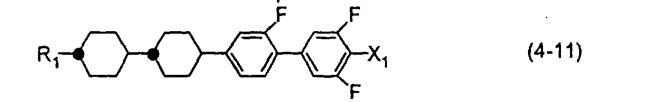 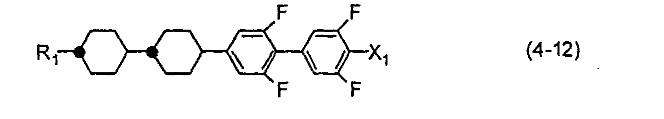 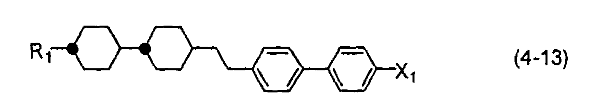 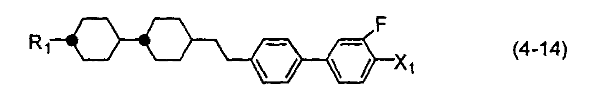 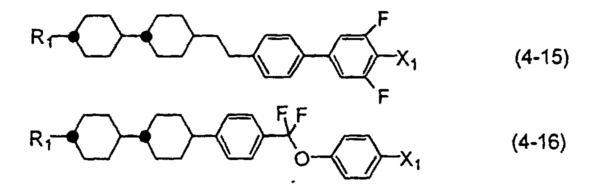 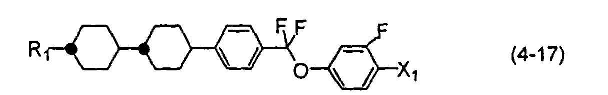 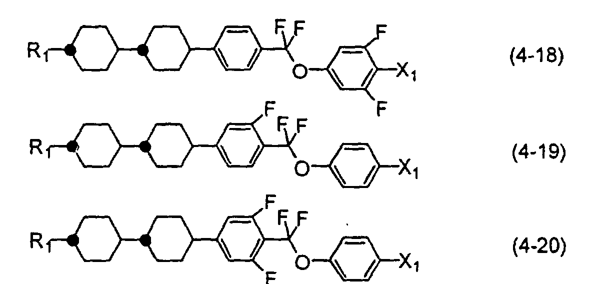 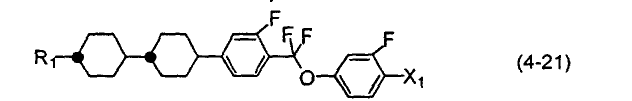 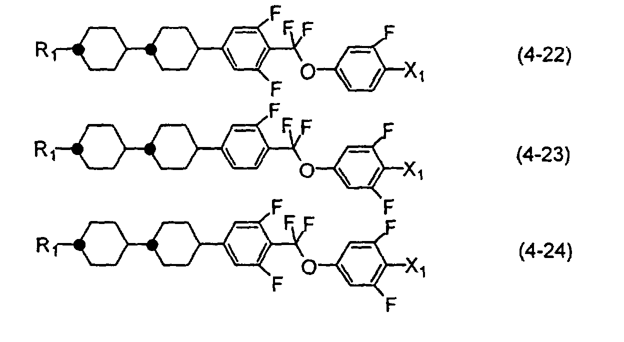 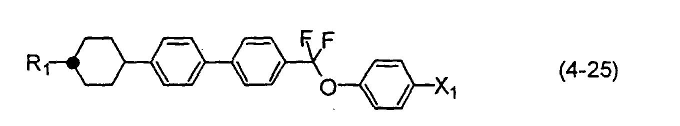 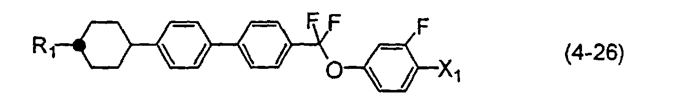 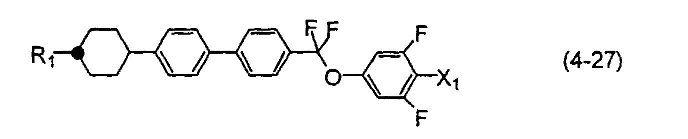 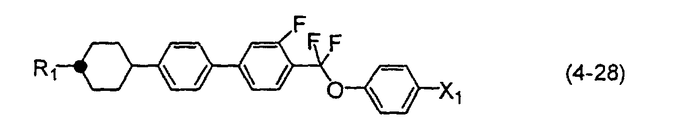 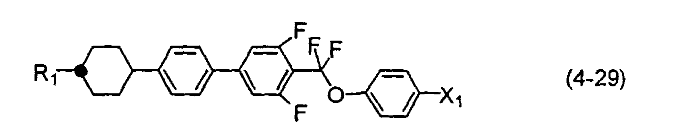 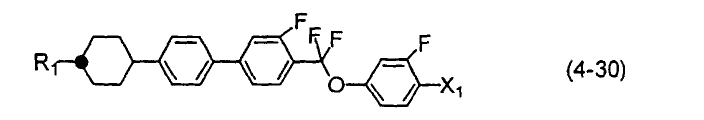 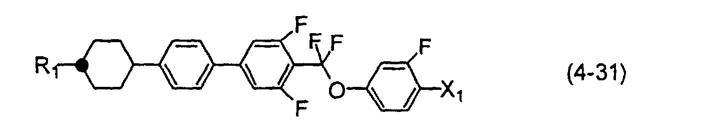 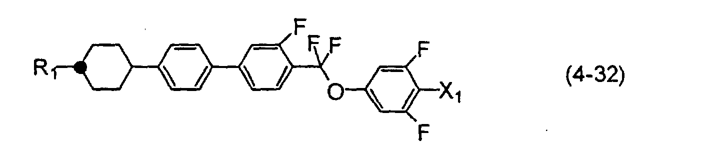 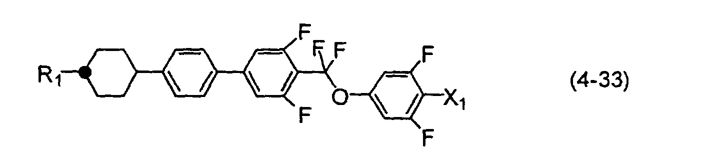 (in the formulas, R₁ and X₁ are the same as above).

The component comprising these compounds represented by Formulas (2) to (4), that is, the component B has positive dielectric anisotropy and is very excellent in heat stability and chemical stability, so that it is used when preparing a liquid crystal composition for TFT. A content of the component B in the liquid crystal composition of the present invention falls suitably in a range of 1 to 99 % by weight, preferably 10 to 97 % by weight and more preferably 40 to 95 % by weight based on the whole weight of the liquid crystal composition. The viscosity can be controlled by further adding the compounds (component E) represented by Formulas (10) to (12).

The compounds of the formulas (5-1) to (5-40) and (6-1) to (6-3) can be given as suitable examples of the component comprising the compounds represented by Formulas (5) to (6), that is, the component C. 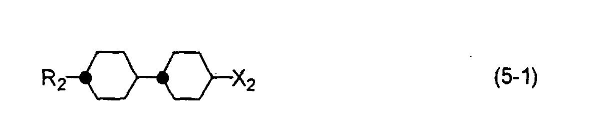 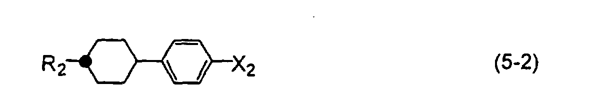 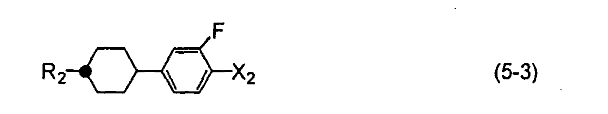 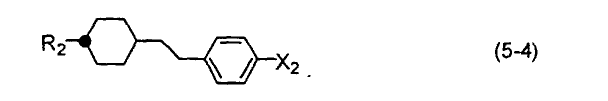 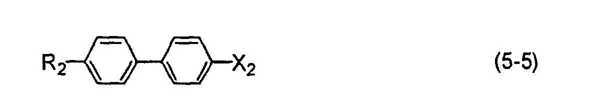 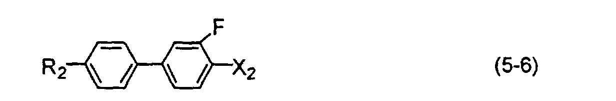 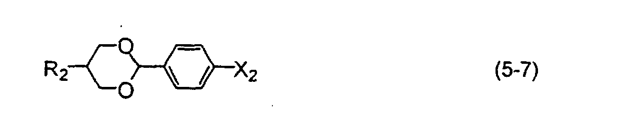 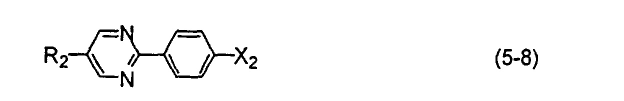 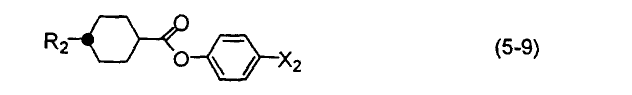 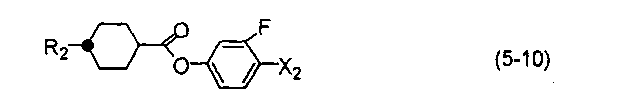 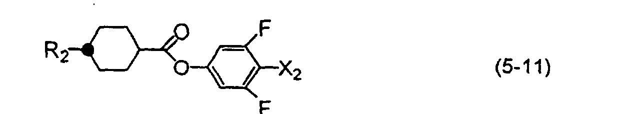 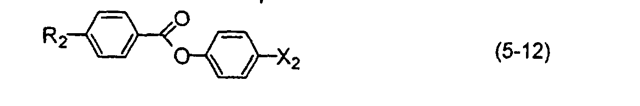 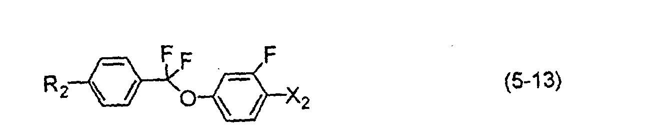 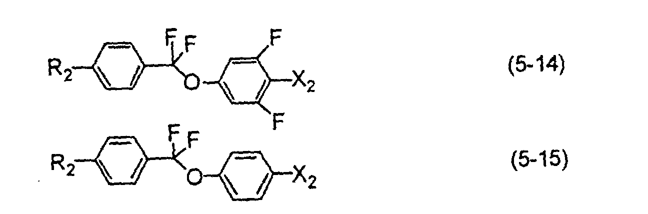 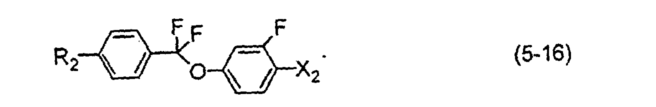 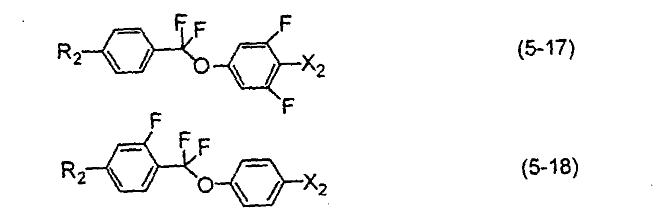 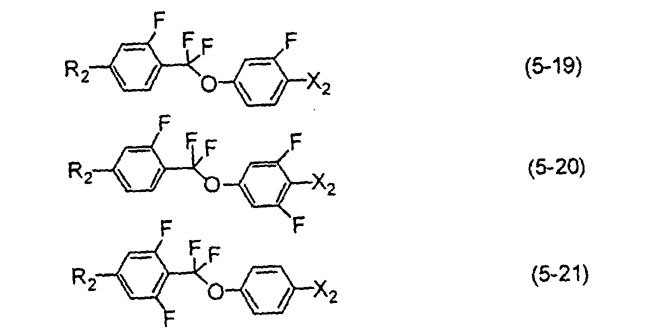 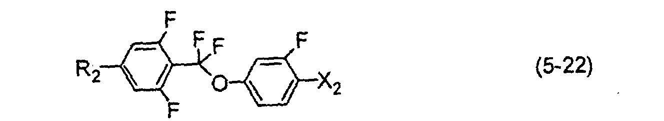 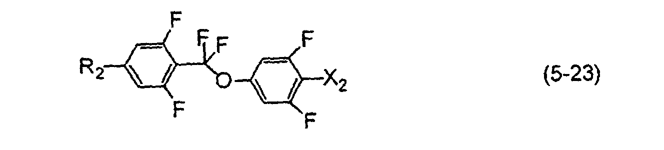 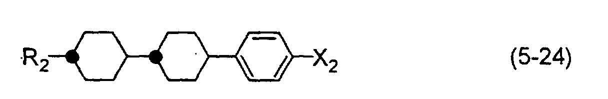 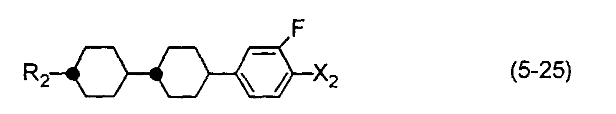 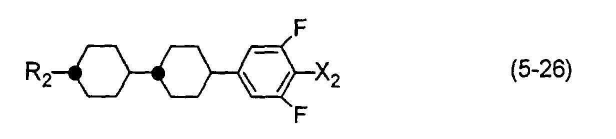 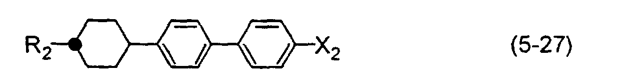 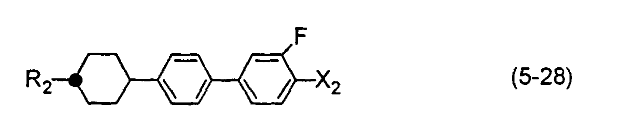 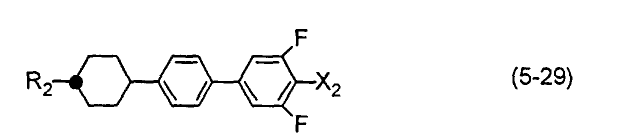 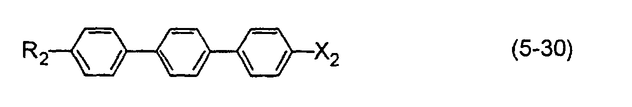 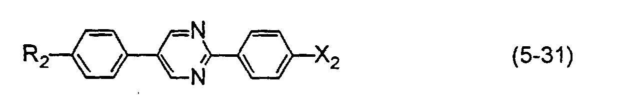 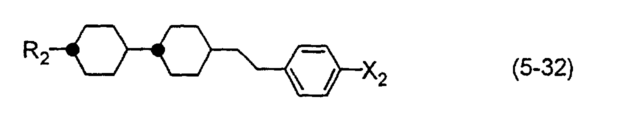 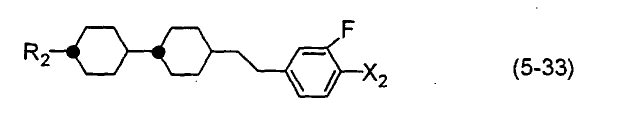 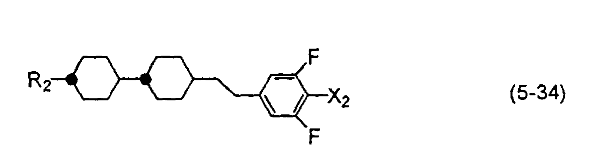 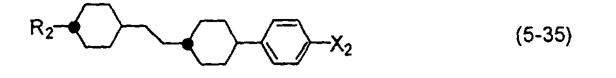 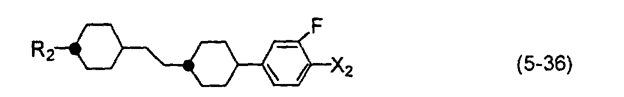 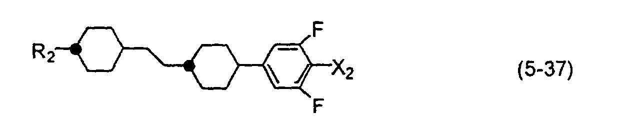 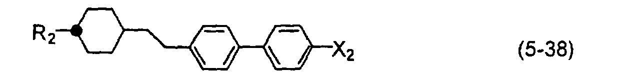 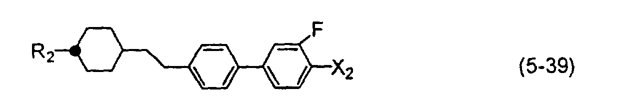 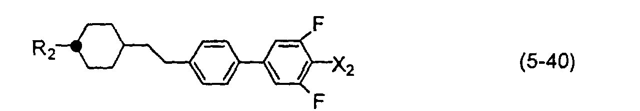 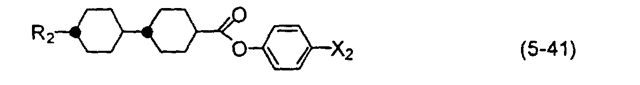 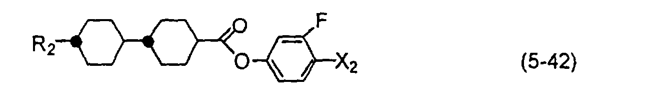 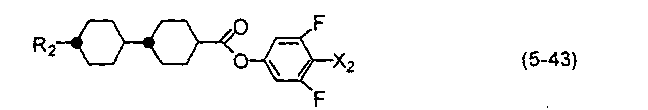 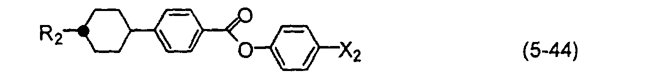 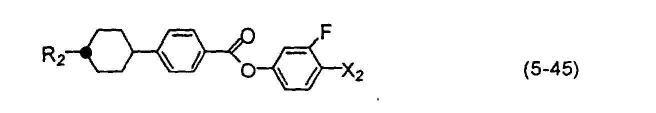 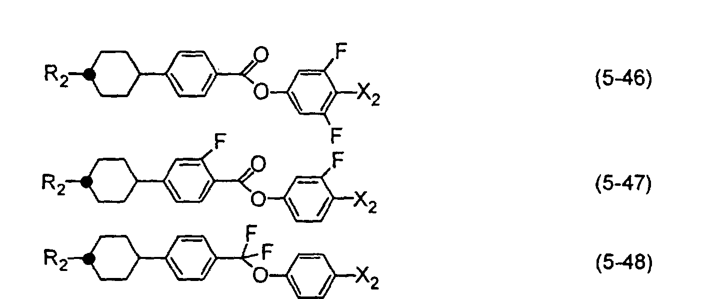 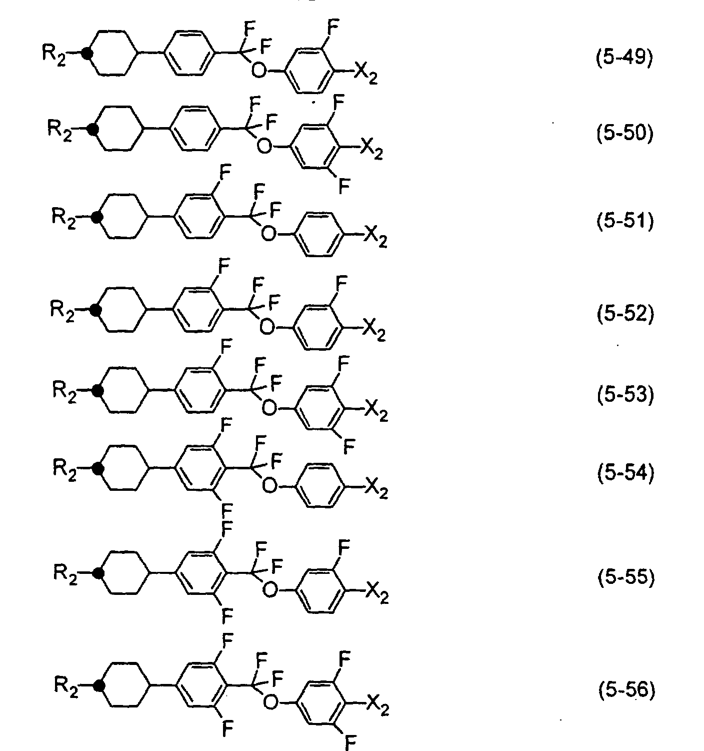 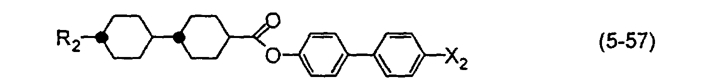 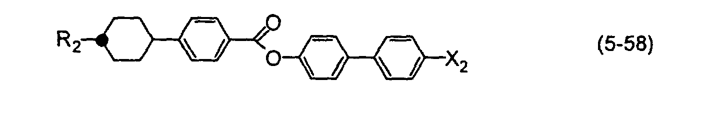 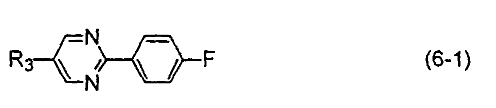 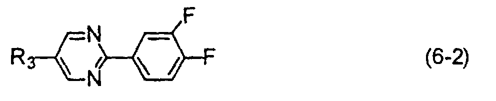 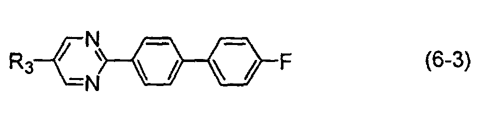 (in the formulas, R₂, R₃ and X₂ are the same as above) .

The component comprising the compounds represented by Formulas (5) and (6), that is, the component C has positive dielectric anisotropy, which is a very large value, so that it is used mainly when preparing the liquid crystal compositions for STN and TN. The mixture can be reduced in a threshold voltage by adding this component C. Also, the viscosity and the birefringence can be controlled, and the liquid crystal phase temperature range can be expanded. Further, it can be used for improving the steepness.

When preparing the liquid crystal compositions for STN or TN, a content of the component C can be applied in a range of 0.1 to 99.9 % by weight, preferably 10 to 97 % by weight and more preferably 40 to 95 % by weight. The threshold voltage, the liquid crystal phase temperature range, the birefringence, the dielectric anisotropy and the viscosity can be controlled by mixing the components described later.

The component D comprising at least one compound selected from the group of the compounds represented by Formulas (7) to (9) is a preferred component when preparing the liquid crystal composition having a negative dielectric anisotropy which is used for a vertical aligning mode (VA mode).

The compounds of the formulas (7-1) to (7-3), (8-1) to (8-5) and (9-1) to (9-3) can be given respectively as suitable examples of the component comprising the compounds (component D) represented by these Formulas (7) to (9). 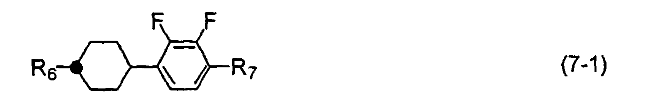 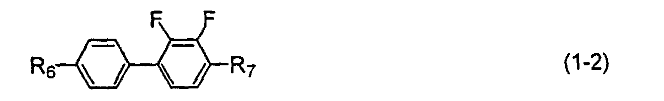 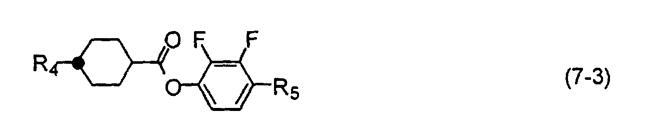 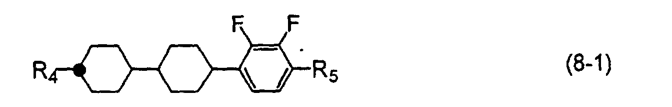 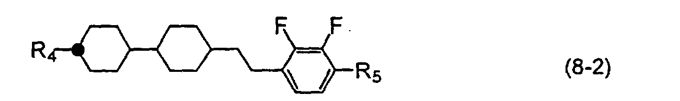 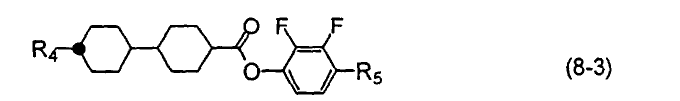 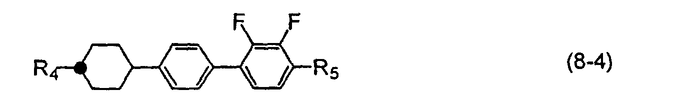 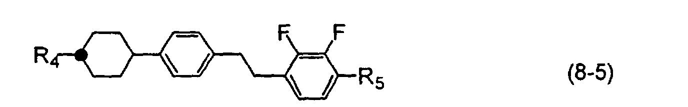 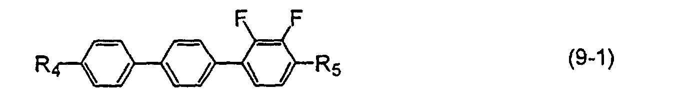 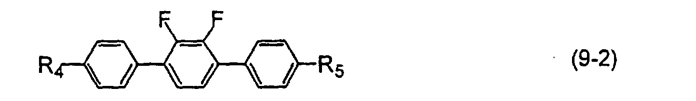 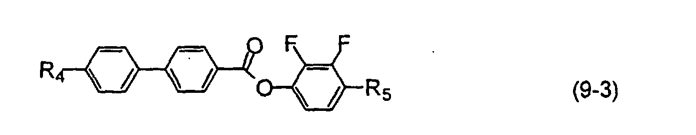 (in the formulas, R₄ and R₅ are the same as above).

These compounds for the component D are used for the liquid crystal composition for a VA mode having negative dielectric anisotropy. If the content thereof is increased, the mixture is reduced in a threshold voltage but increased in viscosity, and therefore the content is preferably reduced as long as a required value of the threshold voltage is satisfied. However, an absolute value of the dielectric anisotropy is 5 or less, and therefore if the content is smaller than 40 % by weight, voltage driving can not be carried out in a certain case.

In the component D, the compound represented by Formula (7) is a dicyclic compound and therefore has an effect for controlling mainly the threshold voltage, the viscosity or the dielectric anisotropy. Also, the compound represented by Formula (8) is a tricyclic compound and therefore provides effects for elevating the clearing point, expanding the nematic range, reducing the threshold voltage and increasing the dielectric anisotropy.

A content of the component D is preferably 40 % by weight or more, more preferably 50 to 95 % by weight based on the whole amount of the mixture when preparing the mixture for a VA mode. Also, mixing of the component D makes it possible to control the elastic constant and a voltage transmission curve of the mixture. When mixing the component D with the liquid crystal composition having a positive dielectric anisotropy, a content thereof is preferably 30 % by weight or less based on the whole amount of the mixture.

The compounds of the formulas (10-1) to (10-11), (11-1) to (11-12) and (12-1) to (12-6) can be given respectively as suitable examples of the component comprising the compounds (component E) represented by these Formulas (10), (11) and (12). 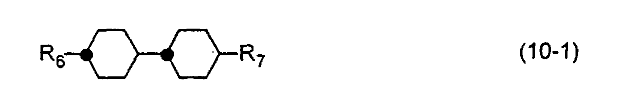 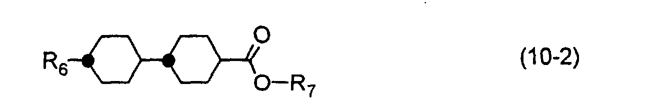 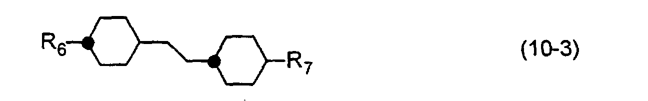 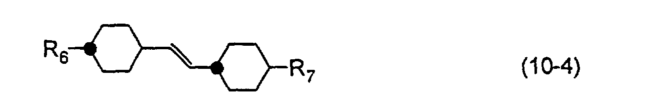 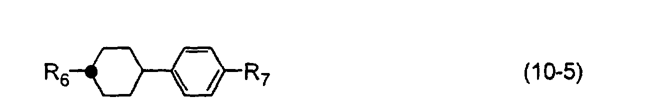 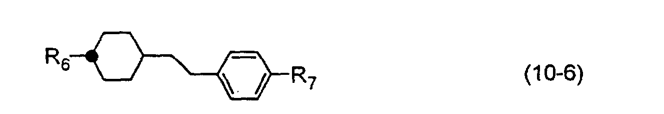 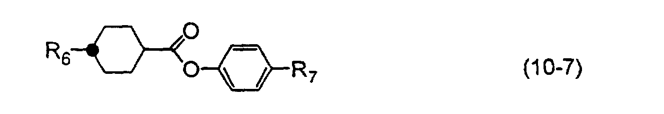 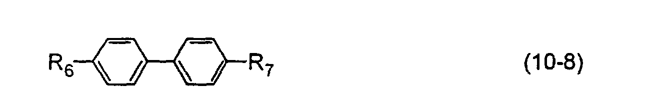 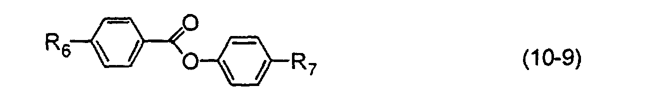 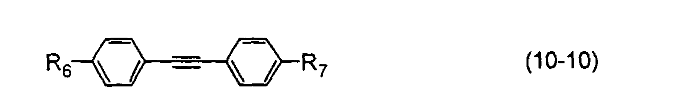 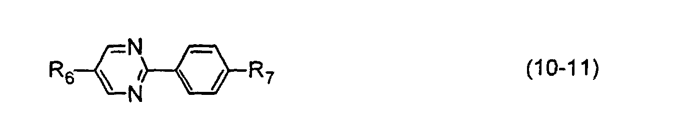 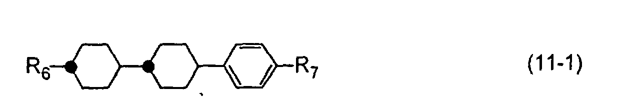 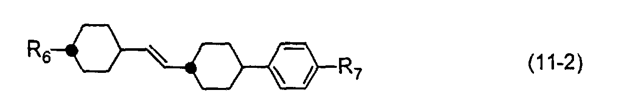 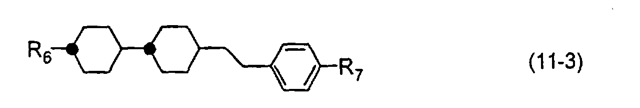 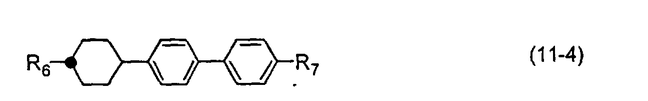 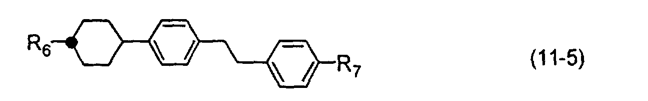 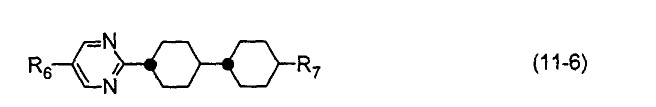 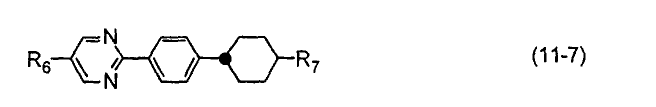 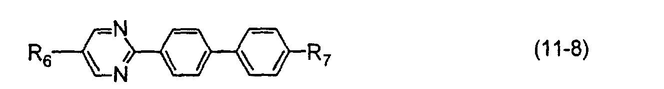 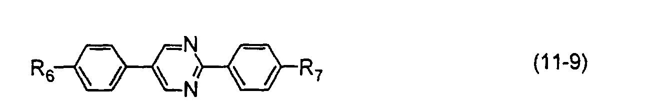 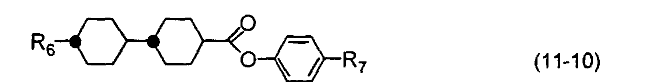 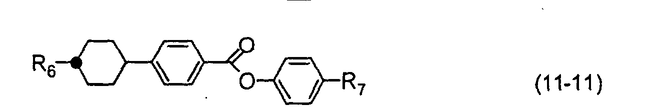 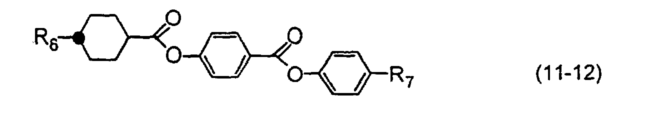 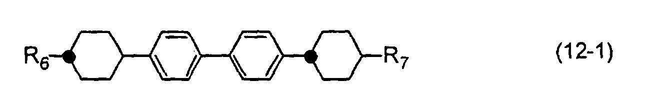 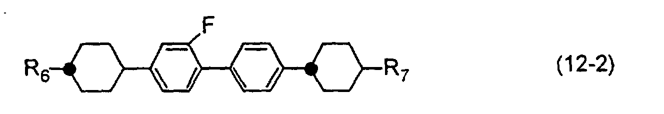 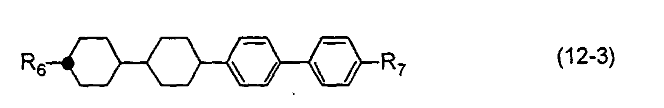 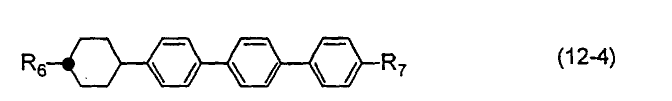 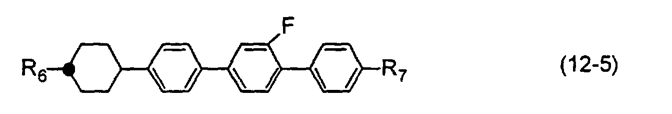 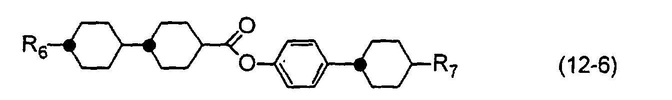 (in the formulas, R₆ and R₇ are the same as above).

The compounds (component E) represented by Formulas (10) to (12) have a small absolute value of dielectric anisotropy and are compounds that are close to neutrality. The compound represented by Formula (10) has mainly an effect for controlling the viscosity and the dielectric anisotropy, and the compounds represented by Formulas (11) and (12) have an effect for broadening the nematic range such as elevating the clearing point or an effect for controlling the dielectric anisotropy.

If a content of the compound represented by the component E is increased, the mixture is elevated in a threshold voltage and reduced in viscosity, and therefore the larger content is more preferred as long as a required value of the threshold voltage of the liquid crystal composition is satisfied. When preparing the liquid crystal composition for TFT, a content of the component E is preferably 40 % by weight or less, more preferably 35 % by weight or less based on the whole amount of the mixture. Further, when preparing the liquid crystal composition for STN or TN, a content of the component E is preferably 70 % by weight or less, more preferably 60 % by weight or less based on the whole amount of the mixture.

The liquid crystal composition of the present invention preferably contains at least one of the silicon compounds represented by Formula (1) in a proportion of 0.1 to 99 % by weight in order to allow excellent characteristics to be revealed.

The liquid crystal composition of the present invention is usually prepared by a publicly known method, for example, a method in which required components are dissolved at high temperatures. Further, the liquid crystal composition (e) of the present invention containing an optically active compound described later and the liquid crystal composition for a GH mode containing a dye can be prepared by adding additives which are well known by a person averagely skilled in the art. Usually, the additives are well known by a person averagely skilled in the art and described in detail in literatures.

The liquid crystal composition (e) of the present invention is prepared by further adding at least one optically active compound to the liquid crystal composition of the present invention described above.

A publicly known chiral dopant is added as the optically active compound. This chiral dopant has an effect of inducing a spiral structure of liquid crystal to control a required distortion angle and prevent inverse distortion. The following optically active compounds can be given as examples of the chiral dopant.

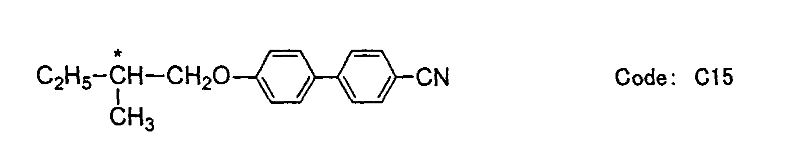

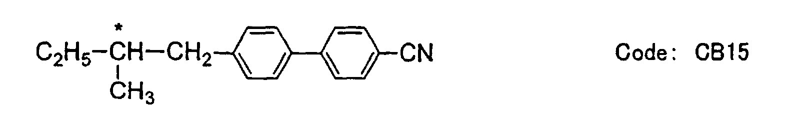

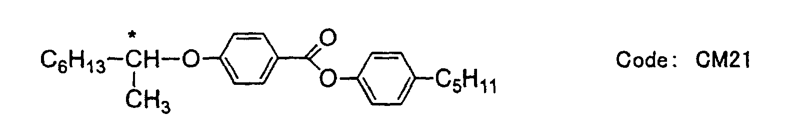

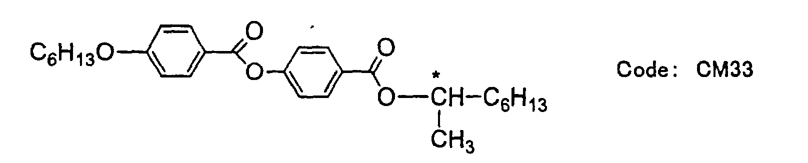

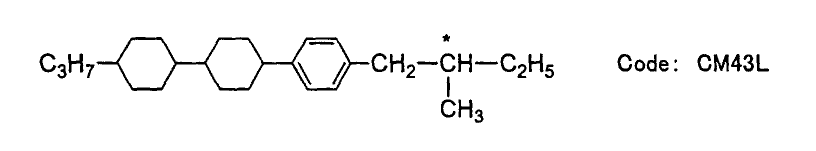

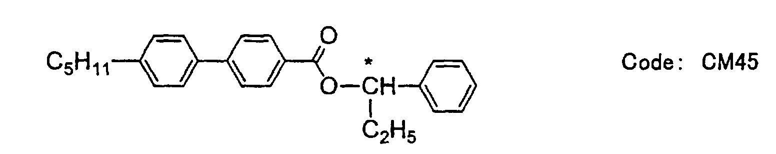

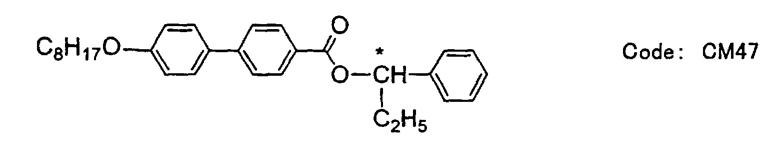

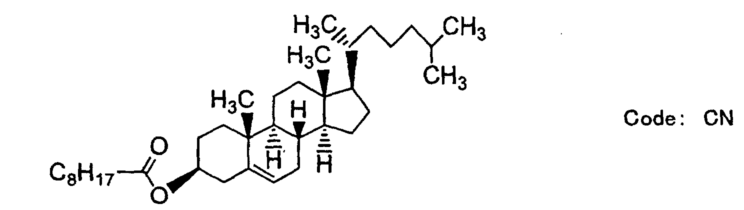

Usually, in the liquid crystal composition (e) of the present invention, these optically active compounds are added to control a pitch in distortion. The pitch in distortion is preferably controlled in a range of 40 to 200 *µ* m in the case of the liquid crystal compositions for TFT and TN. In the case of the liquid crystal composition for STN, it is preferably controlled in a range of 6 to 20 *µ* m. Further, in the case of the liquid crystal composition for a bistable TN mode, it is preferably controlled in a range of 1.5 to 4 *µ* m. Two or more kinds of the optically active compounds may be added for the purpose of controlling temperature dependency of the pitch.

The liquid crystal composition of the present invention can also be used as a liquid crystal composition for a GH mode by adding a dichromatic dye such as a merocyanine base, a styryl base, an azo base, an azomethine base, an azoxy base, a quinophthalone base, an anthraquinone base and a tetrazine base.

The liquid crystal composition of the present invention can also be used as a liquid crystal composition for a birefringence-controlling (ECB) mode and a DS mode as well as NCAP prepared by micro-capsulizing nematic liquid crystal and a polymer dispersion mode liquid crystal display (PDLCD) prepared by forming a three-dimensional network polymer in the liquid crystal, for example, a polymer network liquid crystal display (PNLCD).

### Examples

The present invention shall be explained below in more details with reference to examples. In the respective examples, C shows crystal; SA shows a smectic A phase; SB shows a smectic B phase; SX shows a smectic phase the structure of which is not yet analyzed; N shows a nematic phase; I shows an isotropic phase; and a unit of a phase transition temperature is °C in all examples.

### Example 1

### Production of 4-(trans-4-propylcyclohexylmethylsilyl) -2,3-difluoroethoxybenzene [compound (No. E1) in which in Formula (1), Ra is C₂H₅O-; Rb is C₃H₇-; m = 1, n = o = 0; Z₁ is-SiH₂CH₂-; A is 2,3-difluoro-1,4-phenylene; and A₁ is cyclohexylene]

Tetrahydrofuran (THF) was added to magnesium, and then a THF solution of 4-propylcyclohexylmethyl chloride was dropwise added thereto at a room temperature.

Then, a THF solution of 4-ethoxy-2,3-difluorophenyltrimethoxysilane was dropwise added and stirred at a room temperature for 2 hours. The reaction solution was put into water, and a layer obtained by extracting the solution with toluene was dried on anhydrous magnesium sulfate and then concentrated under reduced pressure. The resulting residue was refined by means of silica gel chromatography, and the resulting colorless oily product was recrystallized from ethanol to obtain 4-(trans-4-propylcyclohexylmethyldimethoxysilyl) -2,3-difluoroethoxybenzene.

A THF solution of 4-(trans-4-propylcyclohexylmethyldimethoxysilyl) -2,3-difluoroethoxybenzene was stirred while cooling, and aluminum lithium hydride was added thereto little by little. After finishing addition, the reaction solution was heated up to a room temperature and then put into water, and a layer obtained by extracting the solution with toluene was dried and then concentrated under reduced pressure to obtain a yellow oily product. This oily product was refined by means of silica gel chromatography to isolate the captioned compound (No. E1).

This compound had a phase transition temperature of:
C 11.0 I.

### Example 2

### Production of 4-(trans-4-pentylcyclohexylmethylsilyl) -2,3-difluoroethoxybenzene [compound (No. E2) in which in Formula (1), Ra is C₂H₅O-; Rb is CH₃(CH₂)₃CH₂-; m = 1, n = o = 0; Z₁ is -SiH₂CH₂-; A is 2,3-difluoro-1,4-phenylene; and A₁ is cyclohexylene]

THF was added to magnesium, and then a THF solution of 4-pentylcyclohexylmethyl chloride was dropwise added thereto at a room temperature.

Then, a THF solution of 4-ethoxy-2,3-difluorophenyltrimethoxysilane was dropwise added and stirred at a room temperature for 2 hours.

Next, this reaction mixture was stirred while cooling with ice, and aluminum lithium hydride was added thereto little by little and reacted. After finishing addition, the reaction solution was heated up to a room temperature and then put into water, and a layer obtained by extracting the solution with toluene was dried and then concentrated under reduced pressure to obtain a yellow oily product. This oily product was refined by means of silica gel chromatography to isolate the captioned compound (No. E2).

This compound. had a phase transition temperature of:
C 45.5 I.

### Example 3

### Production of 4-(trans-4-(trans-4-propylcyclohexyl)cyclohexylmethylsilyl)-2,3-difluoromethoxybenzene [compound (No. E3) in which in Formula (1), Ra is CH₃O-; Rb is C₃H₇-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E3) was synthesized from (trans-4-(trans-4-propylcyclohexyl)cyclohexyl-methyl chloride and 4-methoxy-2,3-difluorophenyl-trimethoxysilane according to the method used in Example 2.

This compound had a phase transition temperature of:
C 71.0 SB 92.5 I.

### Example 4

### Production of 4-(trans-4-(trans-4-pentylcyclohexyl)cyclohexylmethylsilyl)-2,3-difluoromethoxybenzene [compound (No. E4) in which in Formula (1), Ra is CH₃O-; Rb is CH₃(CH₂)₃CH₂-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E4) was synthesized from (trans-4-(trans-4-pentylcyclohexyl)cyclohexyl-methyl chloride and 4-methoxy-2,3-difluorophenyl-trimethoxysilane according to the method used in Example 2.

This compound had a phase transition temperature of:
C 71.4 SX 111.6 I.

### Example 5

### Production of 4-(trans-4-(trans-4-propylcyclohexyl)cyclohexylmethylsilyl)-2,3-difluoroethoxybenzene [compound (No. E5) in which in Formula (1), Ra is C₂H₅O-; Rb is C₃H₇-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E5) was synthesized from (trans-4-(trans-4-propylcyclohexyl)cyclohexyl-methyl chloride and 4-ethoxy-2,3-difluorophenyl-trimethoxysilane according to the method used in Example 2.

This compound had a phase transition temperature of:
C 65.6 SB 87.2 N 95.6 I.

### Example 6

### Production of 4-(trans-4-(trans-4-pentylcyclohexyl)cyclohexylmethylsilyl)-2,3-difluoroethoxybenzene [compound (No. E6) in which in Formula (1), Ra is C₂H₅O-; Rb is CH₃(CH₂)₃CH₂-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E6) was synthesized from (trans-4-(trans-4-pentylcyclohexyl)cyclohexyl-methyl chloride and 4-ethoxy-2,3-difluorophenyl-trimethoxysilane according to the method used in Example 2.

This compound had a phase transition temperature of:
C 46.8 SA 111.2 I.

### Example 7

### Production of 4-(trans-4-(trans-4-propylcyclohexyl)cyclohexylmethylsilyl)-2,3-difluorotoluene [compound (No. E7) in which in Formula (1), Ra is CH₃-; Rb is C₃H₇-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E7) was synthesized from (trans-4-(trans-4-propylcyclohexyl)cyclohexyl-methyl chloride and 4-methyl-2,3-difluorophenyl-trimethoxysilane according to the method used in Example 2.

This compound had a phase transition temperature of:
C 38.7 SB 66.4 I.

### Example 8

### Production of 4-(trans-4-(trans-4-pentylcyclohexyl)cyclohexylmethylsilyl)-2,3-difluorotoluene [compound (No. E8) in which in Formula (1), Ra is CH₃-; Rb is CH₃(CH₂)₃CH₂-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E8) was synthesized from (trans-4-(trans-4-pentylcyclohexyl)cyclohexyl-methyl chloride and 4-methyl-2,3-difluorophenyl-trimethoxysilane according to the method used in Example 2.

This compound had a phase transition temperature of:
C 29.5 C' 27.8 SB 88.6 I.

### Example 9

### Production of 4-(trans-4-(trans-4-ethylcyclohexyl)cyclohexyl)methylsilyl-2,3-difluoropropoxybenzene [compound (No. E9) in which in Formula (1), Ra is C₃H₇O-; Rb is CH₃CH₂-; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E9) was synthesized from trans-4-(trans-4-ethylcyclohexyl)cyclohexyl-methyl chloride and 4-propoxy-2,3-difluorophenyl-trimethoxysilane according to the method used in Example 2.

This compound had a phase transition temperature of:
C 42.9 SX 57.6 I.

### Example 10

### Production of 4-(trans-4-(trans-4-ethylcyclohexyl)cyclohexyl)methylsilyl-2,3-difluoroethoxybenzene [compound (No. E10) in which in Formula (1), Ra is C₃H₇O-; Rb is CH₃CH₂- ; m = n = 1, o = 0; Z₁ is -SiH₂CH₂-; Z₂ is a single bond; A is 2,3-difluoro-1,4-phenylene; and A₁ and A₂ are cyclohexylene]

The captioned compound (No. E10) was synthesized from trans-4-(trans-4-ethylcyclohexyl)-cyclohexylmethyl chloride and 4-ethoxy-2,3-difluoro-phenyltrimethoxysilane according to the method used in Example 2.

This compound had a phase transition temperature of:
C 60.0 SX 63.1 N 66.4 I.

### Example 11

### Production of 4-(trans-4-(trans-4-propylcyclohexyl)cyclohexyl)methylsilyl-2,3-difluoropropoxybenzene [compound (No. E11) in which in Formula (1), Ra is C₃H₇O-; Rb is CH₃CH₂- ; m = n = 1, o = 0;. Z₁ is -SiH₂CH₂-; Z2 is a single bond; A is 2,3-difluoro-1,4-phenylene; and A₁ and A₂ are cyclohexylene]

The captioned compound (No. E11) was synthesized from trans-4-(trans-4-propylcyclohexyl)-cyclohexylmethyl chloride and 4-propoxy-2,3-difluoro-phenyltrimethoxysilane according to the method used in Example 2.

This compound had a phase transition temperature of:
C 30.5 SX 82.0 N 84.7 I.

### Example 12

The following compounds (No. 1 to No. 260) were produced by the same method as in Examples 1 to 11. The respective compounds were shown according to the codes of the substituents in Formula (1).

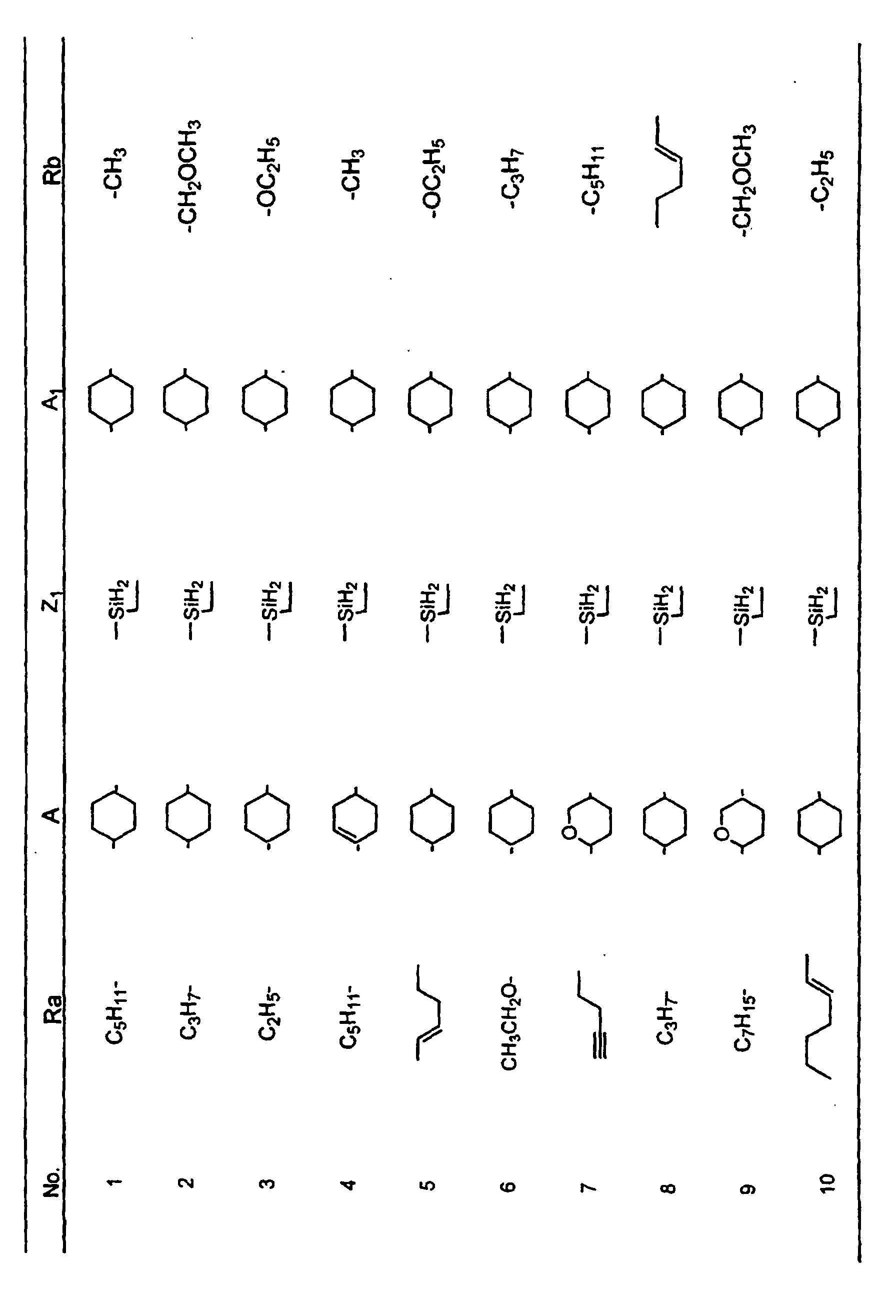

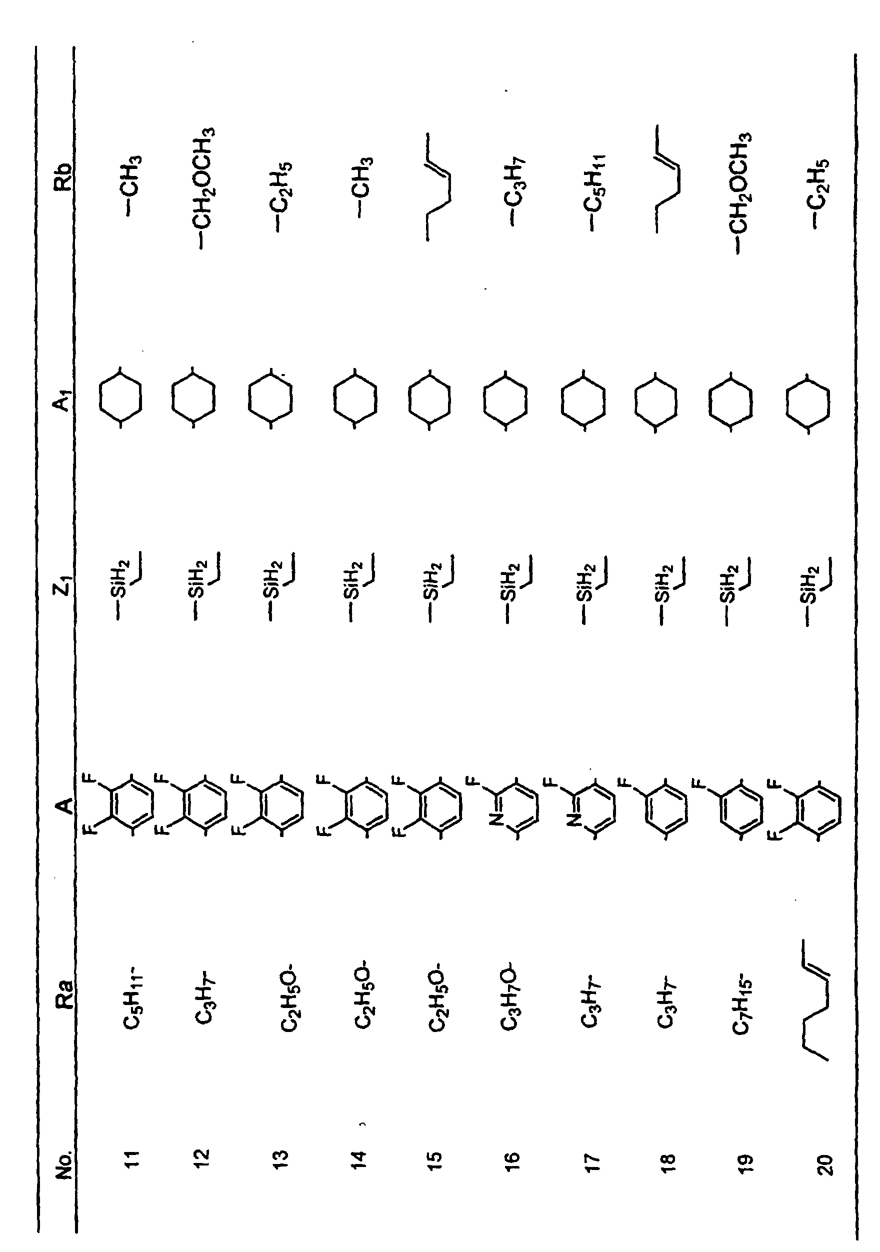

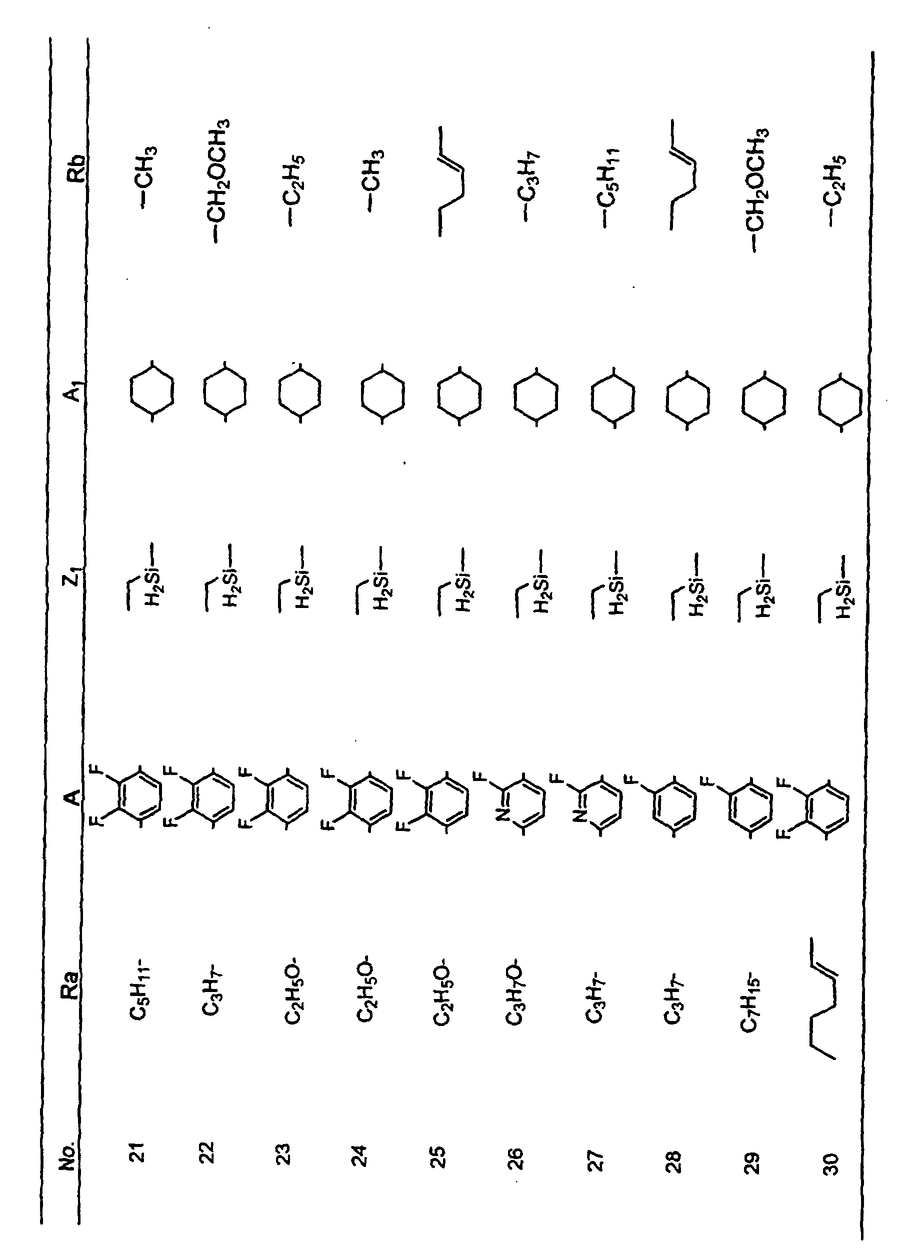

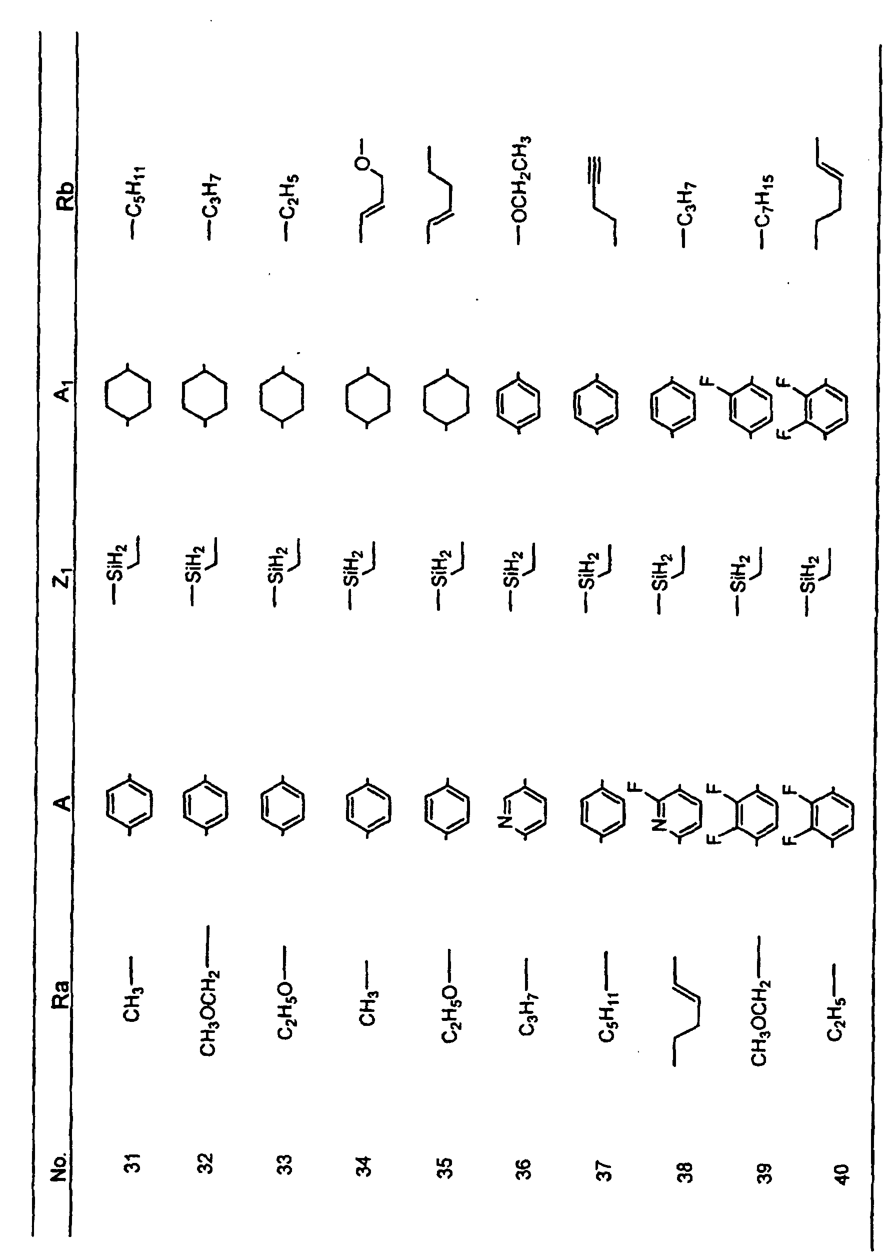

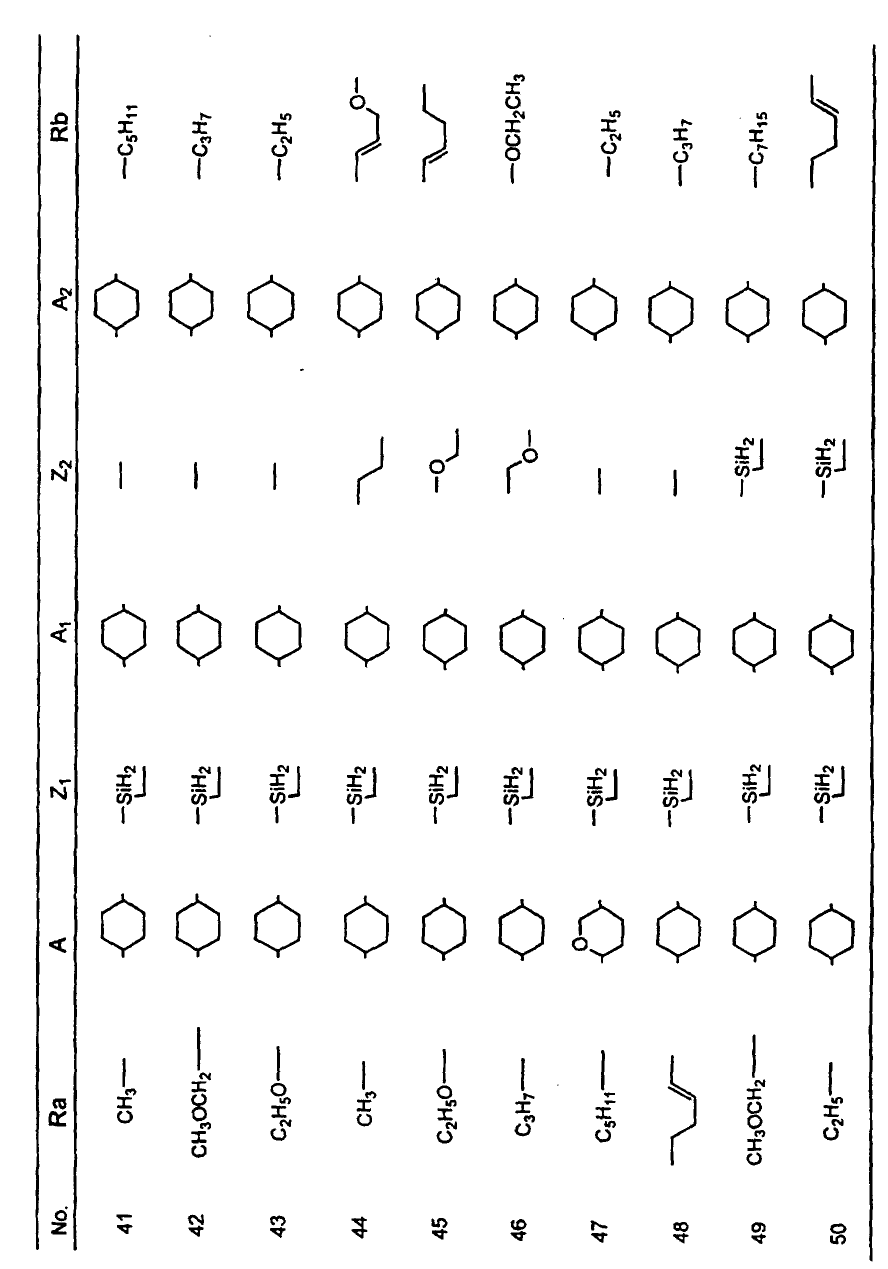

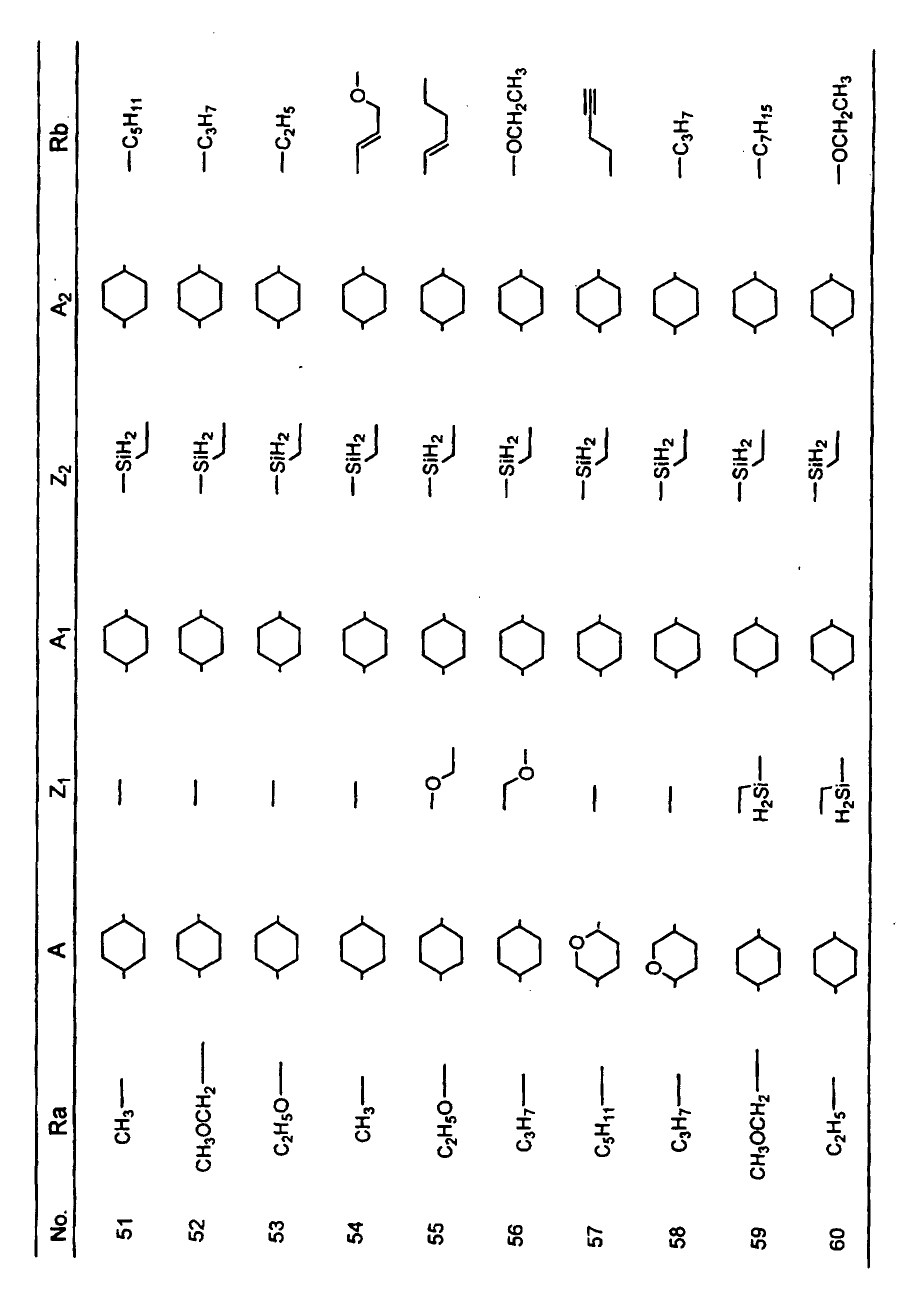

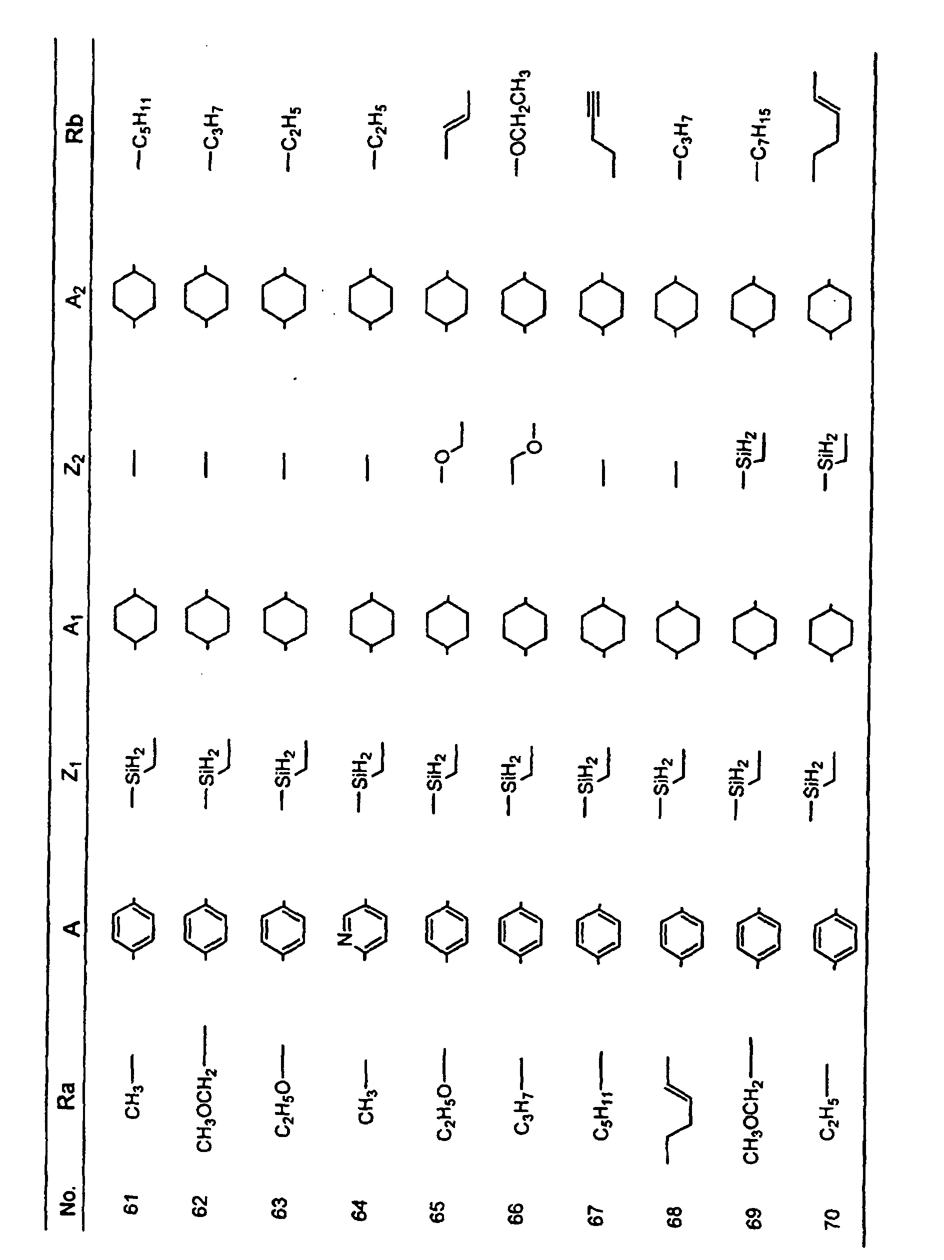

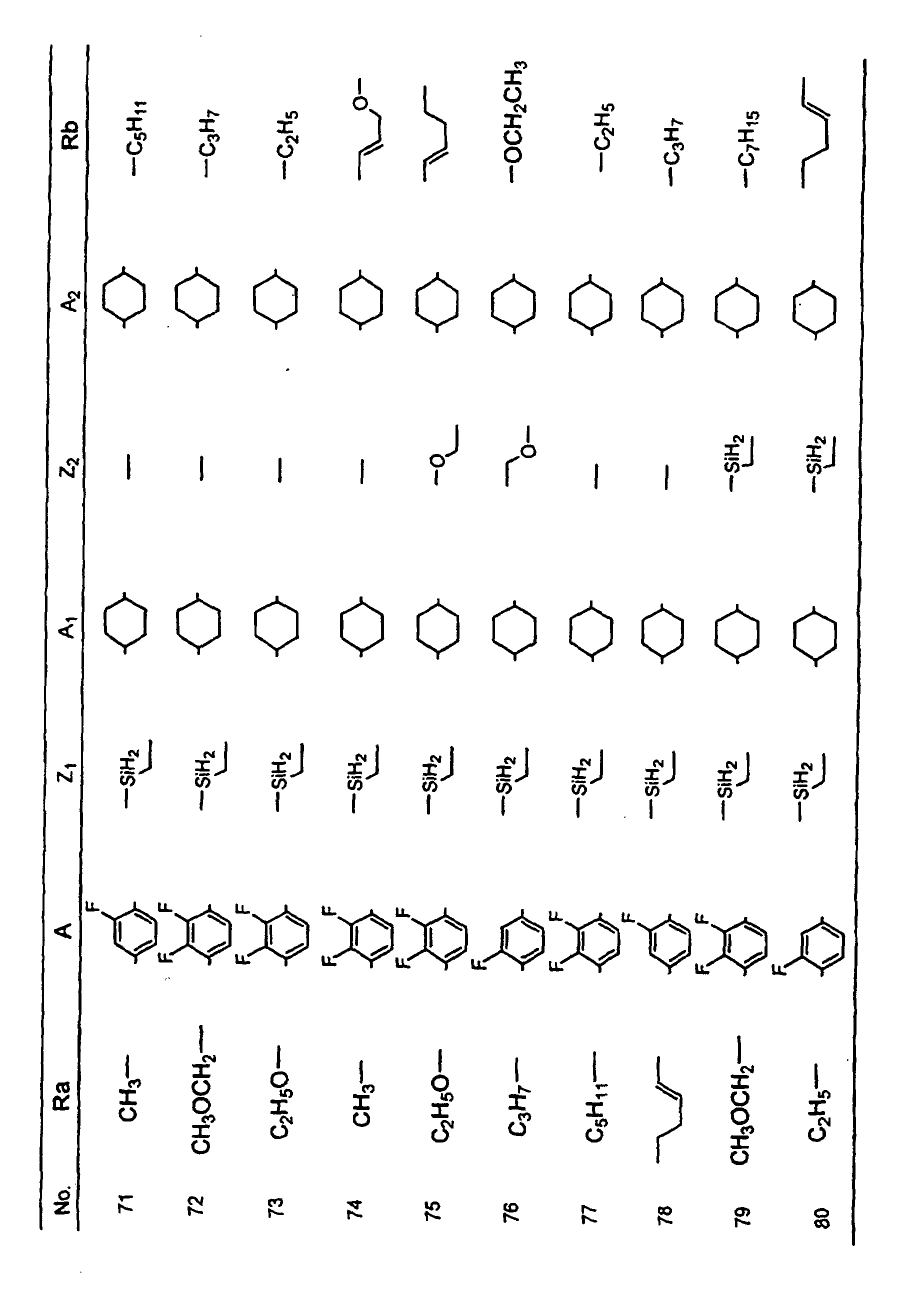

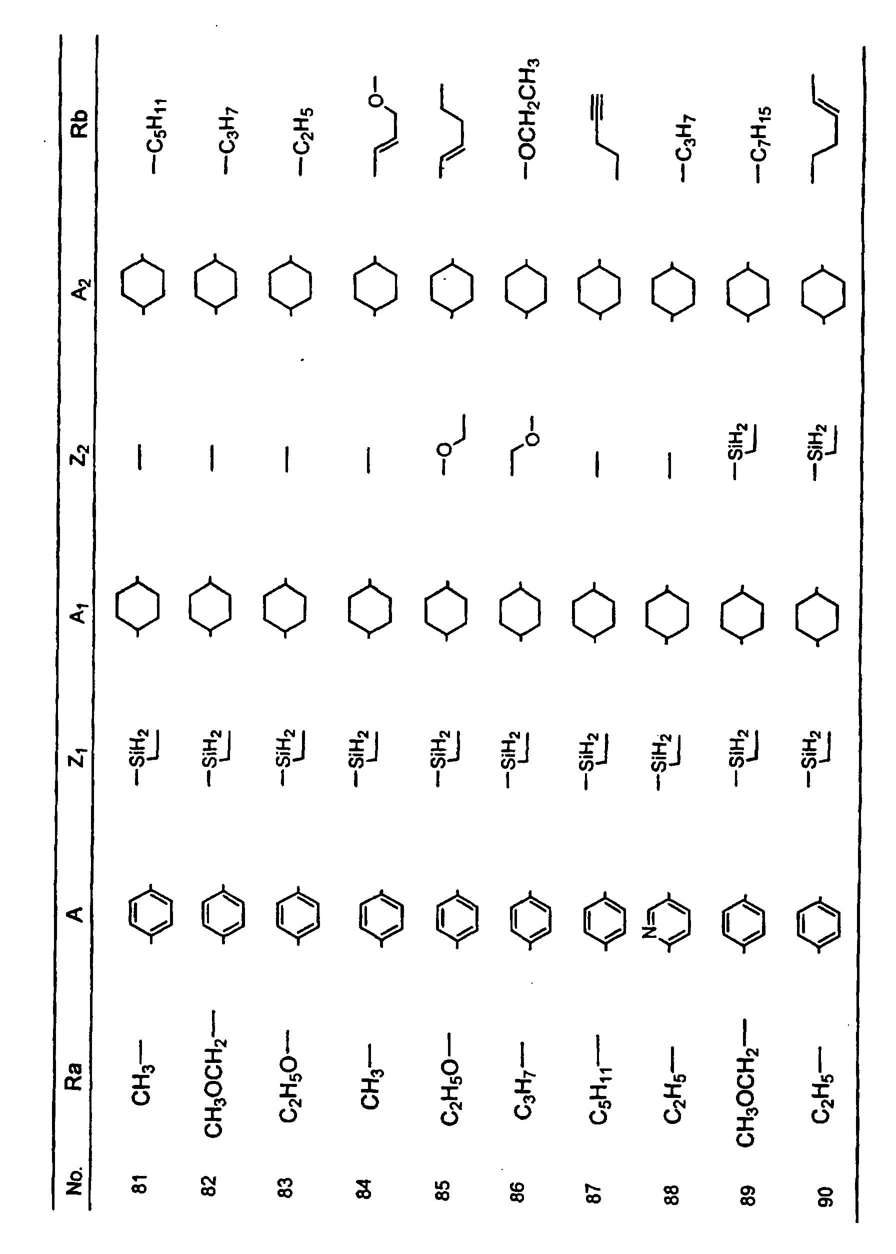

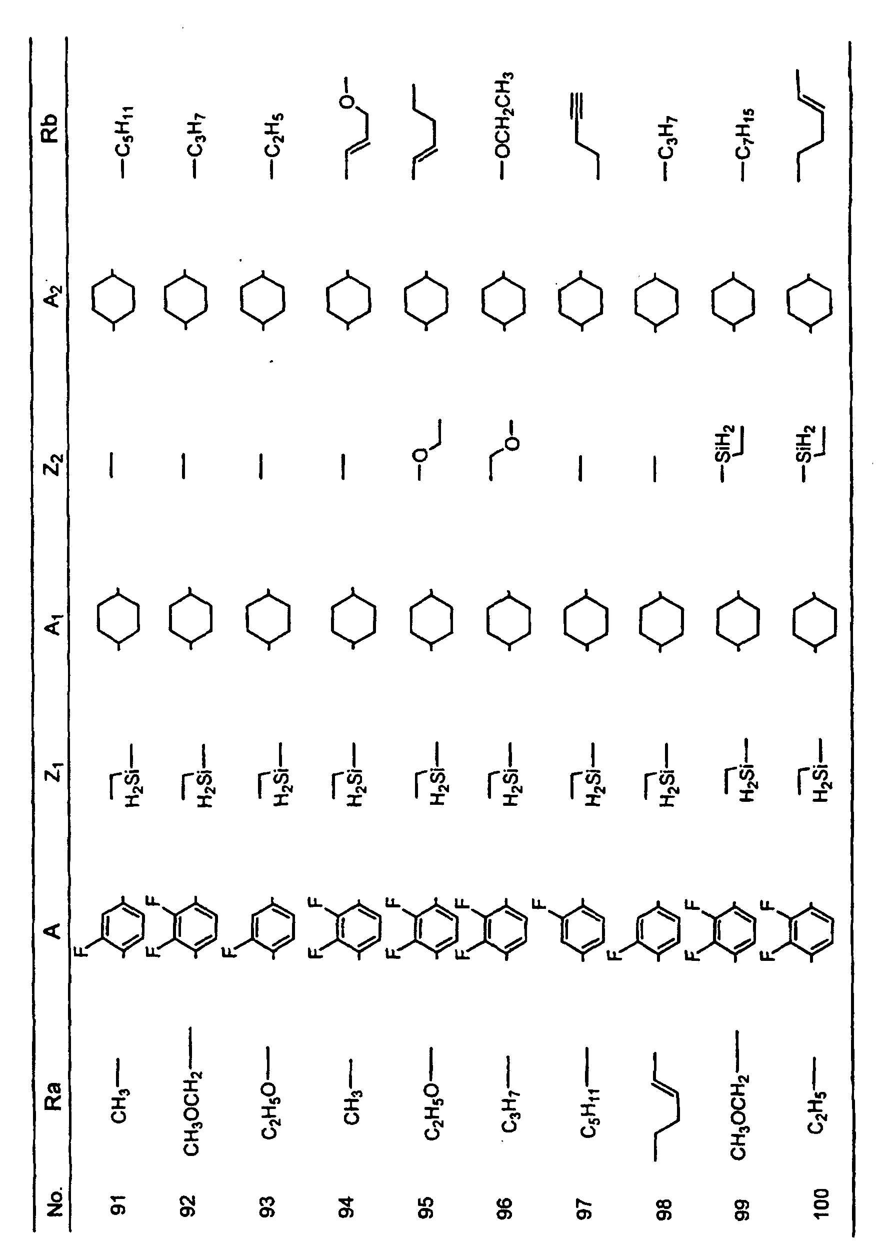

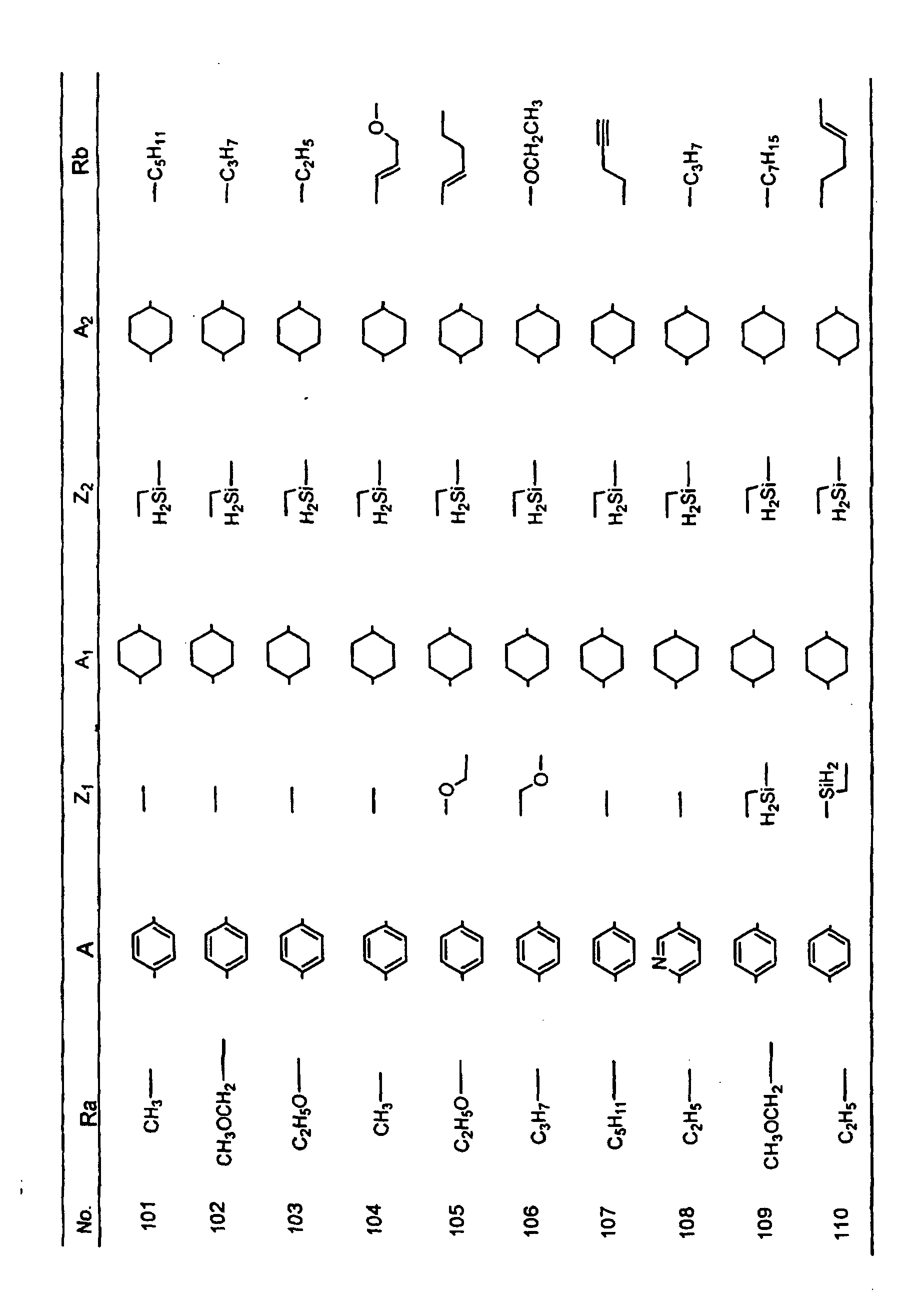

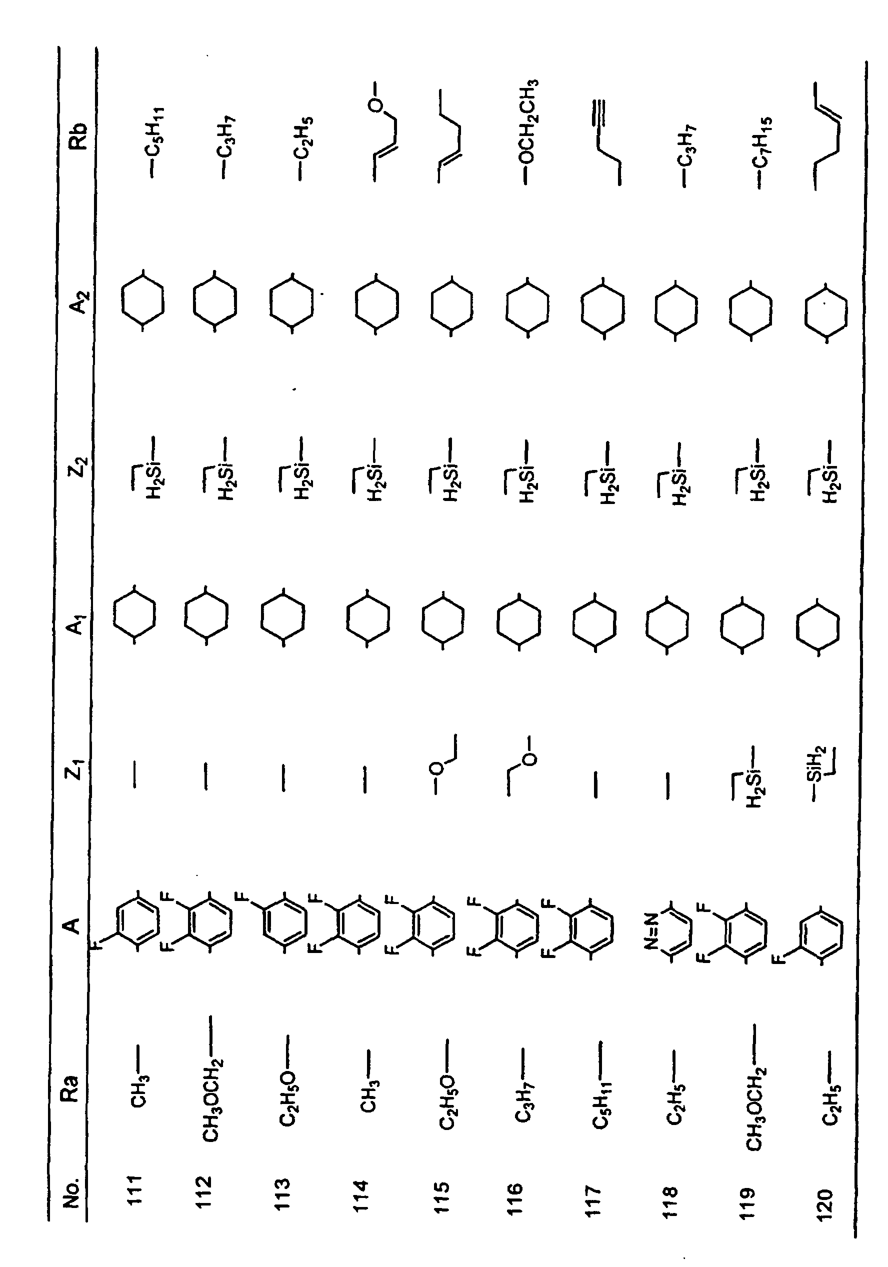

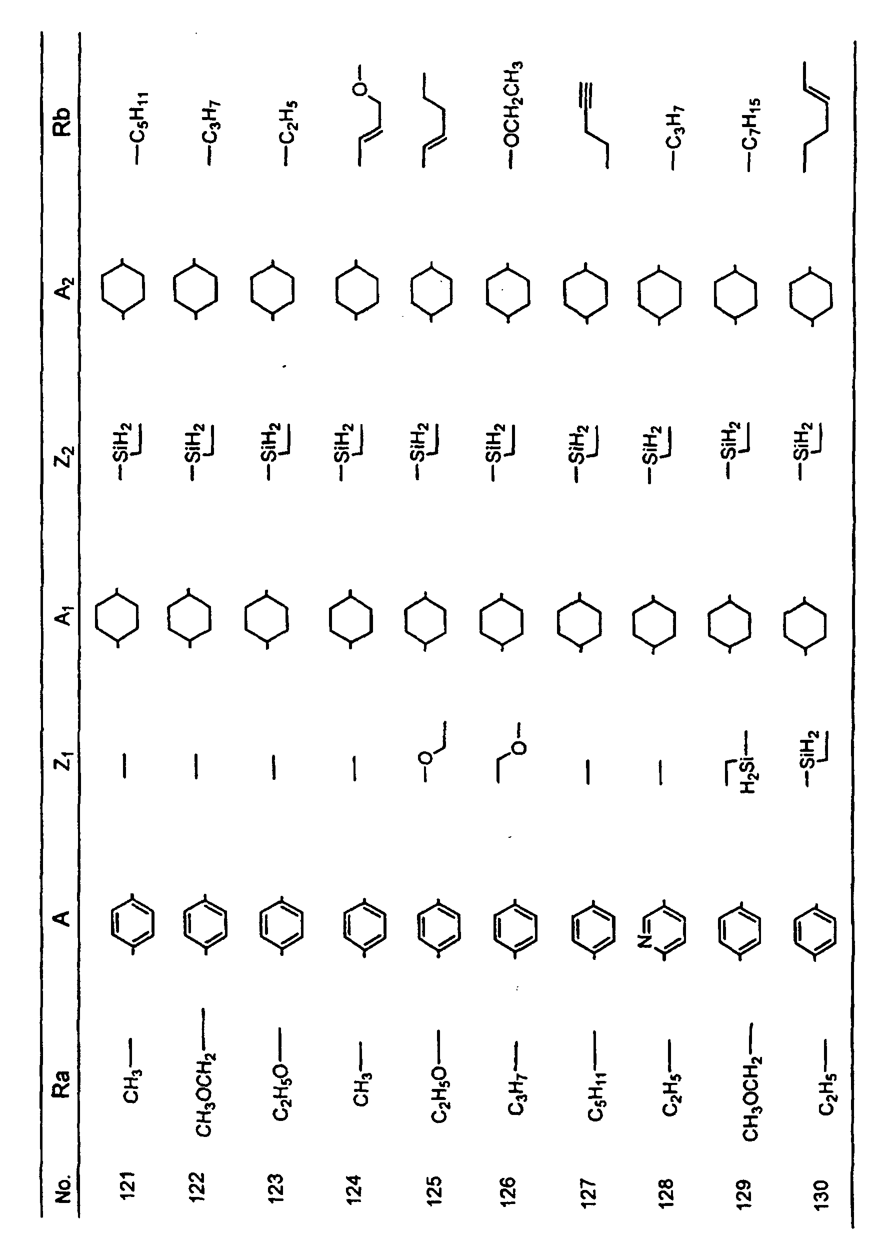

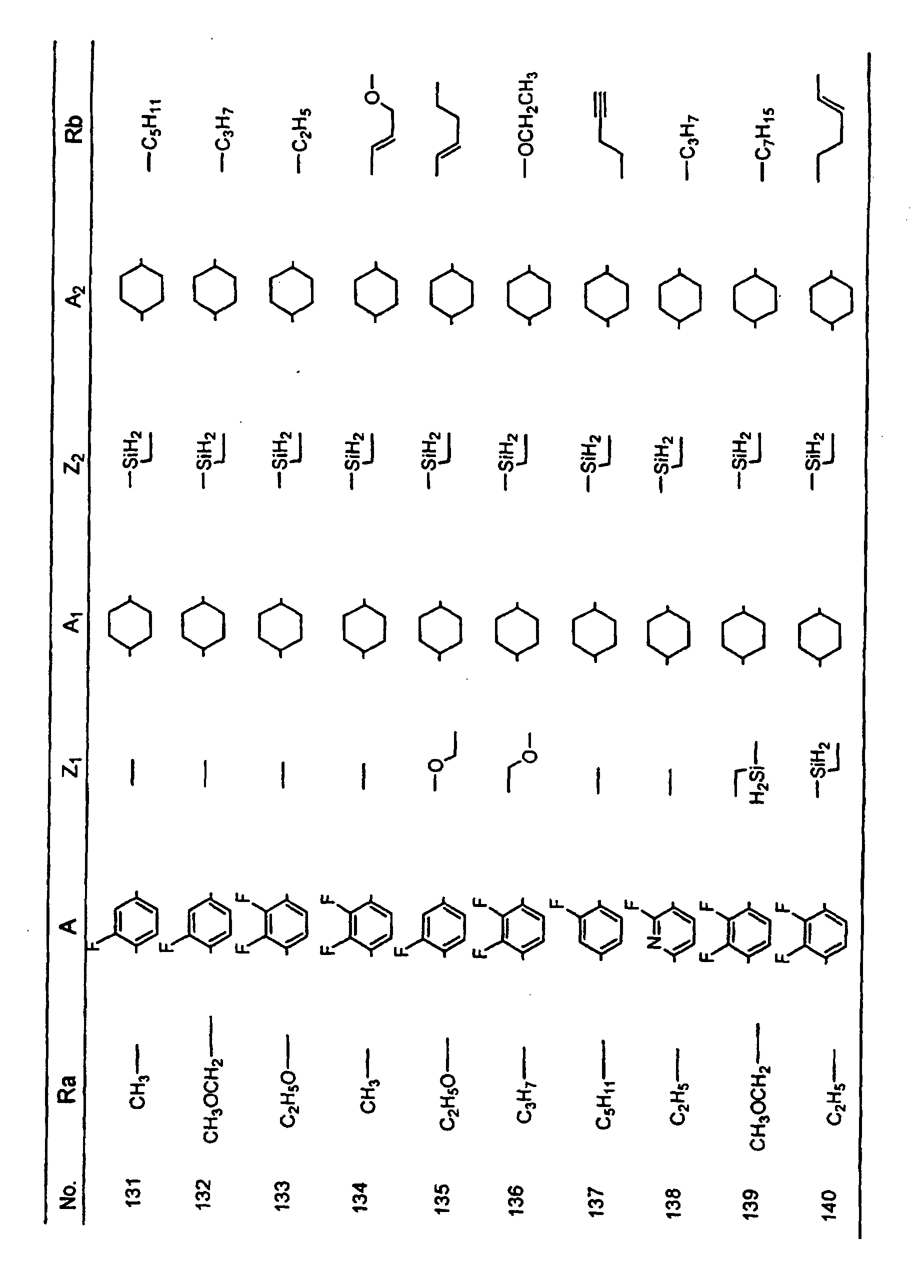

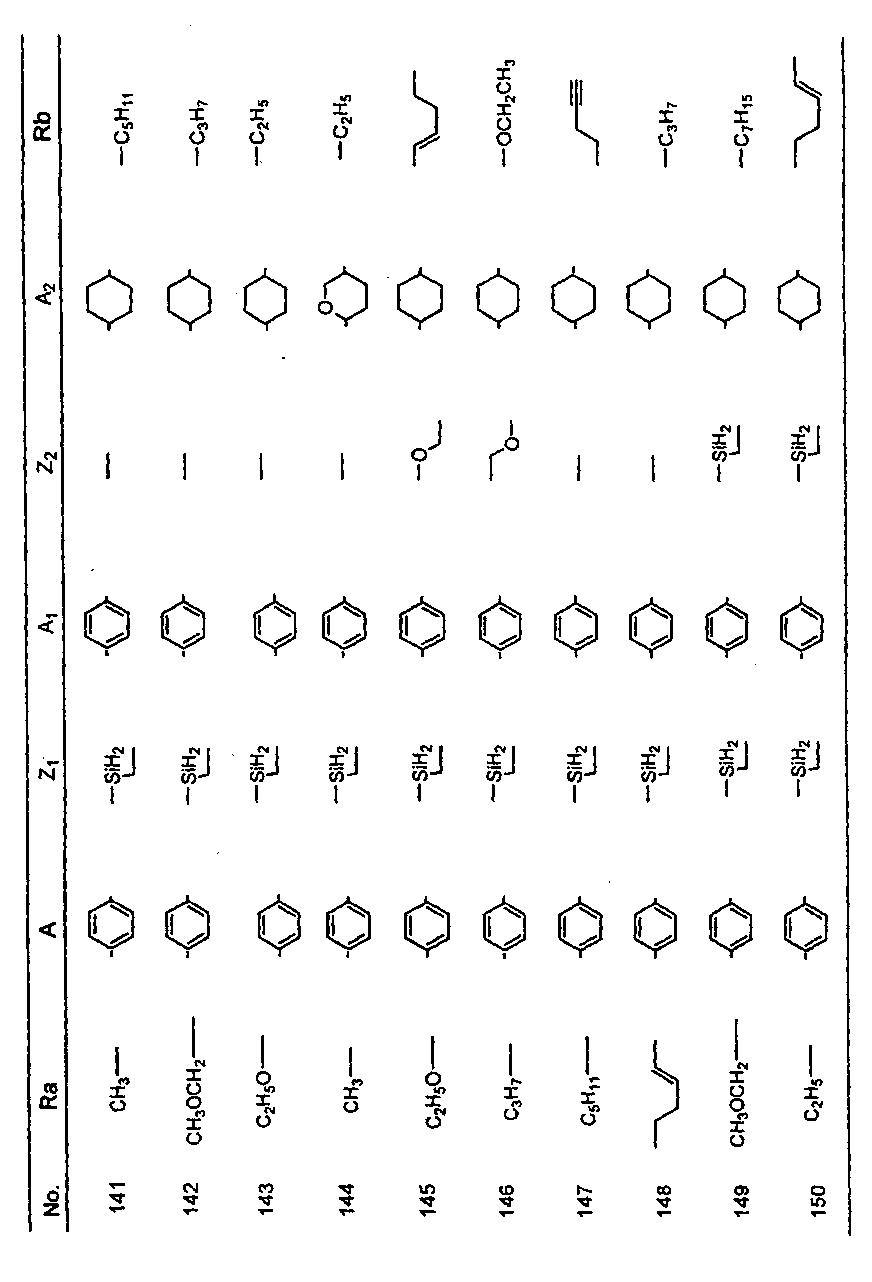

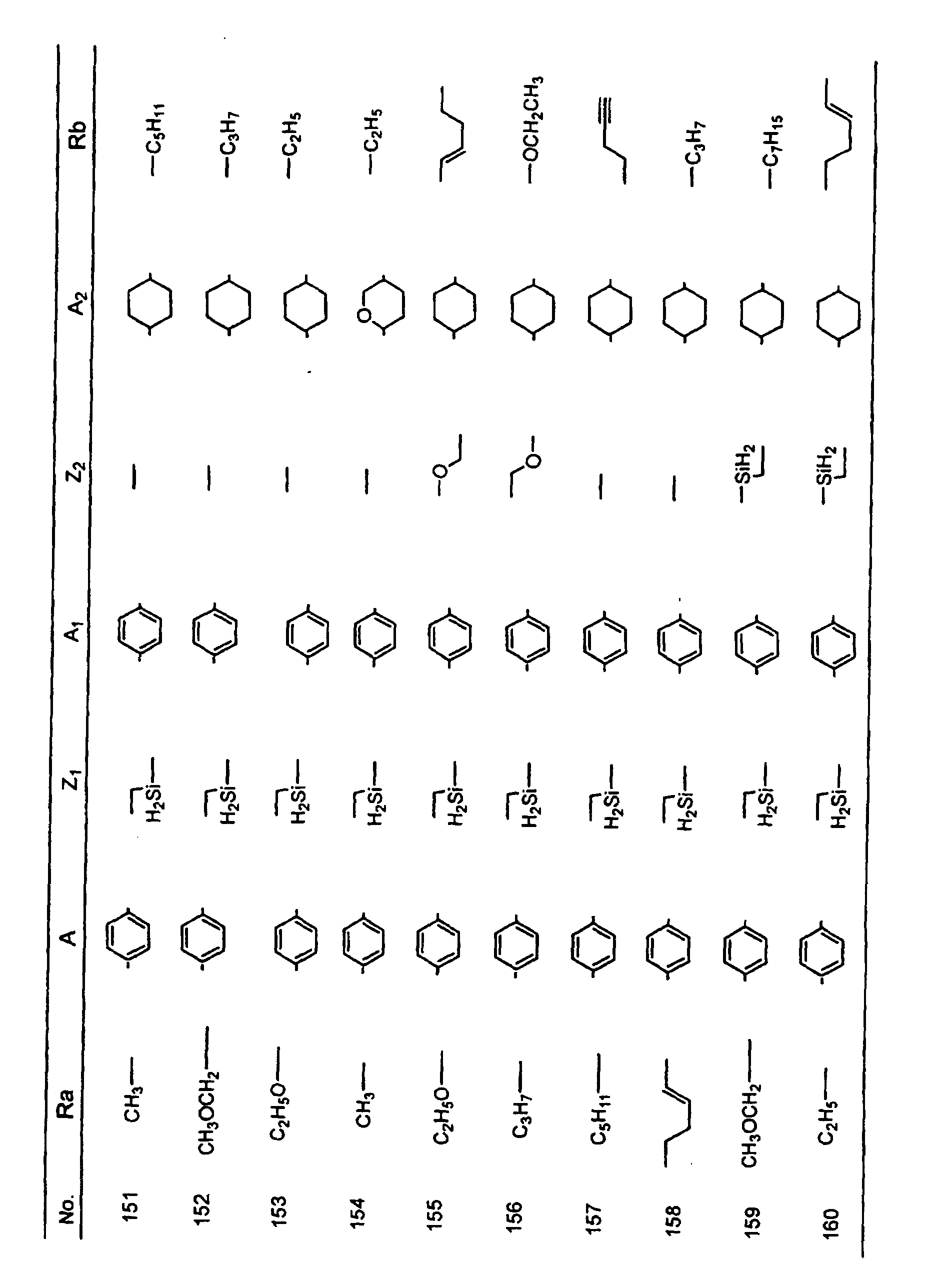

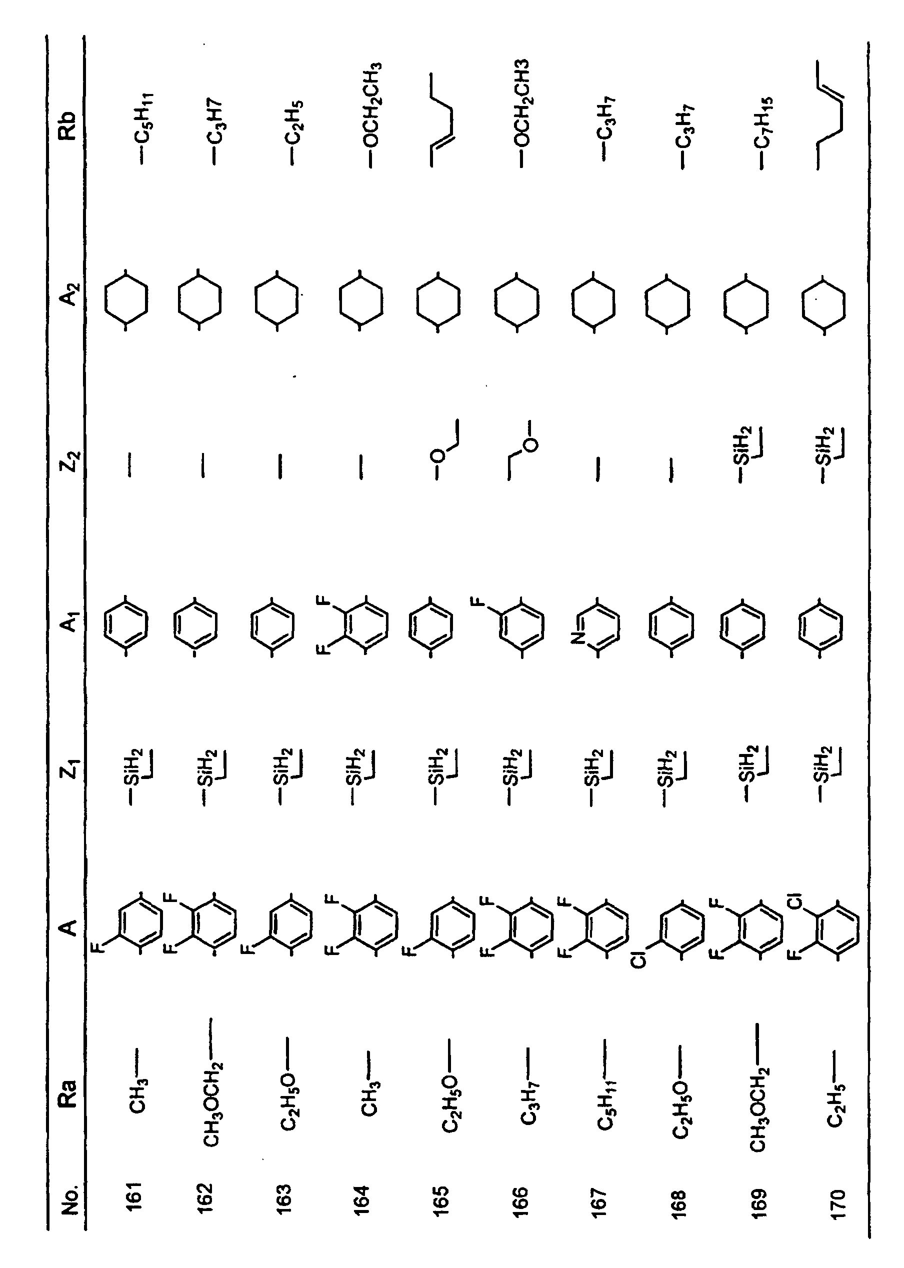

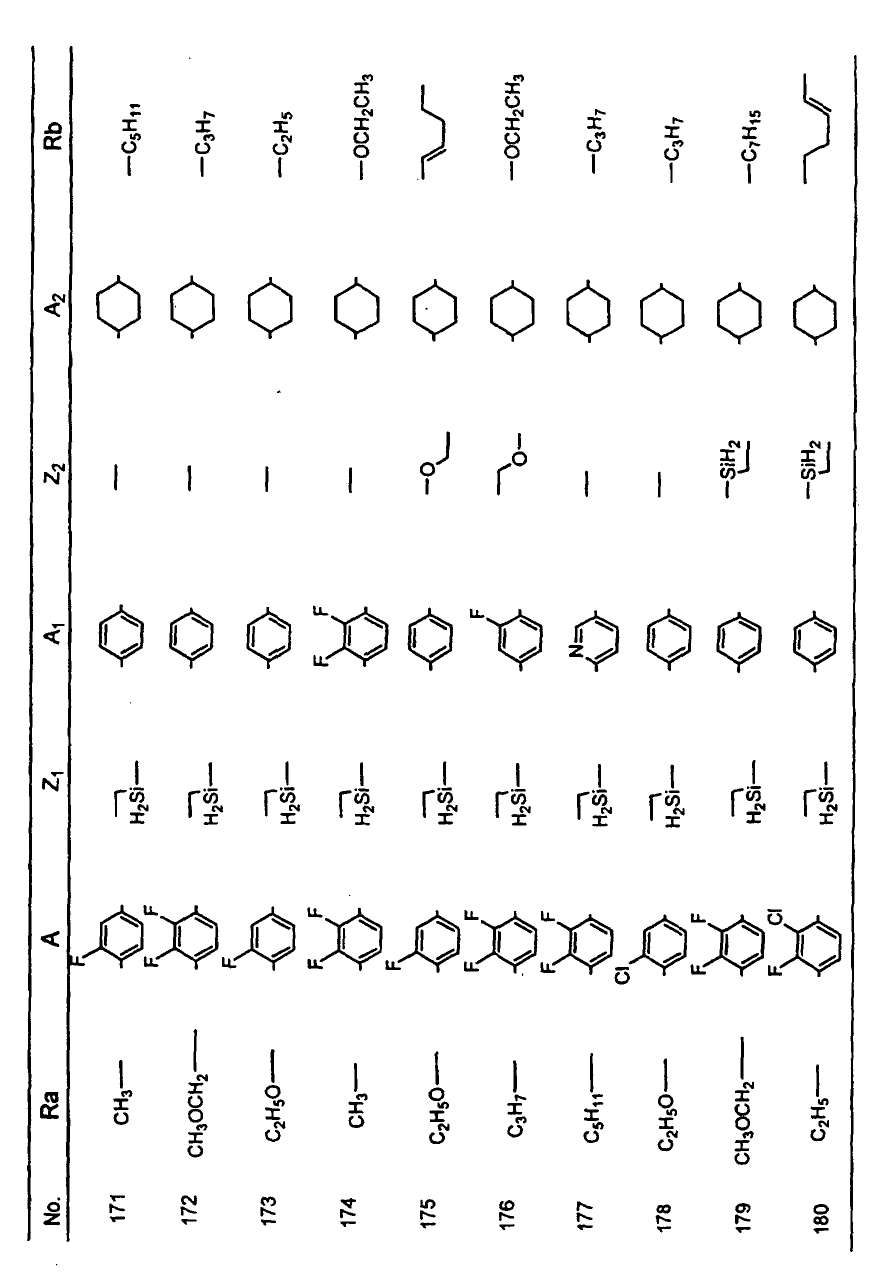

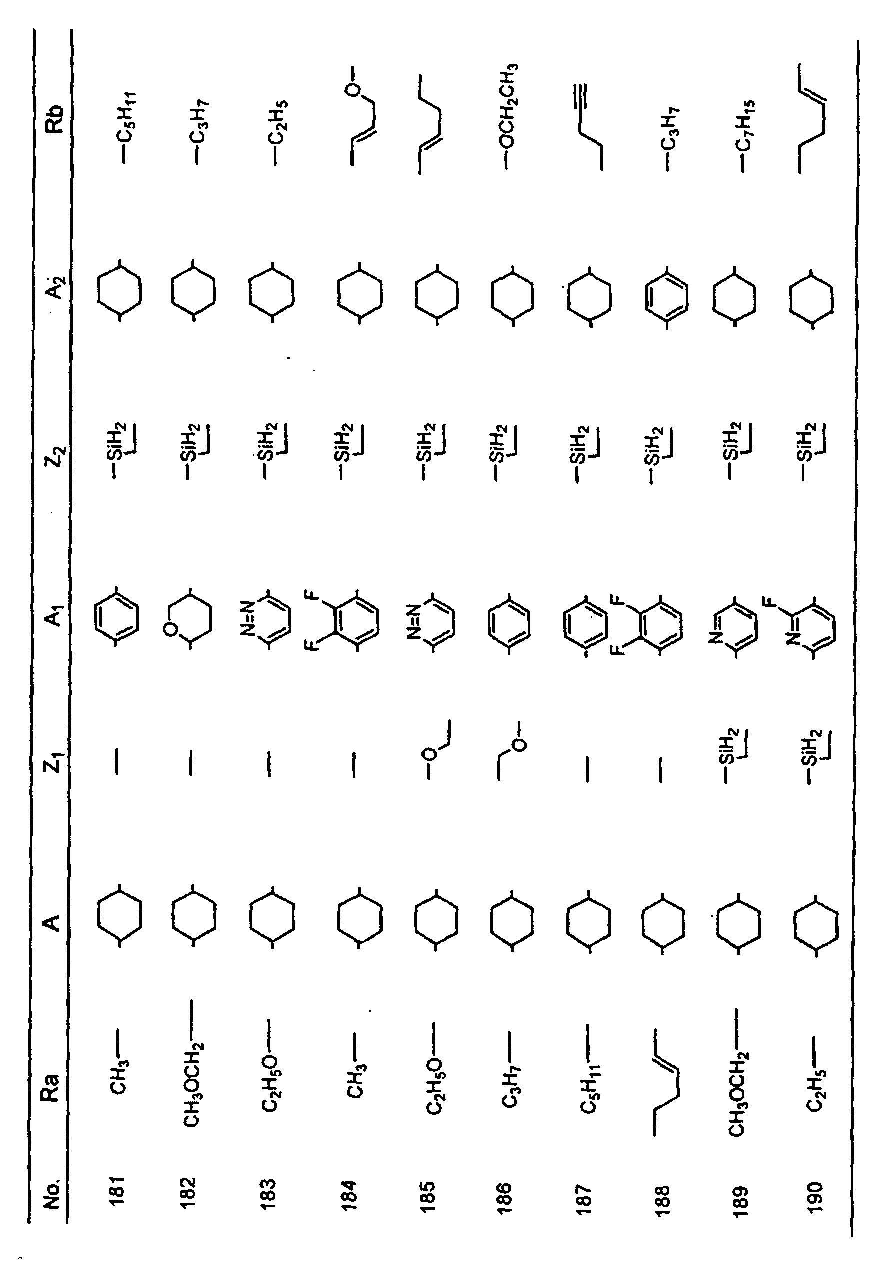

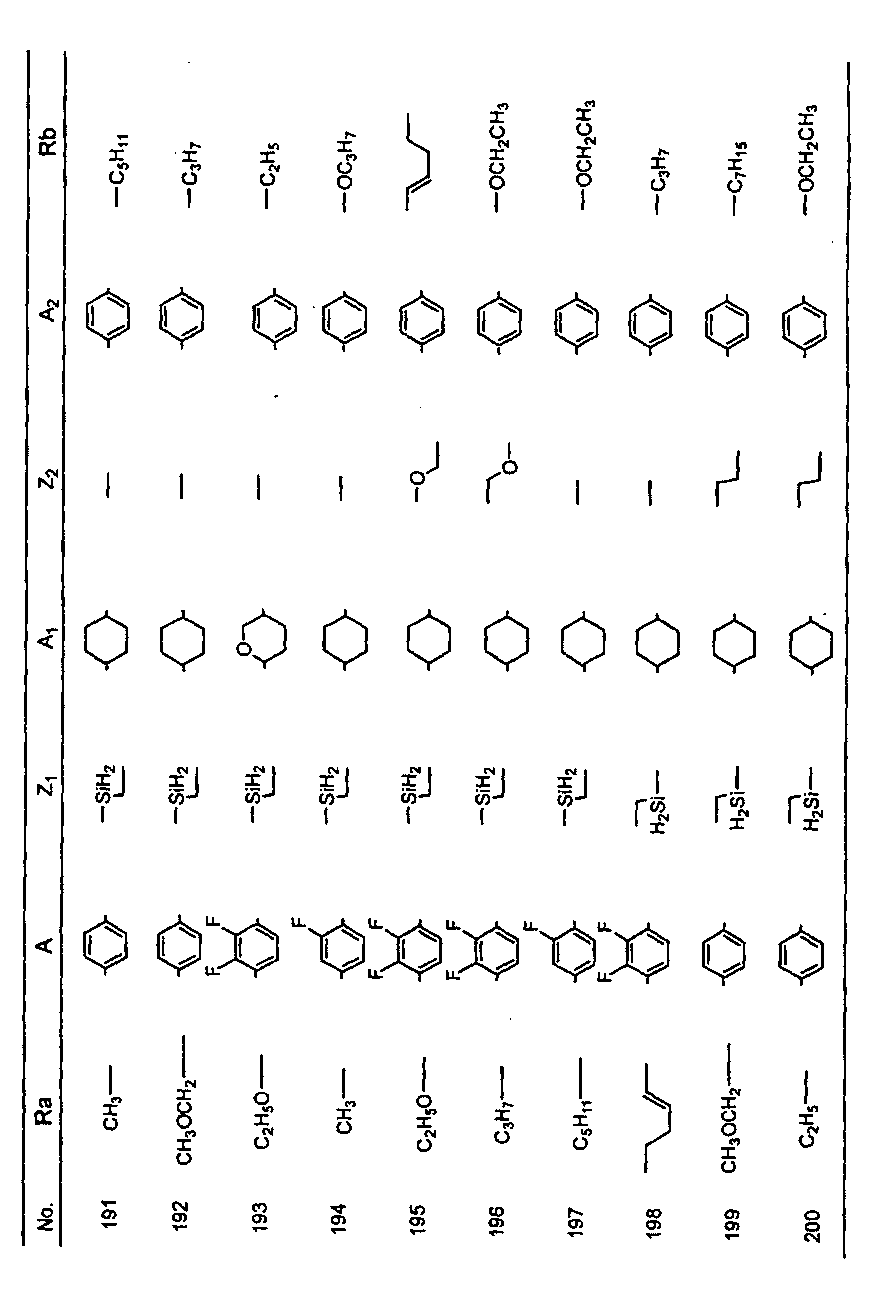

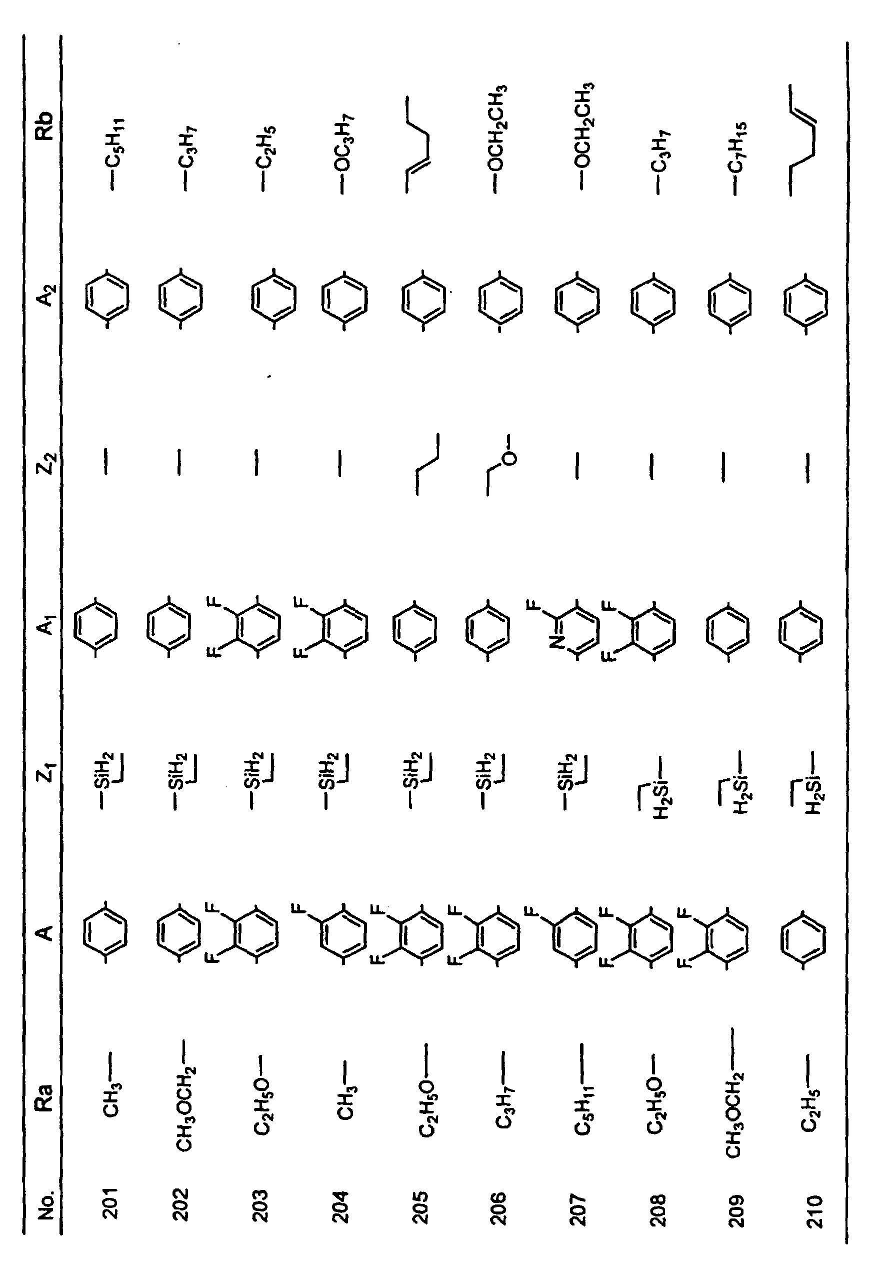

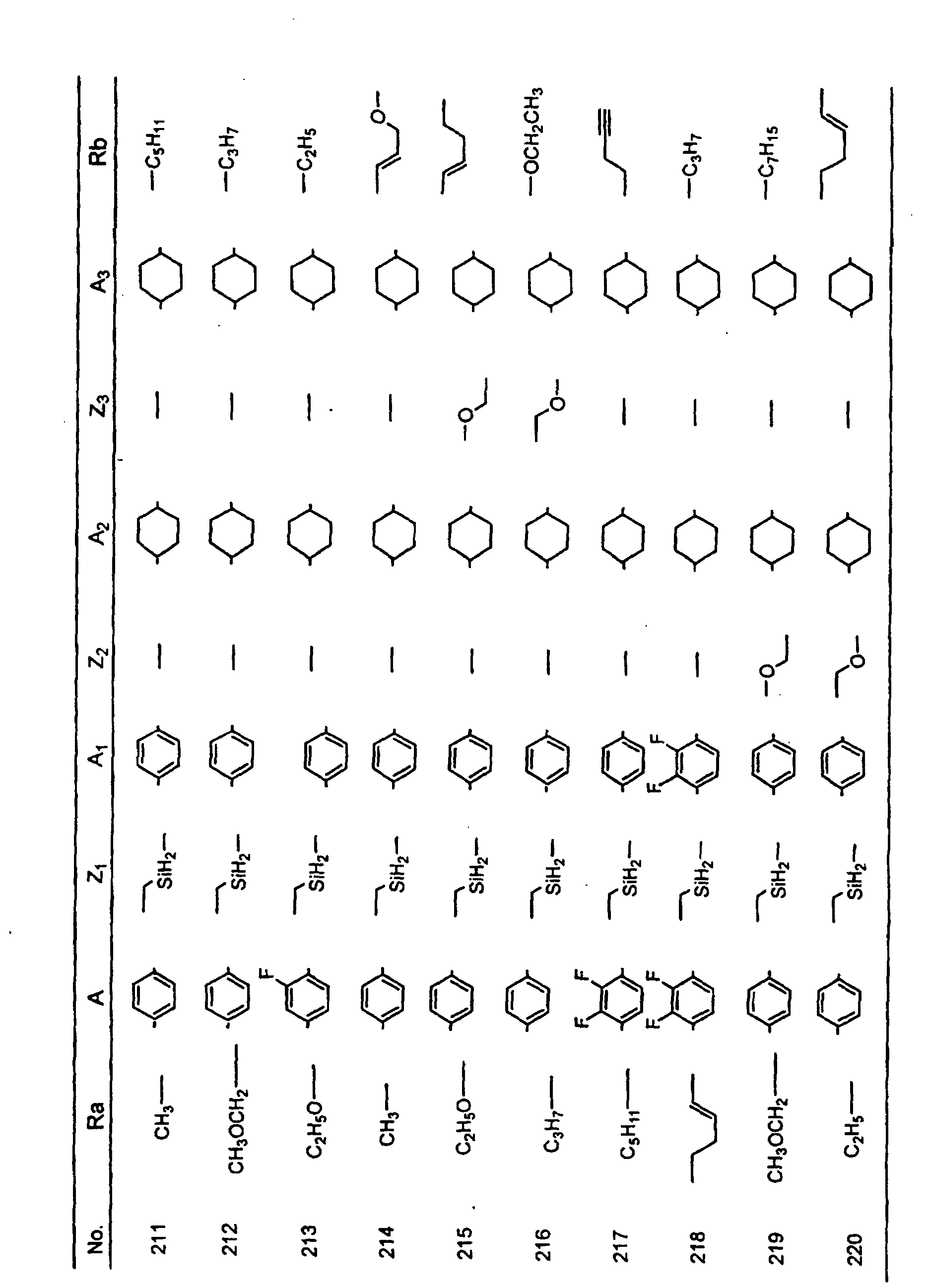

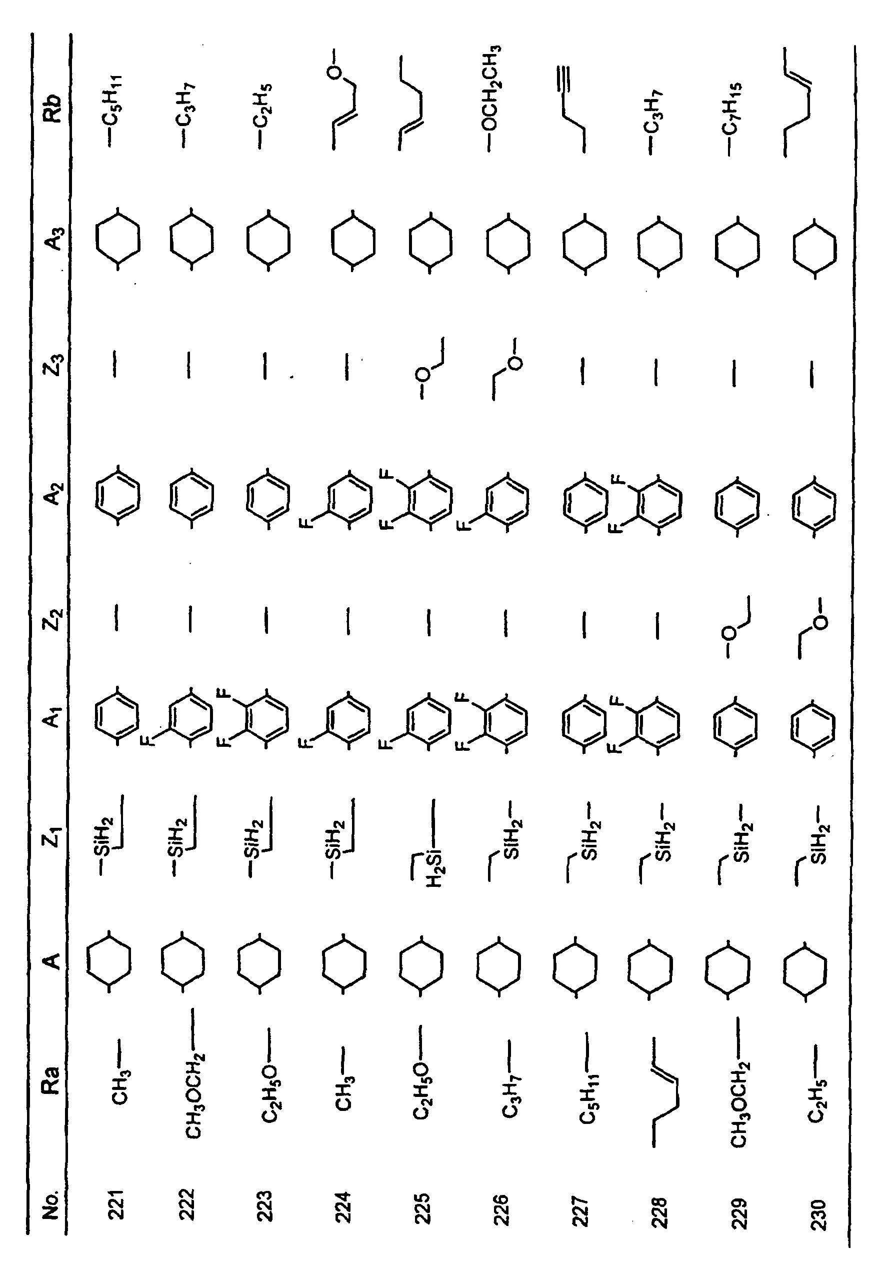

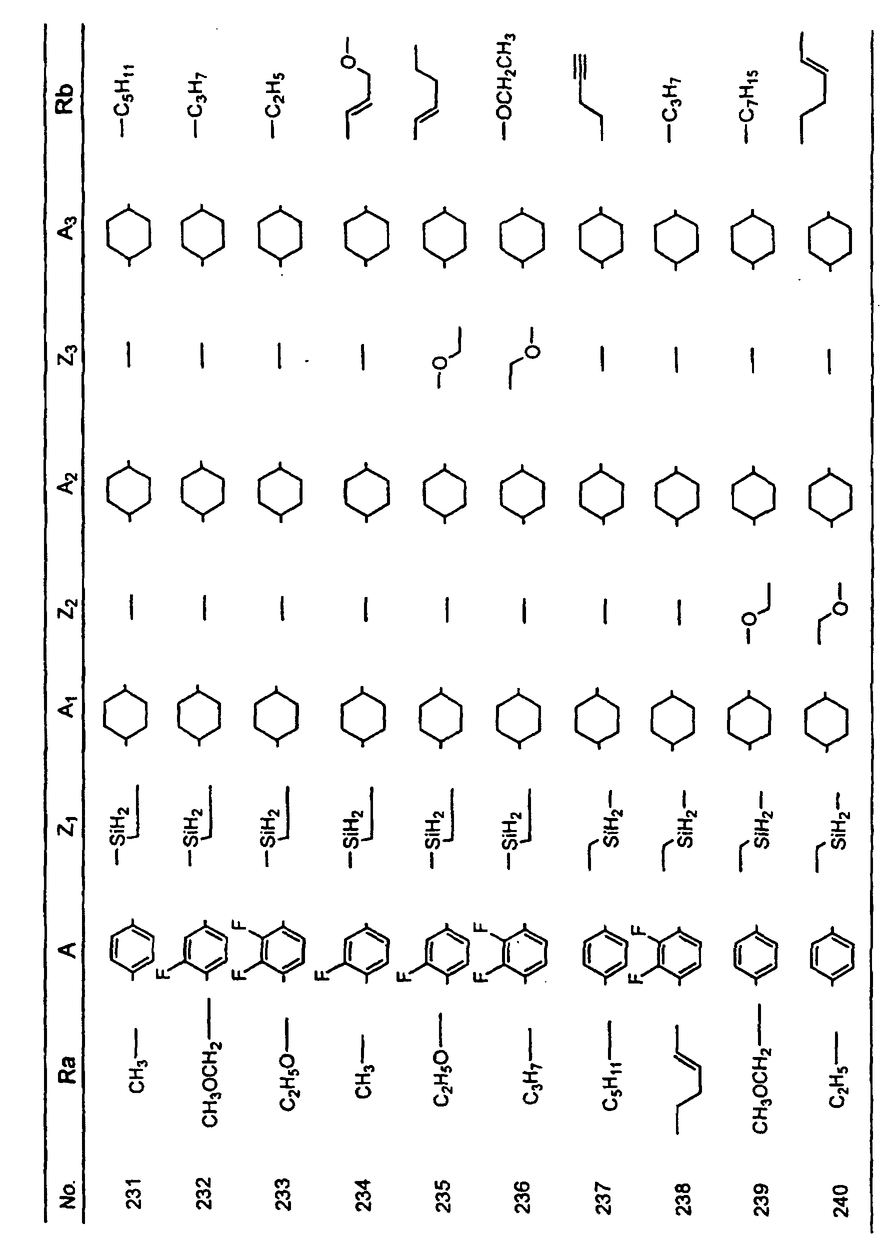

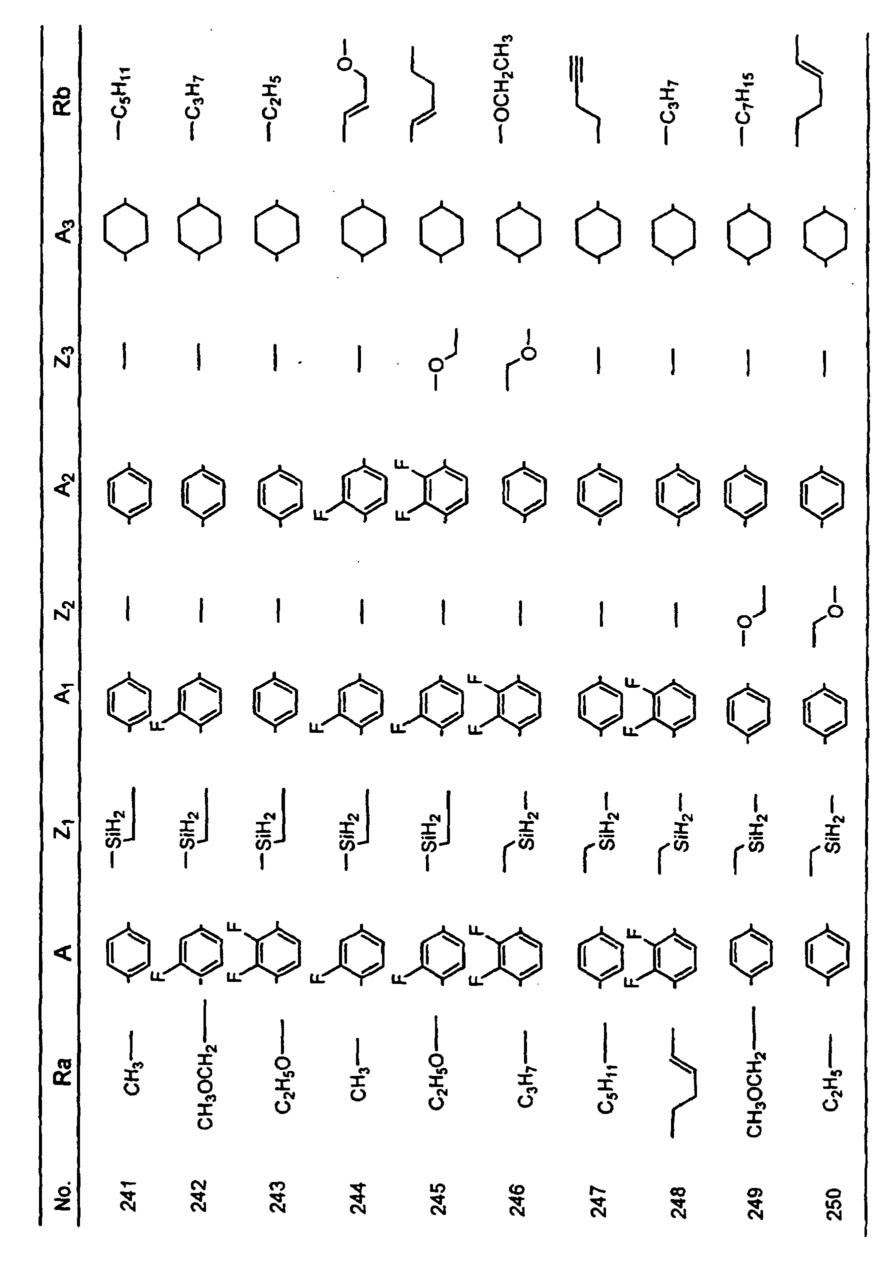

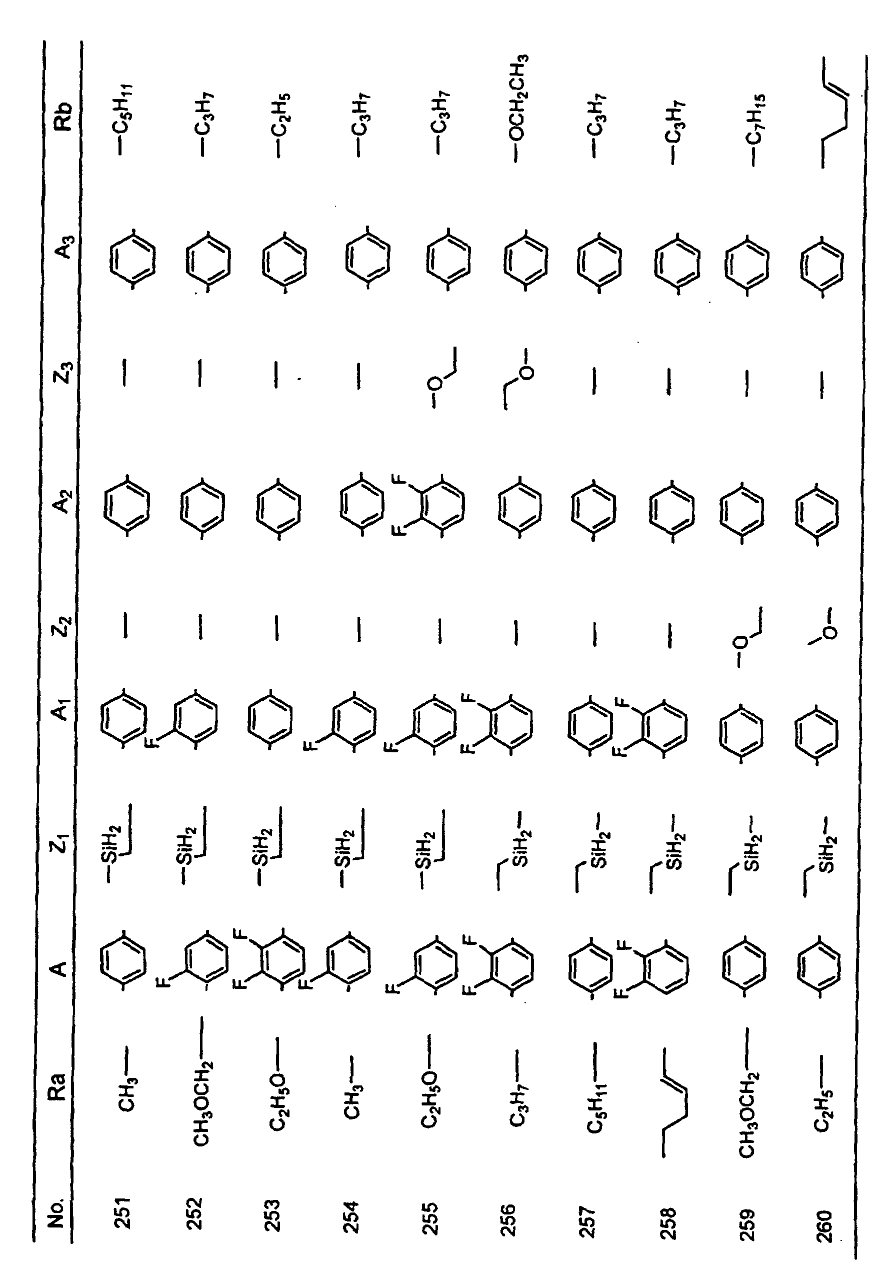

Examples of the liquid crystal composition of the present invention using the silicon compound of the present invention shall be shown. In the respective examples, NI shows a nematic phase-isotropic phase transition temperature (°C); Δ ***ε*** shows dielectric anisotropy; Δn shows birefringence; n shows viscosity (mPa·s) at 20°C; and V10 shows threshold voltage (V).

The compounds used as the components for the mixtures in the respective examples shall be shown by codes shown in Table 1.

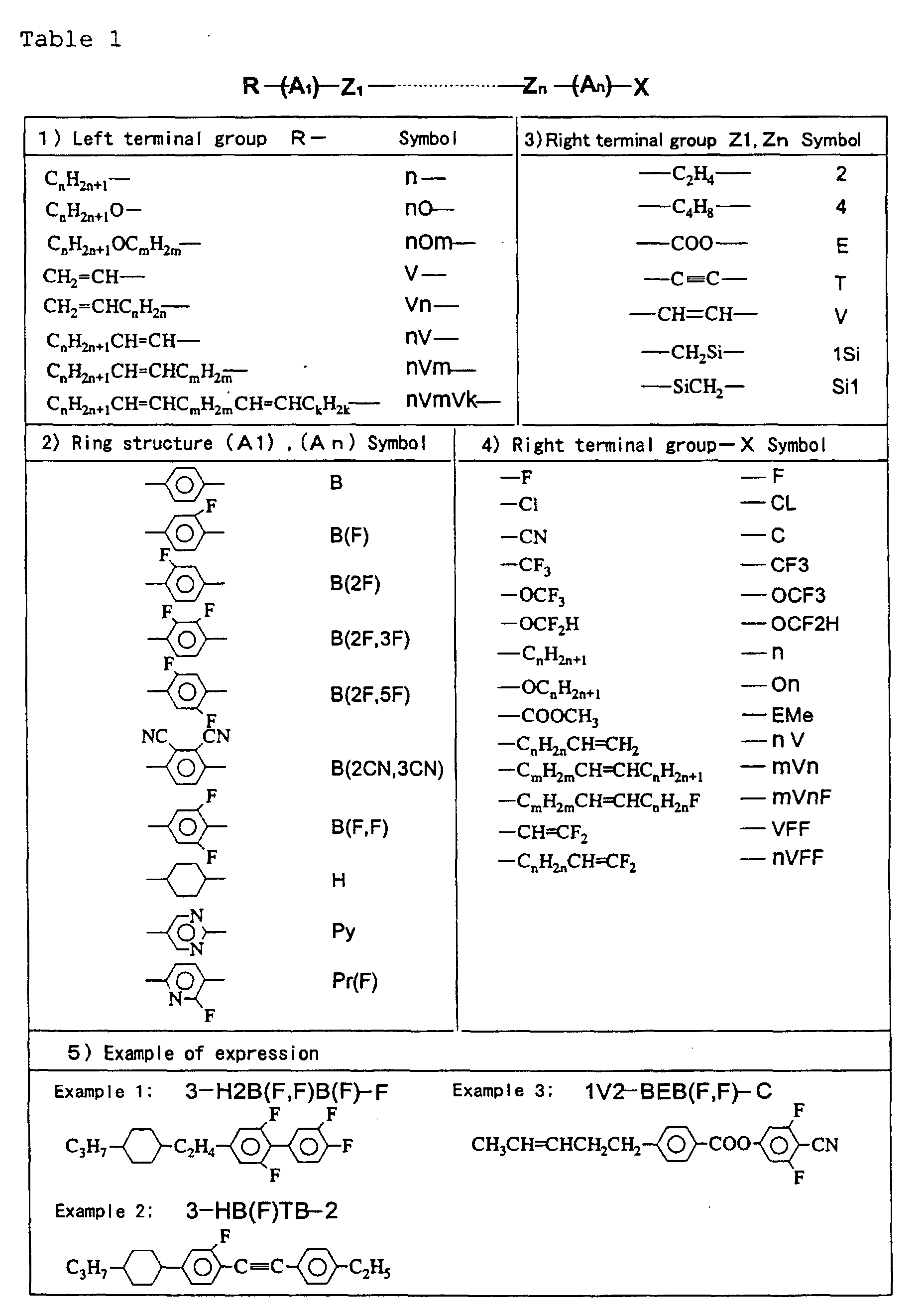

### Example 13

Prepared was a liquid crystal composition comprising:

| as a component A | |
|---|---|
| 3-HH1SiB(2F, 3F)-O2 | 7.0% |
| 5-HH1SiB(2F, 3F)-O2 | 7.0% |

| as a component B | |
|---|---|
| 3-HEB-O4 | 28.0% |
| 4-HEB-O2 | 20.0% |
| 5-HEB-O1 | 20.0% |
| 3-HEB-O2 | 18.0% |

The mixture described above had the following characteristics:
TNI = 77.8 (°C)
η = 20.2 (mPa·s)
Δn = 0.093

### Example 14

Prepared was a liquid crystal composition comprising:

| as a component A | |
|---|---|
| 3-HH1SiB(2F, 3 F)-O1 | 6.0% |
| 5-HH1SiB(2F, 3 F)-O1 | 4.0% |

| as a component D | |
|---|---|
| 3-HB(2F, 3 F)-O2 | 12.0% |
| 5-HB(2F, 3F)-O2 | 11.0% |
| 3-HHB(2F, 3 F)-O2 | 14.0% |
| 5-HHB(2F, 3 F)-O2 | 15.0% |
| 3-HHB(2F, 3F)-2 | 24.0% |

| as a component E | |
|---|---|
| 3-H H-2 | 5.0% |
| 3-HH-O3 | 5.0% |
| 5-HH-O1 | 4.0% |

The mixture described above had the following characteristics:
TNI = 83.6 (°C)
Δn = 0.087
Δ ε = -4.4

### Example 15

Prepared was a liquid crystal composition comprising:

| as a component A | |
|---|---|
| 3-H1SiB(2F, 3F)-O2 | 5.0% |
| 5-H1SiB(2F, 3F)-O2 | 5.0% |

| as a component D | |
|---|---|
| 3-HB(2F, 3F)-O2 | 10.0% |
| 5-HB(2F, 3F)-O2 | 10.0% |
| 3-HHB(2F, 3 F)-O2 | 12.0% |
| 5-HHB(2F, 3F)-O2 | 13.0% |
| 3-HHB(2F, 3 F)-2 | 4.0% |
| 3-HHB(2F, 3F)-2 | 4.0% |

| as a component E | |
|---|---|
| 3-HH-5 | 5.0% |
| 3-HH-O1 | 6.0% |
| 3-HH-O3 | 6.0% |
| 3-HB-O1 | 5.0% |
| 3-HHEH-3 | 5.0% |
| 3-HHEH-5 | 5.0% |
| 4-HHEH-3 | 5.0% |

The mixture described above had the following characteristics:
TNI = 77.0 (°C)
△n = 0.079
△ ε = -3.8

### Example 16

Prepared was a liquid crystal composition comprising:

| as a component A | |
|---|---|
| 5-B1SiB(2F, 3F)-O2 | 12.0% |

| as a component D | |
|---|---|
| 3-BB(2F, 3F)-O4 | 10.0% |
| 5-BB(2F, 3F)-O4 | 10.0% |
| 2-BB(2F,3F) B-3 | 25.0% |
| 3-BB(2F, 3F) B-5 | 13.0% |
| 5-BB(2F, 3F) B-5 | 14.0% |
| 5-BB(2F, 3F) B-7 | 16.0% |

### Example 17

Prepared was a liquid crystal composition comprising:

| as a component A | |
|---|---|
| 3-HH1SiB (2F, 3F)-1 | 10.0% |
| 3-HH1SiB(2F, 3F)-O2 | 10.0% |

| as a component D | |
|---|---|
| 3-BB(2F, 3F)-O2 | 10.0% |
| 5-BBB(2 F, 3 F)-7 | 9.0% |

| as a component E | |
|---|---|
| 5-BB-5 | 9.0% |
| 5-BB-O6 | 9.0% |
| 5-BB-O8 | 8.0% |
| 1-BEB-5 | 6.0% |
| 3-BEB-5 | 6.0% |
| 5-BEB-5 | 3.0% |
| 3-HEB-O2 | 20.0% |

The mixture described above had the following characteristics:
TNI = 69.7 (°C)
Δn = 0.140
Δ ε = -3.8

### Example 18

Prepared was a liquid crystal composition comprising:

| as a component A | |
|---|---|
| 3-H1SiB(2F, 3F)-O2 | 15.0% |
| 5-H1SiB(2F, 3 F)-O2 | 6.0% |
| V2-H1SiB(2F, 3F)-O2 | 7.0% |

| as a component D | |
|---|---|
| 3-HEB(2F, 3 F)-O2 | 9.0% |
| 4-HEB(2F, 3F)-O2 | 9.0% |
| 5-HEB(2F, 3F)-O2 | 9.0% |
| 3-BB(2F, 3F)B-3 | 7.0% |

| as a component E | |
|---|---|
| 2-BB2B-O2 | 6.0% |
| 3-BB2B-O2 | 6.0% |
| 5-BB2B-O1 | 6.0% |
| 5-BB2B-O2 | 6.0% |
| 3-B2BB(2F)-5 | 7.0% |
| 5-B (F)BB-O2 | 7.0% |

### Example 19

Prepared was a liquid crystal composition comprising:

| as a component A | |
|---|---|
| 5-HH1SiB(2F, 3F)-O2 | 9.0% |
| 3-HH1SiB(2F, 3F)-O1 | 9.0% |
| 5-HH1SiB(2F, 3F)-1 | 9.0% |

| as a component D | |
|---|---|
| 3-HHB(2F, 3F)-O2 | 6.0% |
| 5-HBB(2F, 3F)-O2 | 5.0% |

| as a component E | |
|---|---|
| 2-BTB-O1 | 5.0% |
| 1-BTB-O2 | 5.0% |
| 3-BTB(2F, 3F)-O2 | 13.0% |
| 5-BTB(2F, 3F)-O2 | 13.0% |
| 3-B(2F, 3F)TB(2F, 3F)-O4 | 4.0% |
| 5-B(2F, 3F)TB(2F, 3 F)-O4 | 4.0% |
| 3-HBTB-O1 | 5.0% |
| 3-HBTB-O2 | 5.0% |
| 3-HBTB-O3 | 5.0% |
| 5-BP r (F)-O2 | 3.0% |

The mixture described above had the following characteristics:
TNI = 99.2 (°C)
△n = 0.226

### Example 20

Prepared was a liquid crystal composition comprising:

| as a component A | |
|---|---|
| 3-H1SiB(2F, 3F)-O2 | 10.0% |
| as a component B | |
| 5-HB-3 | 8.0% |

| as a component D | |
|---|---|
| 5-BB(2F, 3F)-O2 | 10.0% |
| 3-HB(2F, 3F)-O2 | 10.0% |
| 5-HB(2F, 3F)-O2 | 8.0% |
| 3-HHB(2F, 3F)-O2 | 12.0% |
| 5-HHB(2F, 3F)-O2 | 4.0% |
| 5-HHB(2F, 3F)-1O1 | 4.0% |
| 2-HHB(2F, 3F)-1 | 5.0% |
| 3-HHB(2F, 3F)-1 | 5.0% |
| 3-BB(2F, 3F)B-3 | 8.0% |
| 5-B2BB(2F, 3F)-O2 | 10.0% |

| as a component E | |
|---|---|
| 3-HBB-2 | 6.0% |

The mixture described above had the following characteristics:
TNI = 65.6 (°C)
△n = 0.128
△ ε = -4.5

### Example 21

Prepared was a liquid crystal composition comprising:

| as a component A | |
|---|---|
| 3-HH1SiB(2F,3F)-1 | 5.0% |
| 5-HH1SiB (2F,3F)-O1 | 9.0% |

| as a component B | |
|---|---|
| 3-HB-O2 | 20.0% |
| 4-HEB-O2 | 7.0% |
| 5-HEB-O1 | 8.0% |
| 3-HHB-1 | 6.0% |
| 3-HHB-3 | 6.0% |

| as a component E | |
|---|---|
| 101-HH-3 | 6.0% |
| 3-HH-EMe | 12.0% |

| as other components | |
|---|---|
| 4-HEB(2CN, 3CN)-O4 | 3 0% |
| 6-HEB(2CN, 3CN)-O4 | 3.0% |
| 3-HEB (2CN, 3CN)-O5 | 4.0% |
| 4-HEB (2CN, 3CN)-O5 | 3.0% |
| 5-HEB (2CN, 3CN)-O5 | 2.0% |
| 2-HBEB(2CN,3CN)-O2 | 2.0% |
| 4-HBEB(2CN, 3CN)-O4 | 4.0% |

The mixture described above had the following characteristics:
TNI = 61.2 (°C)
*η* = 41.5 (mPa·s)
Δn = 0.080
Δ ε = -6.2

### Example 22

Prepared was a liquid crystal composition comprising:

| as a component A | |
|---|---|
| 3-H1SiB(2F,3F)-O2 | 10.0% |

| as a component C | |
|---|---|
| 1V2-BEB(F, F)-C | 5.0% |
| 3-HB-C | 20.0% |
| V2-HB-C | 6.0% |
| 3-HHB-C | 3.0% |

| as a component E | |
|---|---|
| 1-BTB-3 | 5.0% |
| 1O1-HH-3 | 3.0% |
| 3-HH-4 | 11.0% |
| 3-HHB-1 | 11.0% |
| 3-HHB-3 | 3.0% |
| 3-H2BTB-2 | 4.0% |
| 3-H2BTB-3 | 4.0% |
| 3-H2BTB-4 | 4.0% |
| 3-HB (F) TB-2 | 6.0% |
| 3-HB(F)TB-3 | 5.0% |

The mixture described above had the following characteristics:
TNI = 83.8 (°C)
η = 18.0 (mPa·s)
Δn = 0.145
Δ ε = 6.4
Vth = 2.41 (V)

### Example 23

Added to 100 parts by weight of the liquid crystal composition prepared in Example 9 described above was:

| | |
|---|---|
| CM33 | 0.8 part |

to prepare a liquid crystal composition (e). This had the following characteristic:
P = 11.2 *µ* m

### Example 24

Prepared was a liquid crystal composition comprising:

| as a component A | |
|---|---|
| 5-H1SiB(2F,3F)-O1 | 10.0% |
| V2-H1SiB(2F,3F)-O2 | 10.0% |

| as a component B | |
|---|---|
| 3-HB-C | 10.0% |
| 5-HB-C | 7.0% |
| 5-BB-C | 3.0% |
| 2-BTB-1 | 10.0% |
| 2-BTB-O1 | 5.0% |

| as a component E | |
|---|---|
| 3-H H-4 | 5.0% |
| 3-HHB-1 | 10.0% |
| 3-HHB-3 | 11.0% |
| 3-H2BTB-2 | 3.0% |
| 3-H2BTB-3 | 3.0% |
| 3-HB (F) TB-2 | 3.0% |
| 5-BTB (F) TB-3 | 10. 0% |

### Example 25

Prepared was a liquid crystal composition comprising:

| as a component A | |
|---|---|
| 3-HH1SiB(2F,3F)-O2 | 8.0% |
| 5-HH1SiB(2F,3F)-O2 | 11.0% |

| as a component C | |
|---|---|
| 1V2-BEB(F,F)-C | 6.0% |
| 3-H B-C | 18.0% |

| as a component E | |
|---|---|
| 2-BTB-1 | 10.0% |
| 5―HH―VFF | 30.0% |
| 3-H2BTB-2 | 5.0% |
| 3-H2BTB-3 | 4.0% |
| 3-H2BTB-4 | 4.0% |
| 3-HHB-1 | 4.0% |

The mixture described above had the following characteristics:
TNI = 72.1 (°C)
η = 13.7 (mPa·s)
Δn = 0.130
Δ ε = 4.5
Vth = 2.35 (V)

### Example 26

Prepared was a liquid crystal composition comprising:

| as a component A | |
|---|---|
| 5-HH1SiB(2F,3F)-O1 | 4.0% |

| as a component B | |
|---|---|
| 3-HB-CL | 10.0% |
| 5-HB-CL | 4.0% |
| 7-HB-CL | 4.0% |
| 2-HBB (F) -F | 8.0% |
| 3-HBB(F)-F | 8.0% |
| 5-HBB (F) -F | 14.0% |
| 4-HHB-CL | 8.0% |
| 5-HHB-CL | 8.0% |
| 3-H2HB(F)-CL | 4.0% |
| 3-HBB(F, F) -F | 10.0% |
| 5-H2BB(F,F)-F | 9.0% |

| as a component E | |
|---|---|
| 101-HH-5 | 5.0% |
| 3-H2BTB-2 | 4.0% |

The mixture described above had the following characteristics:
TNI = 87.7 (°C)
η = 19.9 (mPa·s)
Δn = 0.123
Δ ε = 4.5
Vth = 2.60 (V)

### Example 27

Prepared was a liquid crystal composition comprising:

| as a component A | |
|---|---|
| 3-HH1SiB(2F, 3F)-1 | 5.0% |
| 5-HH1SiB(2F, 3F)-1 | 5.0% |

| as a component B | |
|---|---|
| 2-HHB(F) -F | 2.0% |
| 3-HHB(F)-F | 2.0% |
| 5-HHB(F)-F | 2.0% |
| 2-HBB(F) -F | 6.0% |
| 3-HBB(F)-F | 6.0% |
| 2-H2BB(F) -F | 9.0% |
| 3-H2BB(F)-F | 9.0% |
| 3-HBB(F, F) -F | 25.0% |
| 5-HBB(F,F)-F | 19.0% |

| as a component E | |
|---|---|
| 101-HBBH-4 | 5.0% |
| 101-HBBH-5 | 5.0% |

The mixture described above had the following characteristics:
TNI = 92.5 (°C)
η = 33.8 (mPa·s)
Δn = 0.131
Δ ε = 6.2
Vth = 2.65 (V)

### Example 28

Added to 100 parts by weight of the liquid crystal composition prepared in Example 27 described above was:

| | |
|---|---|
| CM43L | 0.2 part |

to prepare a liquid crystal composition (e). This had the following characteristic:
P = 78.3 µm.

### Industrial Applicability

The present invention provides a liquid crystal compound comprising a novel dihydrosilicon compound, which is excellent in compatibility with other liquid crystal materials and which has low viscosity and a low threshold voltage.

Further, the present invention provides a novel liquid crystal composition comprising this liquid crystal compound as a component, which is provided with desired physical properties by suitably selecting the rings, the substituents and the bonding groups each constituting the compound and which has the characteristics described above. In addition thereto, it provides a liquid crystal display constituted using this liquid crystal composition.

## Claims

1. A silicon compound represented by Formula (1): 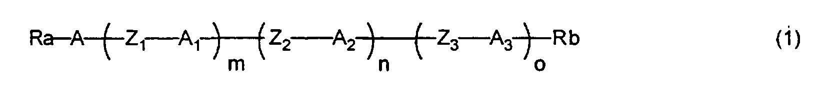 wherein A, A₁, A₂ and A₃ each represent independently 1,4-cyclohexylene, 1,4-cyclohexenylene or 1,4-phenylene, in which at least one -CH₂- which does not continue in these rings may be substituted with -O- and at least one -CH= may be substituted with -N= and in which at least one hydrogen in these rings may be substituted with halogen; Z₁, Z₂ and Z₃ each represent independently a single bond, -(CH₂)₂-, -CH₂O-, -OCH₂-, -SiH₂CH₂- or -CH₂SiH₂-, and at least one of them is-SiH₂CH₂- or -CH₂SiH₂-; m, n and o each represent independently 0 or 1, and m + n + o≧1; and Ra and Rb each represent independently an alkyl group having 1 to 20 carbon atoms or hydrogen, and at least one -CH2- in the above alkyl group each may be substituted independently with -O-, -CH=CH- or -C ≡C-, but -O- does not continue.

2. The silicon compound as described in claim 1, wherein m is 1, and both n and o are 0.

3. The silicon compound as described in claim 1, wherein both m and n are 1, and o is 0.

4. The silicon compound as described in claim 1, wherein all of m, n and o are 1.

5. The silicon compound as described in claim 1, wherein Ra and Rb each represent independently an alkyl group having 1 to 20 carbon atoms or an alkoxy group having 1 to 19 carbon atoms.

6. The silicon compound as described in claim 1, wherein at least one of A, A₁, A₂ and A₃ is 1,4-phenylene substituted with 1 to 4 halogens.

7. The silicon compound as described in claim 6, wherein the halogen described above is fluorine.

8. The silicon compound as described in claim 6, wherein Ra and Rb each represent independently an alkyl group having 1 to 20 carbon atoms or an alkoxy group having 1 to 19 carbon atoms.

9. A silicon compound represented by Formula (1-a): 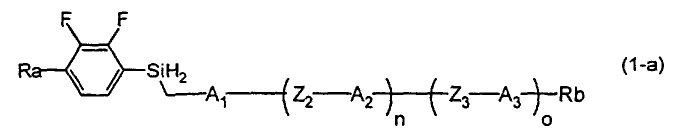 wherein Ra, Z₂, Z₃, A₁, A₂, A₃, n, o and Rb are the same as above.

10. A silicon compound represented by Formula (1-b): 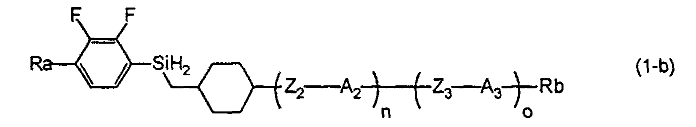 wherein Ra, Z₂, Z₃, A₂, A₃, n, o and Rb are the same as above.

11. A liquid crystal composition comprising at least one of the silicon compound as described in any of claims 1 to 10.

12. The liquid crystal composition (a) as described in claim 11, comprising a component B comprising at least one compound selected from the group of compounds represented by Formulas (2), (3) and (4): 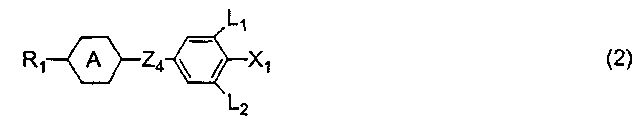 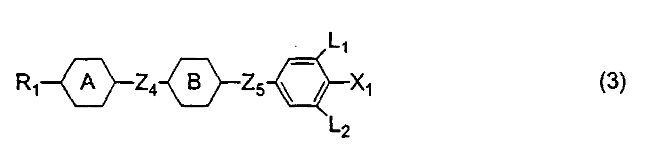 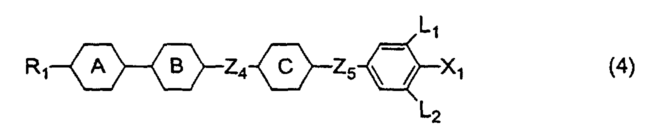 wherein R₁ represents an alkyl group having 1 to 10 carbon atoms, in which at least one -CH₂- in this group may be substituted with -O- or -CH=CH-, but -O- is not adjacent and in which at least one hydrogen in this group may be substituted with fluorine; X₁ represents fluorine, chlorine, -OCF₃, -OCF₂H, -CF₃, -CF₂H, -CFH₂, -OCF₂CF₂H or -OCF₂CFHCF₃; L₁ and L₂ each represent independently hydrogen or fluorine; Z₄ and Z₅ each represent independently -(CH₂)₂-, -(CH₂)₄-, -COO-, -CF₂O-, -OCF₂-, -CH=CH- or a single bond; a ring A and a ring B each represent independently 1,4-cyclohexylene, 1,3-dioxane-2,5-diyl, 1,4-phenylene or 1,4-phenylene substituted with 1 to 4 fluorines; and a ring C represents 1,4-cyclohexylene, 1,4-phenylene or 1,4-phenylene substituted with 1 to 4 fluorines.

13. The liquid crystal composition (b) as described in claim 11, comprising a component C comprising at least one compound selected from the group of compounds represented by Formulas (5) and (6): 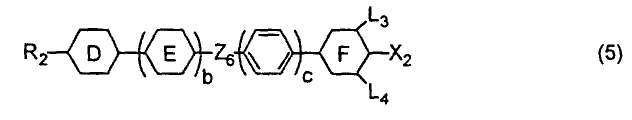 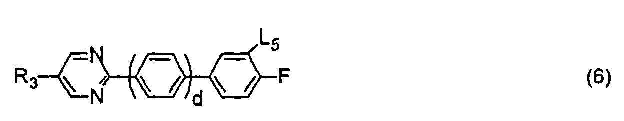 wherein R₂ and R₃ each represent independently an alkyl group having 1 to 10 carbon atoms, in which at least one -CH₂- in this group may be substituted with -O- or -CH=CH-, but -O- is not adjacent and in which at least one hydrogen in this group may be substituted with fluorine; X₂ represents -CN or -C ≡ C-CN; a ring D represents 1,4-cyclohexylene, 1,4-phenylene, 1,3-dioxane-2,5-diyl or pyrimidine-2,5-diyl; a ring E represents 1,4-cyclohexylene, pyrimidine-2,5-diyl, 1,4-phenylene or 1,4-phenylene substituted with 1 to 4 fluorines; a ring F represents 1,4-cyclohexylene or 1,4-phenylene; Z₆ represents -(CH₂)₂-, -COO-, -CF₂O-, -OCF₂- or a single bond; L₃, L₄ and L₅ each represent independently hydrogen or fluorine; and b, c and d each represent independently 0 or 1.

14. The liquid crystal composition (c) as described in claim 11, comprising a component D comprising at least one compound selected from the group of compounds represented by Formulas (7), (8) and (9): 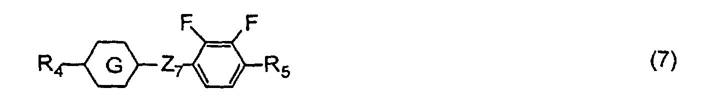 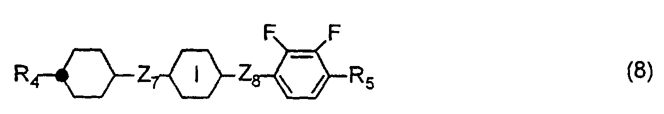 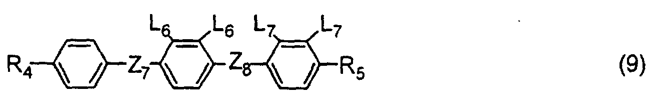 wherein R₄ and R₅ each represent independently an alkyl group having 1 to 10 carbon atoms, in which at least one -CH₂- in this group may be substituted with -O- or -CH=CH-, but -O- is not adjacent and in which at least one hydrogen in this group may be substituted with fluorine; a ring G and a ring I each represent independently 1,4-cyclohexylene or 1,4-phenylene; L₆ and L₇ each represent independently hydrogen or fluorine, but L₆ and L₇ are not hydrogens at the same time; and Z₇ and Z₈ each represent independently -(CH₂)₂-, -COO- or a single bond.

15. The liquid crystal composition (al) as described in claim 12, comprising a component E comprising at least one compound selected from the group of compounds represented by Formulas (10), (11) and (12): 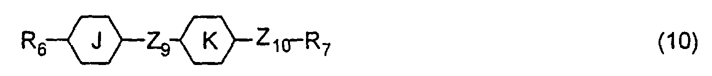 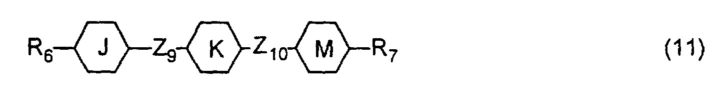 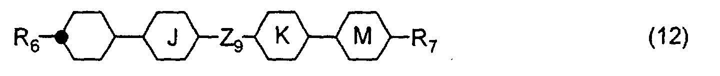 wherein R₆ and R₇ each represent independently an alkyl group having 1 to 10 carbon atoms, in which at least one -CH₂- in this group may be substituted with -O- or -CH=CH-, but -O- is not adjacent and in which at least one hydrogen in this group may be substituted with fluorine; rings J, K and M each represent independently 1,4-cyclohexylene, pyrimidine-2,5-diyl 1,4-phenylene or 1,4-phenylene substituted with 1 to 4 fluorines; and Z₉ and Z₁₀ each represent independently -C≡C-, -COO-, -(CH₂)₂-, -CH=CH- or a single bond.

16. The liquid crystal composition (b1) as described in claim 13, comprising the component E comprising at least one compound selected from the group of the compounds represented by Formulas (10), (11) and (12).

17. The liquid crystal composition (c1) as described in claim 14, comprising the component E comprising at least one compound selected from the group of the compounds represented by Formulas (10), (11) and (12).

18. The liquid crystal composition (d) as described in claim 12, comprising the component C comprising at least one compound selected from the group of the compounds represented by Formulas (5) and (6) and the component E comprising at least one compound selected from the group of the compounds represented by Formulas (10), (11) and (12).

19. The liquid crystal composition (e) as described in any of claims 11 to 18, comprising at least one optically active compound.

20. A liquid crystal display using the liquid crystal composition as described in any of claims 11 to 19.
